(19) Europäisches Patentamt
European Patent Office
Office européen des brevets

(11) EP 3 504 293 B1

(12) **EUROPEAN PATENT SPECIFICATION**

(45) Date of publication and mention of the grant of the patent:
**13.05.2020 Bulletin 2020/20**

(21) Application number: **17755182.7**

(22) Date of filing: **22.08.2017**

(51) Int Cl.:
***C09K 19/30*** (2006.01) ***C09K 19/18*** (2006.01)
***C09K 19/16*** (2006.01) ***C09K 19/04*** (2006.01)

(86) International application number:
**PCT/EP2017/071074**

(87) International publication number:
**WO 2018/036985 (01.03.2018 Gazette 2018/09)**

(54) **LIQUID-CRYSTALLINE MEDIUM**

FLÜSSIGKRISTALLINES MEDIUM

MILIEU CRISTALLIN LIQUIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.08.2016 EP 16185693**

(43) Date of publication of application:
**03.07.2019 Bulletin 2019/27**

(73) Proprietor: **Merck Patent GmbH**
**64293 Darmstadt (DE)**

(72) Inventors:
- **WITTEK, Michael**
**64390 ERZHAUSEN (DE)**
- **SEEGER, Renate**
**64560 Riedstadt (DE)**

(56) References cited:
**WO-A1-2013/017197** **WO-A1-2013/034227**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 504 293 B1

## Description

The present invention relates to liquid-crystalline media, in particular for high-frequency technology, especially components for high-frequency devices, in particular antennas, especially for the gigahertz region and the terahertz region, which are operated in the microwave or millimetre wave region. These components use particular liquid-crystalline single compounds or liquid-crystalline media composed thereof for, e.g., the phase shifting of microwaves for tunable phased-array antennas or for tunable cells of microwave antennas based on "reflectarrays".

Liquid-crystalline media have long been utilised in electro-optical displays (liquid crystal displays - LCDs) in order to display information.

Compounds of the formula

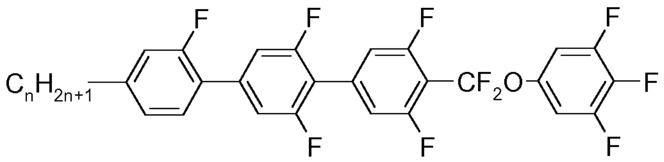

,

for example, are proposed for liquid crystalline media in WO 2010/058681 A1. In WO 2013/017197 A1 similar compounds having a terminal cyano group of the following structure:

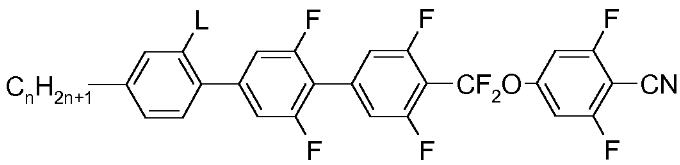

wherein L denotes H or F,
are proposed as component in liquid crystal mixtures exhibiting a blue phase.

Liquid-crystalline media have recently also been proposed for use in components for microwave technology, as described, for example, in DE 10 2004 029 429 A and in JP 2005-120208 (A). In WO 2015/024635 A1, tolane derivatives of the formula

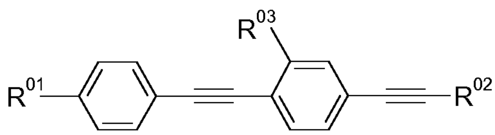

,

wherein $R^{01}$, $R^{02}$ and $R^{03}$ denote alkyl, are disclosed as component in liquid crystal mixtures for microwave applications.

Structurally related phenylethynyltolane derivatives, also known as bistolanes, having an additional alkyl substituent on the central phenylene ring are known to the person skilled in the art. For example, Wu, S.-T., Hsu, C.-S. and Shyu, K.-F., Appl. Phys. Lett., 74 (3), (1999), pages 344 - 346, discloses various liquid-crystalline bistolane compounds containing a lateral methyl group, of the formula

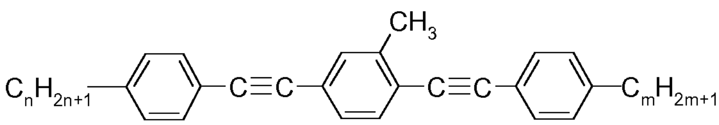

.

Besides liquid-crystalline bistolane compounds of this type containing a lateral methyl group, Hsu, C. S., Shyu, K. F., Chuang, Y. Y. and Wu, S.-T., Liq. Cryst., 27 (2), (2000), pages 283 - 287, also discloses corresponding compounds containing a lateral ethyl group and proposes the use thereof, inter alia, in liquid crystal optically phased arrays.

Dabrowski, R., Kula, P., Gauza, S., Dziadiszek, J., Urban, S. and Wu, S.-T., IDRC 08, (2008), pages 35-38, mention dielectrically neutral bistolane compounds with and without a lateral methyl group on the central ring besides the strongly dielectrically positive isothiocyanatobistolane compounds of the formula

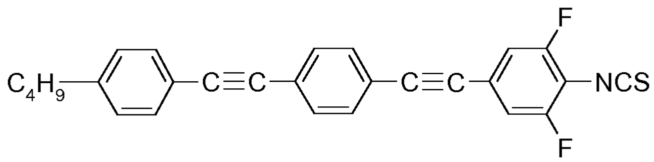

.

An industrially valuable application of liquid-crystalline media in high-frequency technology is based on their property that their dielectric properties can be controlled, particularly for the gigahertz region and the terahertz region, by a variable voltage. This enables the construction of tunable antennas which contain no moving parts (Gaebler, A., Moessinger, A., Goelden, F., et al., "Liquid Crystal-Reconfigurable Antenna Concepts for Space Applications at Microwave and Millimeter Waves", International Journal of Antennas and Propagation, Volume 2009, Article ID 876989, (2009), pages 1 - 7, DOI: 10.1155/2009/876989).

Penirschke, A., Müller, S., Scheele, P., Weil, C., Wittek, M., Hock, C. and Jakoby, R.: "Cavity Perturbation Method for Characterisation of Liquid Crystals up to 35 GHz", 34th European Microwave Conference - Amsterdam, pp. 545 - 548, describe, inter alia, the properties of the known single liquid-crystalline substance K15 (also called 4-n-pentyl-4'-cyanobiphenyl or PP-5-N, Merck KGaA, Germany) at a frequency of 9 GHz.

DE 10 2004 029 429 A describes the use of liquid-crystal media in microwave technology, inter alia in phase shifters. DE 10 2004 029 429 A has already investigated liquid-crystalline media with respect to their properties in the corresponding frequency range.

For use in high-frequency technology, liquid-crystalline media having particular, hitherto rather unusual, unconventional properties, or combinations of properties, are required.

A. Gaebler, F. Goelden, S. Müller, A. Penirschke and R. Jakoby "Direct Simulation of Material Permittivites using an Eigen-Susceptibility Formulation of the Vector Variational Approach", 12MTC 2009 - International Instrumentation and Measurement Technology Conference, Singapore, 2009 (IEEE), pp. 463-467, describe the corresponding properties of the known liquid-crystal mixture E7 (likewise Merck KGaA, Germany).

DE 10 2004 029 429 A describes the use of liquid-crystal media in microwave technology, inter alia in phase shifters. DE 10 2004 029 429 A has already investigated liquid-crystalline media with respect to their properties in the corresponding frequency range. In addition, it mentions liquid-crystalline media which comprise compounds of the formulae

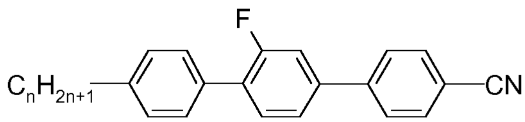

besides compounds of the formulae

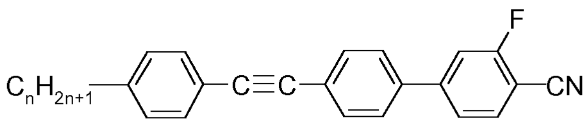

and

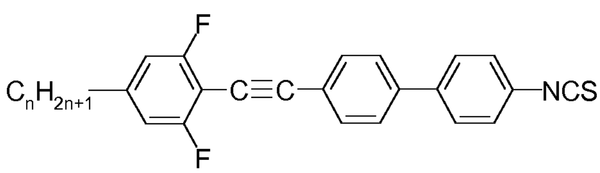

.

Liquid-crystalline media comprising for example compounds of the formula below,

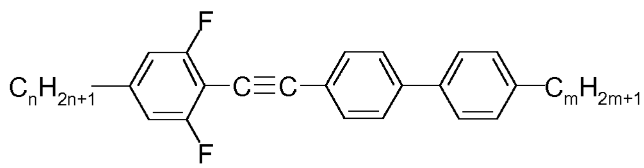

are used as a host mixture for the investigation of compounds, which are suggested for the usage in components for microwave applications and are described in F. Golden, "Liquid Crystal Based Microwave Components with Fast Response Times: Materials, Technology, Power Handling Capability", Dissertation, Technische Universität Darmstadt, 2009, (D17), A. Lapanik, "Single compounds and mixtures for microwave applications, Dielectric, microwave studies on selected systems", Dissertation, Technische Universität Darmstadt, 2009, (D17),
"Nematic LC mixtures with high birefringence in microwave region", A. Lapanik, F. Golden, S. Müller, A. Penirschke, R. Jakoby und W. Haase, Frequenz 2011, 65, 15-19,
"Highly birefringent nematic mixtures at room temperature for microwave applications", A. Lapanik, F. Golden, S. Müller, R. Jakoby und W. Haase, Journal of Optical Engineering, published online, as well as in the laid-open documents DE 10 2010 045 370.6 DE 10 2010 051 508.0, and WO 2013/034227 A1.

However, the compositions known to date are afflicted with serious disadvantages. Besides other deficiencies, most of them result in disadvantageously high losses and/or inadequate phase shift or inadequate material quality ($\eta$).

Thus, there is a considerable demand for liquid-crystalline media having suitable properties for corresponding practical applications. Novel liquid-crystalline media having improved properties are necessary. In particular, the loss in the microwave region and/or millimetre wave region must be reduced and the material quality improved.

In addition, there is a demand for an improvement in the low-temperature behaviour of the liquid-crystalline media and thus, also of the components. Both an improvement in the operating properties and also in the shelf life are necessary here.

Surprisingly, it has now been found that it is possible to achieve components for high-frequency technology which do not have the disadvantages of the prior-art materials, or at least only do so to a considerably reduced extent, and allow to realize media with an acceptably high clearing point, low viscosity, high polarity and fast response times, high tunability and high material quality, if liquid-crystalline media are employed, that comprise one or more compounds of formula Q and one or more compounds of formula T, U or I, shown below.

The invention relates to liquid-crystalline media comprising one or more compounds of formula Q

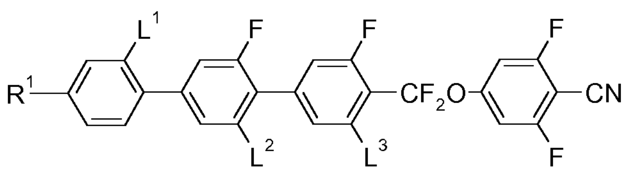

Q

and

one or more compounds selected from the group of compounds of formulae T, U and I

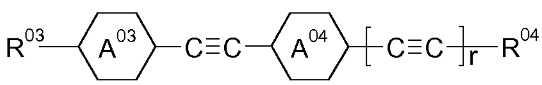

T

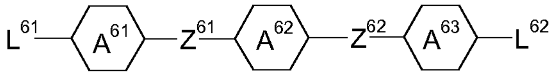

U

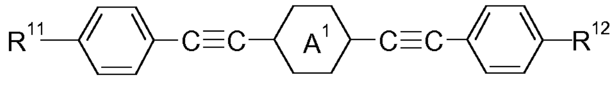

I

wherein

| | |
|---|---|
| $R^1$ | denotes alkyl, which is straight chain or branched having 1 to 15 C-atoms, is unsubstituted, mono- or poly-substituted by F, Cl or CN, preferably by F, and in which one or more $CH_2$ groups are optionally |

replaced, in each case independently from one another, by -O-, -S-, $-CR^{01}R^{02}-$, $-SiR^{01}R^{02}-$, -CO-, -COO-, -OCO-, -OCO-O-, -S-CO-, -CO-S-, $-CY^{01}=CY^{02}-$ or -C≡C- in such a way that O and/or S atoms are not linked directly to one another;

$Y^{01}$ and $Y^{02}$ are, independently of each other, F, Cl or CN, and alternatively one of them may be H,

$R^{01}$ and $R^{02}$ are, independently of each other, H or alkyl with 1 to 12 C-atoms,

$L^1$,$L^2$ and $L^3$ each, independently from one another, denote H or F;

$R^{03}$ and $R^{04}$ independently from one another, have the meaning given for $R^1$ above,

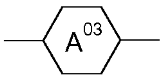

and

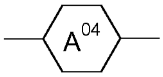

independently of one another, denote

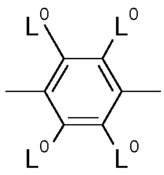
,
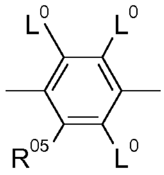
,
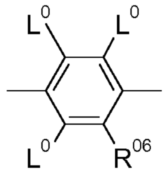
,

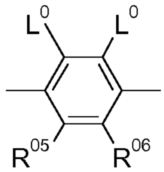
,
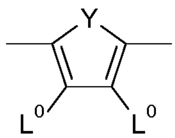
,
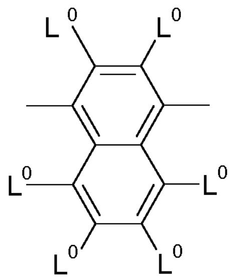
,

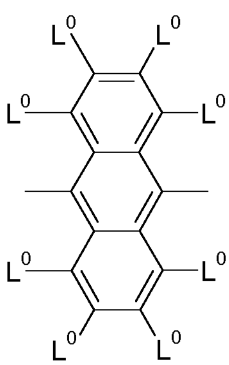
,
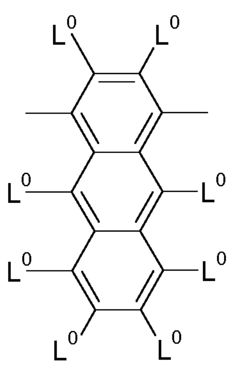
,
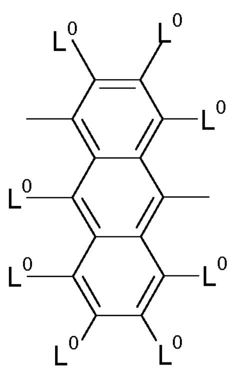

or

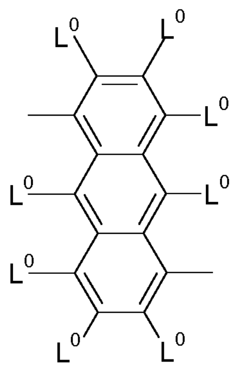

,

wherein Y denotes S or O, and wherein in the 1,4-phenylene groups, one or more C-H groups may be replaced by N, and $L^0$ on each occurrence, independently of one another, denotes H, Br, Cl, F, -CN, -NCS, -SCN, $SF_5$, $C_1$-$C_{10}$ alkyl, $C_1$-$C_{10}$ alkoxy, $C_3$-$C_6$ cycloalkyl or a mono- or polyfluorinated $C_1$-$C_{10}$ alkyl or alkoxy group,

$R^{05}$ and $R^{06}$ each, independently of one another, denote a halogenated or unsubstituted alkyl radical having 1 to 6 C atoms, where, one or more $CH_2$ groups in these radicals may each be replaced, independently of one another by -C≡C-, -CH=CH-, -CF=CF-, -CF=CH-, -CH=CF-, -(CO)O-, -O(CO), -(CO)-, -O- or -S- in such a way that O or S atoms are not linked directly to one another;

r is 0 or 1;

$L^{61}$ denotes $R^{61}$ and, in the case where $Z^{61}$ and/or $Z^{62}$ denote *trans-CH=CH-* or *trans*-CF=CF-, alternatively also denotes $X^{61}$,

$L^{62}$ denotes $R^{62}$ and, in the case where $Z^{61}$ and/or $Z^{62}$ denote *trans*-CH=CH- or *trans*-CF=CF-, alternatively also denotes $X^{62}$,

$R^{61}$and $R^{62}$, independently of one another, denote H, unfluorinated alkyl or unfluorinated alkoxy having 1 to 17 C atoms or unfluorinated alkenyl, unfluorinated alkenyloxy or unfluorinated alkoxyalkyl having 2 to 15 C atoms,

$X^{61}$ and $X^{62}$, independently of one another, denote F or Cl, -CN, -NCS, $-SF_5$, fluorinated alkyl or alkoxy having 1 to 7 C atoms or fluorinated alkenyl, alkenyloxy or alkoxyalkyl having 2 to 7 C atoms,

one of

$Z^{61}$ and $Z^{62}$ denotes *trans*-CH=CH-, *trans*-CF=CF- or -C=C- and the other denotes *trans*-CH=CH-, *trans*-CF=CF- or a single bond, and

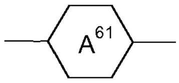 to 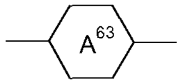

independently of one another, denote

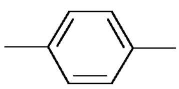, 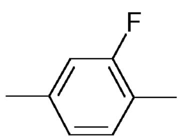, 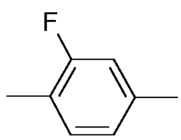,

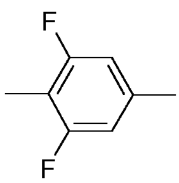, 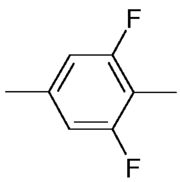, 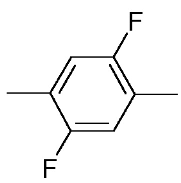,

or

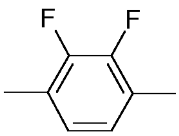.

R11 and R12, independently of one another, denote unfluorinated alkyl or unfluorinated alkoxy, each having 1 to 15 C atoms, unfluorinated alkenyl, unfluorinated alkenyloxy or unfluorinated alkoxyalkyl, each having 2 to 15 C atoms, or cycloalkyl, alkylcycloalkyl, cycloalkenyl, alkylcycloalkenyl, alkylcycloalkylalkyl or alkylcycloalkenylalkyl, each having up to 15 C atoms;

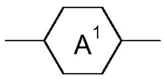

denotes

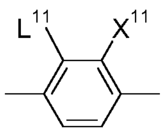, 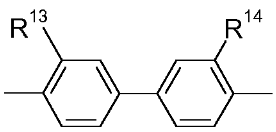,

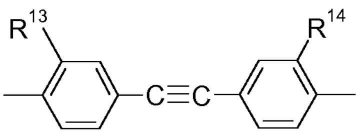 or 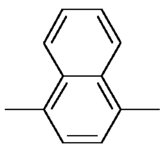,

$L^{11}$ denotes H, alkyl having 1 to 6 C atoms, cycloalkyl having 3 to 6 C atoms or cycloalkenyl having 4 to 6 C atoms,

$X^{11}$ denotes H, alkyl having 1 to 3 C atoms or halogen,

$R^{13}$ and $R^{14}$, independently of one another, have the meaning given for $R^{11}$ and $R^{12}$, and alternatively one of $R^{13}$ and $R^{14}$ or both also denote H.

The compounds of formula Q are preferably selected from the compounds of formulae Q-1 to Q-5.

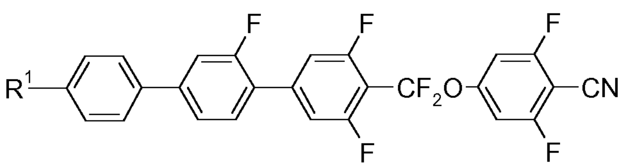 Q-1

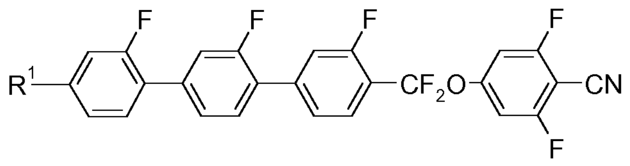

Q-2

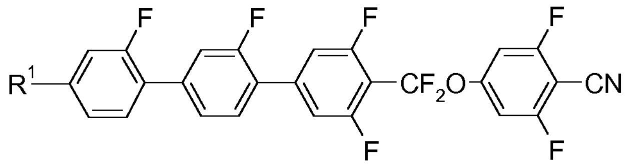

Q-3

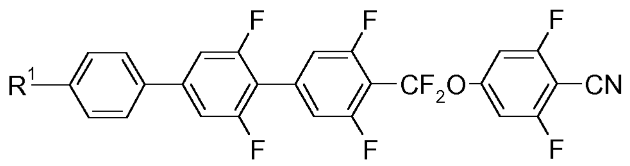

Q-4

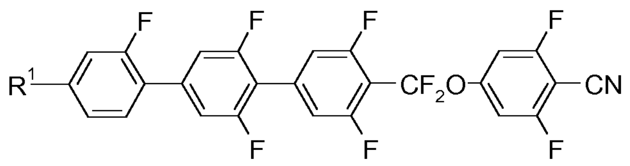

Q-5

wherein $R^1$ has the meaning indicated above and preferably denotes alkyl or alkenyl having 2 to 7 C atoms.

The compounds of formula Q are very preferably selected from the compounds of formulae Q-4 and Q-5.

The compounds of formula T are preferably selected from compounds of the formulae T-1 to T-7:

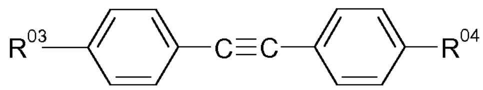

T-1

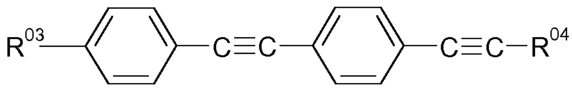

T-2

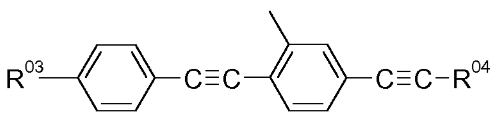

T-3

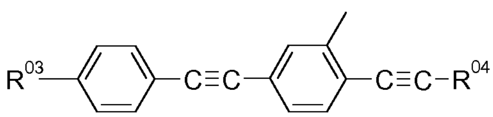

T-4

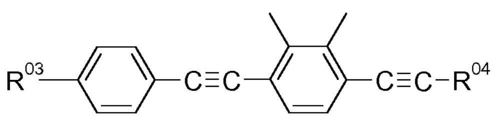

T-5

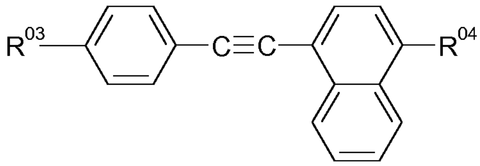

T-6

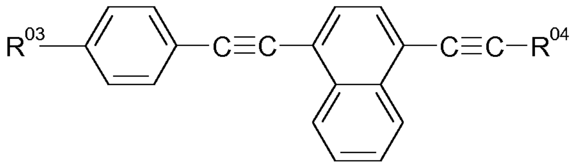

T-7

wherein $R^{03}$ and $R^{04}$ have the meaning indicated above and preferably, independently of one another other, denote alkyl or alkenyl having 2 to 7 C atoms.

The compounds of the formula U are preferably selected from the group of the compounds of the formulae U-1 to U-3:

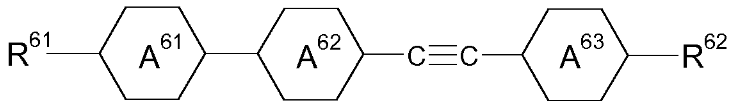

U-1

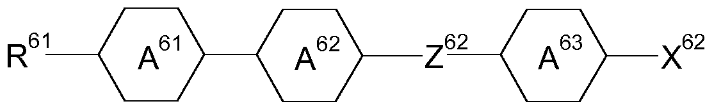

U-2

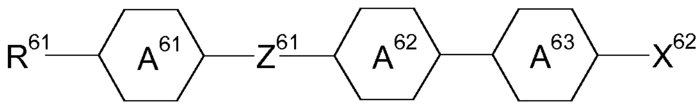

U-3

in which

$Z^{61}$ and $Z^{62}$ denote *trans*-CH=CH-, *trans*-CF=CF-, or -C≡C-, preferably *trans*-CH=CH- or -C≡C-,

and the other parameters have the meaning given above under formula U and preferably

$R^{61}$ and $R^{62}$, independently of one another, denote H, unfluorinated alkyl or alkoxy having 1 to 7 C atoms or unfluorinated alkenyl having 2 to 7 C atoms,

$X^{62}$ denotes F, Cl, -CN or -NCS, preferably -NCS, and one of

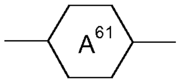 to 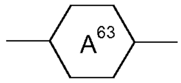 denotes

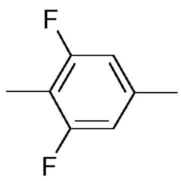 , 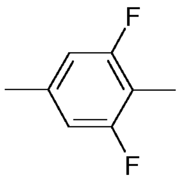

or 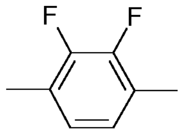

and the others, independently of one another, denote

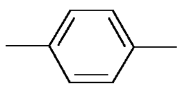 , 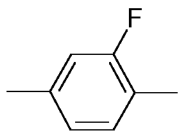 , 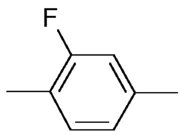 ,

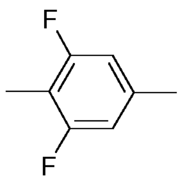 , 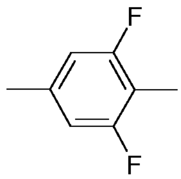 , 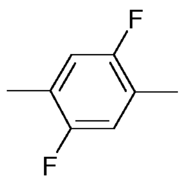

or 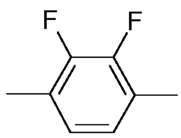 , preferably

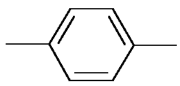 , 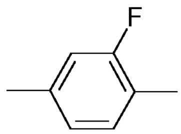 , 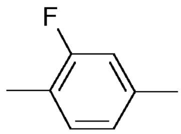

or 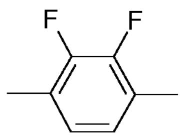 , and preferably

$R^{61}$ denotes $C_nH_{2n+1}$ or $CH_2$=CH-$(CH_2)_Z$, and

$R^{62}$ denotes $C_mH_{2m+1}$ or O-$C_mH_{2m+1}$ or $(CH_2)_z$-CH=$CH_2$, and in which

n and m, independently of one another, denote an integer in the range from 0 to 15, preferably in the range from 1 to 7 and particularly preferably 1 to 5, and

z denotes 0, 1, 2, 3 or 4, preferably 0 or 2.

The compounds of the formula U-1 are preferably selected from the group of the compounds of the formulae U-1 a and U-1b, more preferably selected from compounds of the formula U-1a:

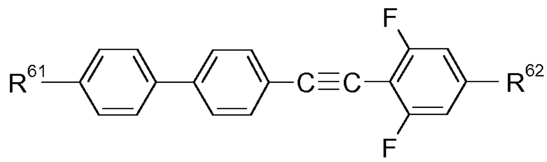

U-1a

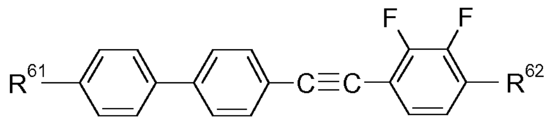

U-1b

in which

$R^{61}$ has the meaning indicated above and preferably denotes $C_nH_{2n+1}$ or $CH_2$=CH-$(CH_2)_z$, and

$R^{62}$ has the meaning indicated above and preferably denotes $C_mH_{2m+1}$ or O-$C_mH_{2m+1}$ or $(CH_2)_Z$-CH=$CH_2$, and in which

n and m, independently of one another, denote an integer in the range from 0 to 15, preferably in the range from 1 to 7 and particularly preferably 1 to 5, and

z denotes 0, 1, 2, 3 or 4, preferably 0 or 2.

The preferred combinations of ($R^{61}$ and $R^{62}$) here are, in particular, ($C_nH_{2n+1}$ and $C_mH_{2m+1}$) and ($C_nH_{2n+1}$ and O-$C_mH_{2m+1}$), in the case of formula U-1a particularly preferably ($C_nH_{2n+1}$ and $C_mH_{2m+1}$) and in the case of formula U-1b particularly preferably ($C_nH_{2n+1}$ and O-$C_mH_{2m+1}$).

The compounds of the formula U-2 are preferably selected from the compounds of the formula U-2a to U-2c:

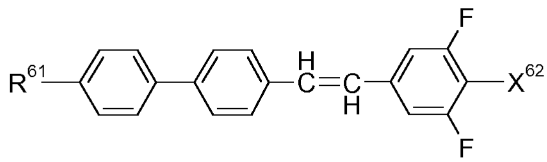

U-2a

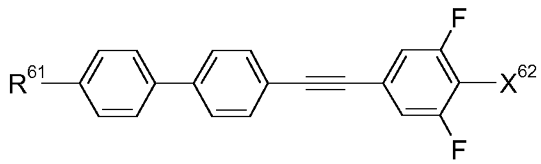

U-2b

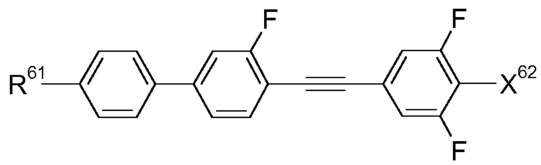

U-2c

in which the parameters have the meaning given above under formula U-3 and preferably

$R^{61}$ has the meaning indicated above and preferably denotes $C_nH_{2n+1}$, in which

n denotes an integer in the range from 0 to 7, preferably in the range from 1 to 5, and

$X^{62}$ denotes -F, -Cl, -$OCF_3$, -CN or -NCS, particularly preferably -NCS.

The compounds of the formula U-3 are preferably selected from compounds of the formulae U-3a to U-3c:

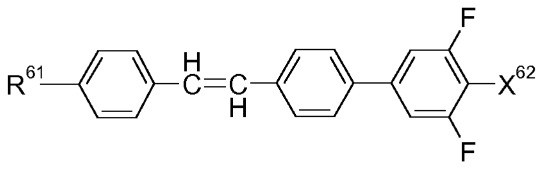

U-3a

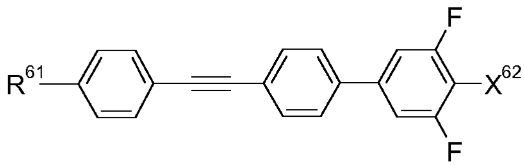

U-3b

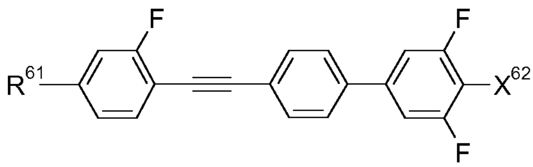

U-3c

in which the parameters have the meaning given above under formula U-3 and preferably

$R^{61}$ has the meaning indicated above and preferably denotes $C_nH_{2n+1}$, in which

n denotes an integer in the range from 0 to 7, preferably in the range from 1 to 5, and

$X^{62}$ denotes F, Cl, $OCF_3$, -CN or -NCS, particularly preferably -NCS.

Further preferred compounds of the formula U are the compounds of the following formulae:

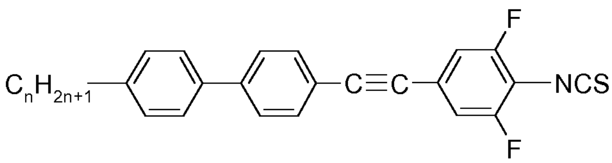

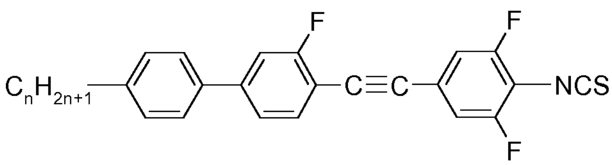

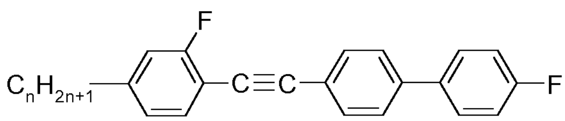

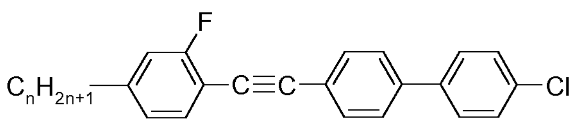

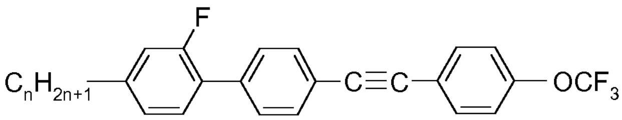

in which

n denotes an integer in the range from 0 to 7, preferably in the range from 1 to 5.

In the compounds of the formula I, the group

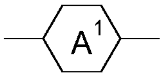

preferably denotes

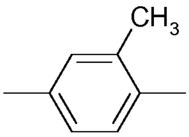 , 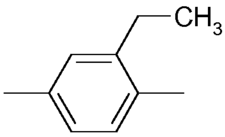 , 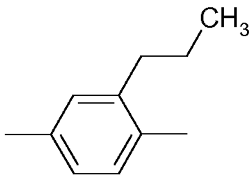 ,

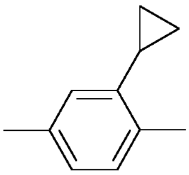 , 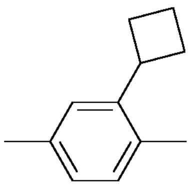 , 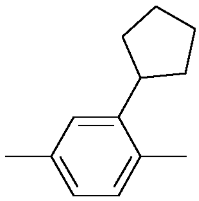 ,

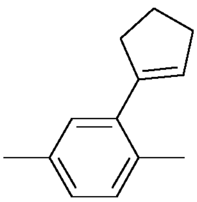 , 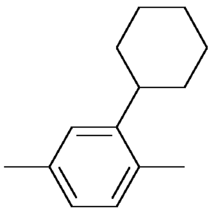 , 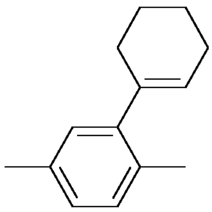 ,

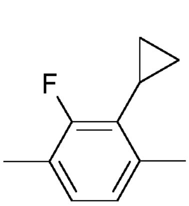 , 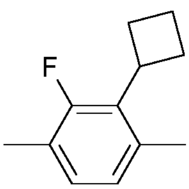 , 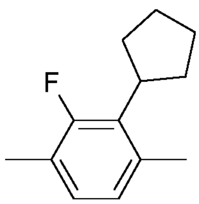 ,

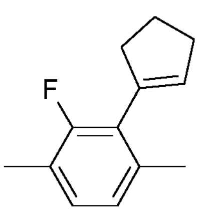 , 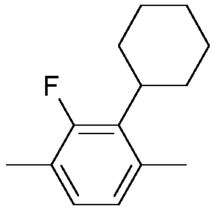 , 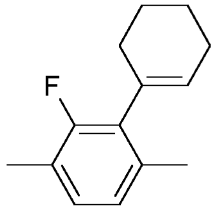 ,

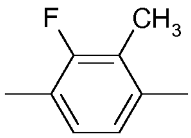 , 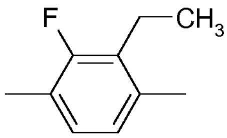 ,

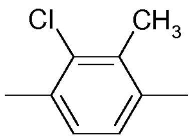 , 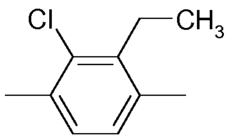 ,

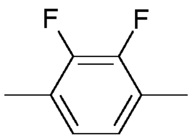 , 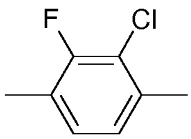 ,

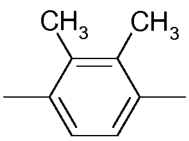 , 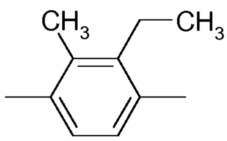 , 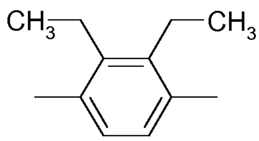 ,

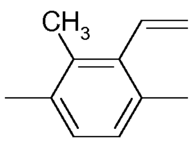 , 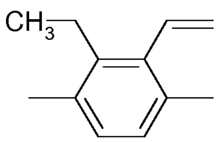 ,

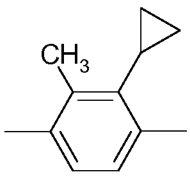 , 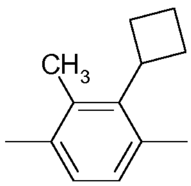 , 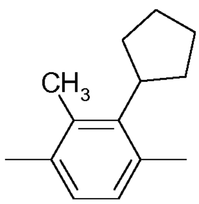 ,

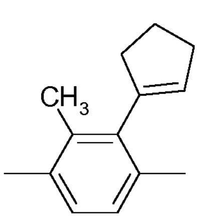 , 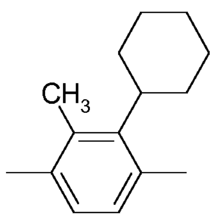 , 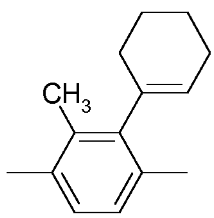 ,

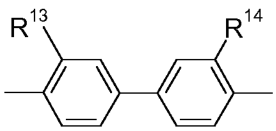, 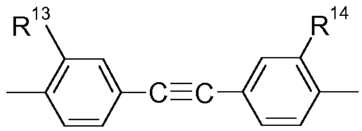,

or

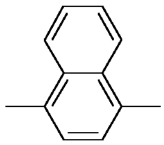,

particularly preferably

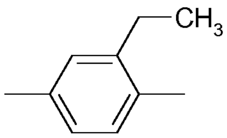, 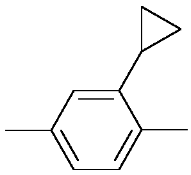, 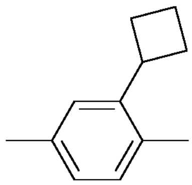,

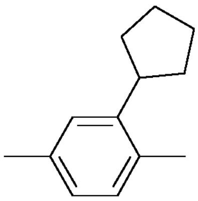, 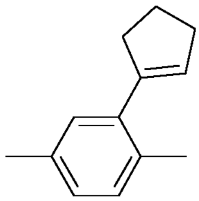, 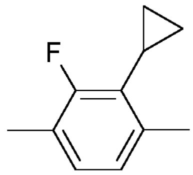,

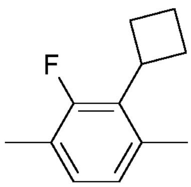, 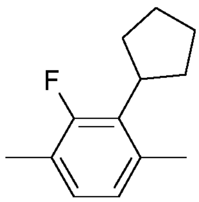, 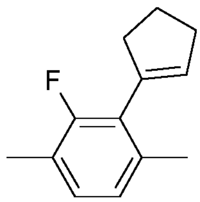,

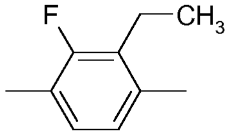, 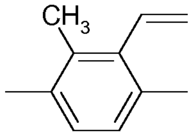, 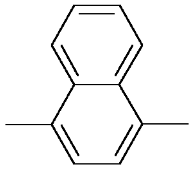,

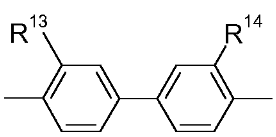 or 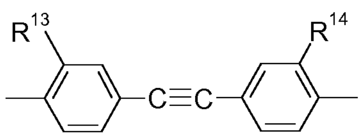,

wherein $R^{13}$ and $R^{14}$ have the meaning given above and preferably

$R^{13}$ and $R^{14}$ denote H, unfluorinated alkyl having 1 to 5 C atoms, unfluorinated cycloalkyl or cycloalkenyl having 3 to 7 C atoms, unfluorinated alkylcyclohexyl or unfluorinated cyclohexylalkyl, each having 4 to 12 C atoms, or unfluorinated alkylcyclohexylalkyl having 5 to 15 C atoms, particularly preferably cyclopropyl, cyclobutyl or cyclohexyl, and very particularly preferably at least one of $R^{13}$ and $R^{14}$ denotes n-alkyl, particularly preferably methyl, ethyl or n-propyl, and the other denotes H or n-alkyl, particularly preferably H, methyl, ethyl or *n*-propyl.

Furthermore, In formula I,

$L^{11}$ preferably denotes $CH_3$, $C_2H_5$, *n*-$C_3H_7$ (-$(CH_2)_2CH_3$), *i*-$C_3H_7$ (-$CH(CH_3)_2$), cyclopropyl, cyclobutyl, cyclohexyl, cyclopent-1-enyl or cyclohex-1-enyl, and particularly preferably $CH_3$, $C_2H_5$, cyclopropyl or cyclobutyl,
$X^{11}$ preferably denotes H, F or Cl, and particularly preferably H or F and very particularly preferably F,
$R^{11}$ and $R^{12}$, independently of one another, denote unfluorinated alkyl or unfluorinated alkoxy, each having 1 to 7 C atoms, or unfluorinated alkenyl, unfluorinated alkenyloxy or unfluorinated alkoxyalkyl, each having 2 to 7 C atoms, particularly preferably
$R^{11}$ denotes unfluorinated alkyl having 1 to 7 C atoms or unfluorinated alkenyl, unfluorinated alkenyloxy or unfluorinated alkoxyalkyl, each having 2 to 7 C atoms, and particularly preferably
$R^{12}$ denotes unfluorinated alkyl or unfluorinated alkoxy, each having 1 to 7 C atoms, and

In a preferred embodiment of the present invention, the compounds of the formula I are selected from the group of the compounds of the formulae I-1 to I-4, preferably of the formulae I-1 and/or I-2 and/or I-3 and/or I-4, preferably of the formulae I-1 and I-2:

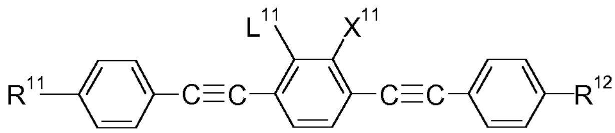
I-1

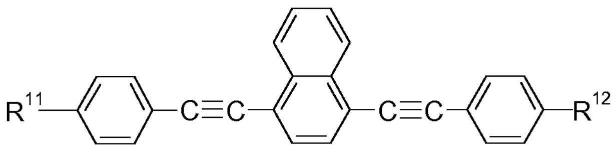
I-2

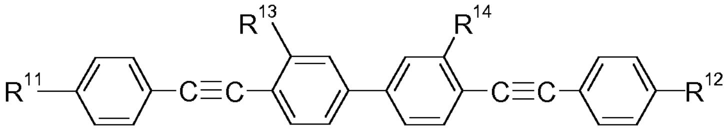
I-3

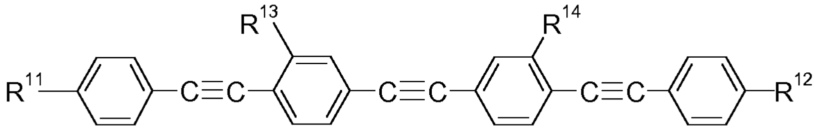
I-4

in which

$L^{11}$ denotes alkyl having 1 to 6 C atoms, alkenyl having 2 to 6 C atoms, cycloalkyl having 3 to 6 C atoms or cycloalkenyl having 4 to 6 C atoms, preferably $CH_3$, $C_2H_5$, *n*-$C_3H_7$ ,(-$(CH_2)_2CH_3$), *i*-$C_3H_7$ (-$CH(CH_3)_2$), -$CH=CH_2$, cyclopropyl, cyclobutyl, cyclopentyl, cyclohexyl, cyclopent-1-enyl or cyclohex-1-enyl, and particularly preferably $CH_3$, $C_2H_5$, cyclopropyl or cyclobutyl,

$X^{11}$ denotes H, alkyl having 1 to 3 C atoms or halogen, preferably H, F or Cl, and particularly preferably H, F or $CH_3$, even more preferably H or F and very particularly preferably F,

and the other parameters have the respective meanings indicated above for formula I, and preferably

$R^{11}$ denotes unfluorinated alkyl having 1 to 7 C atoms, and

$R^{12}$ denotes unfluorinated alkyl having 1 to 7 C atoms or unfluorinated alkoxy having 1 to 7 C atoms.

In a particularly preferred embodiment of the present invention, the compounds of the formula I-1are selected from the group of the compounds of the formulae I-1a-1 to I-1a-12 and I-1b-1 to I-1b-12

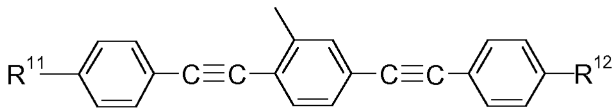

I-1a-1

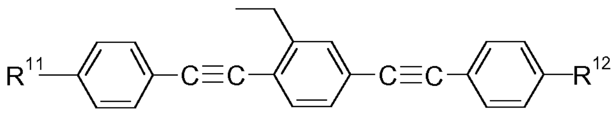

I-1a-2

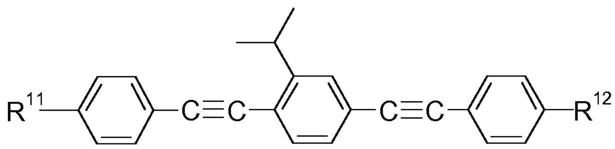

I-1a-3

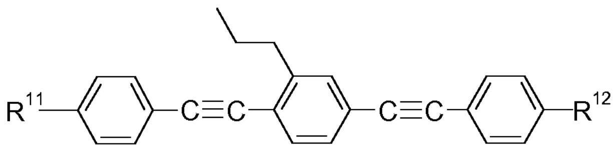

I-1a-4

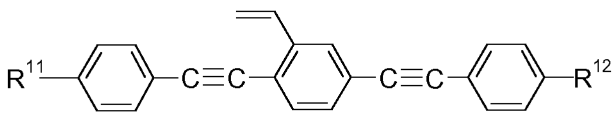

I-1a-5

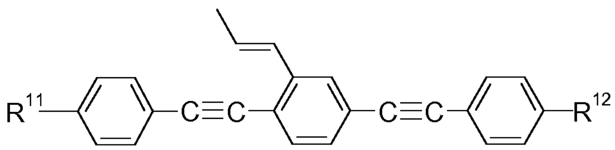

I-1a-6

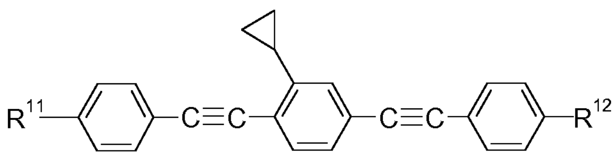

I-1a-7

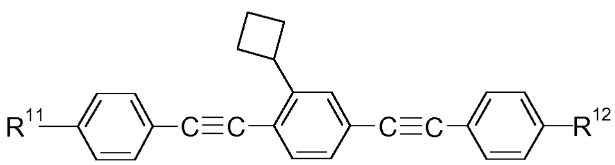

I-1a-8

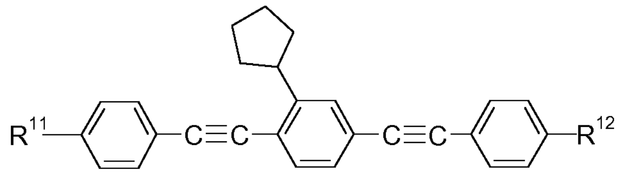

I-1a-9

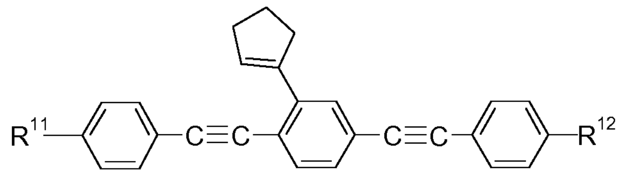

I-1a-10

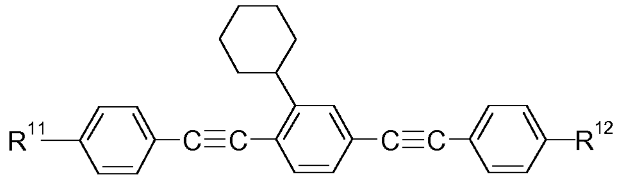

I-1a-11

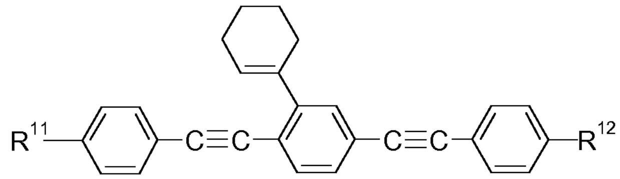

I-1a-12

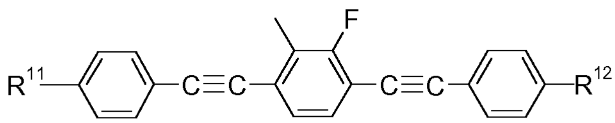

I-1b-1

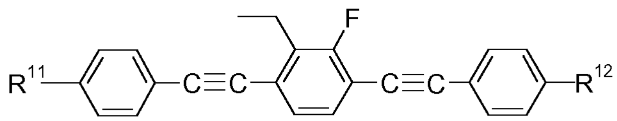

I-1b-2

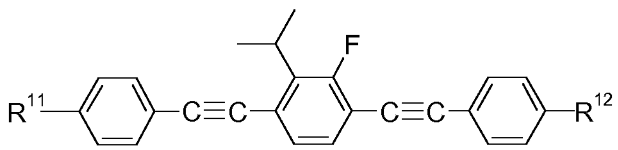

I-1b-3

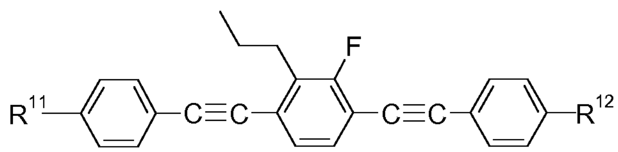

I-1b-4

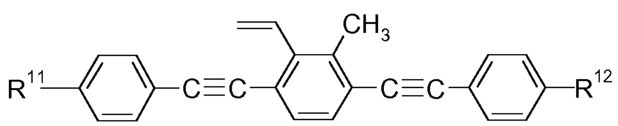

I-1b-5

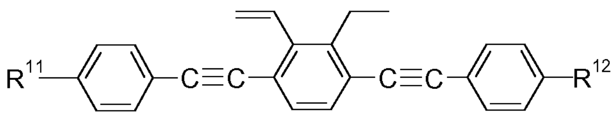

I-1b-6

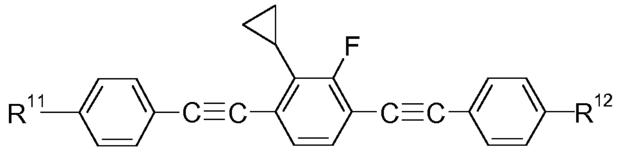

I-1b-7

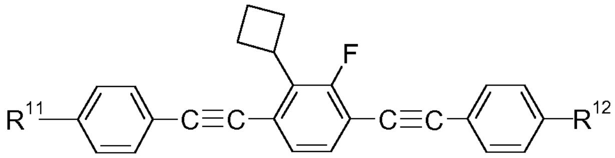

I-1b-8

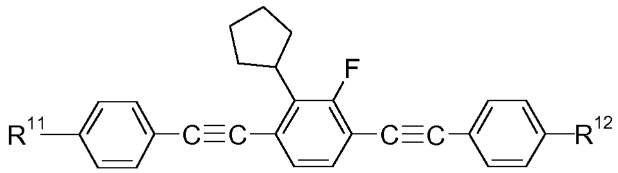

I-1b-9

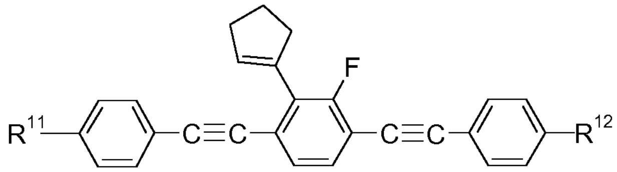

I-1b-10

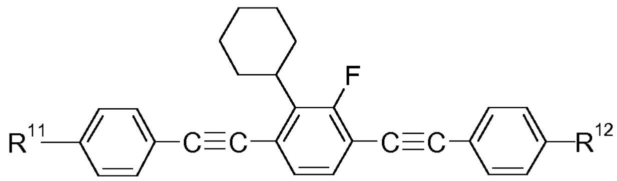

I-1b-11

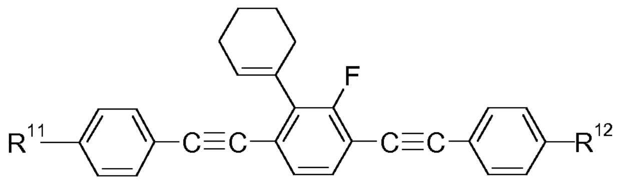

I-1b-12

in which the parameters have the meanings as given above under formula I-1, and preferably $R^{11}$ and $R^{12}$, independently of one another, denote an alkyl radical having 2 to 7 C atoms, for example a propyl or hexyl radical, or each denote a propyl, butyl, pentyl or hexyl radical.

In a very particularly preferred embodiment of the present invention, the compounds of the formula I are selected from the group of the compounds of the formulae I-1a-2, I-1a-5, I-1a-7, I-1a-8, I-1a-9, I-1a-10, I-1b-5, I-1b-7, I-1b-8, I-1b-9, I-1b-10, where the parameters have the meaning given above, and particularly preferably

$R^{11}$ and $R^{12}$, independently of one another, denote unfluorinated alkyl having 1 to 7 C atoms or unfluorinated alkoxy having 1 to 6 C atoms,

particularly preferably one of

$R^{11}$ and $R^{12}$ denotes alkyl and the other denotes alkyl or alkoxy,

and very particularly preferably $R^{11}$ and $R^{12}$ have different meanings from one another.

In a preferred embodiment of the present invention, the liquid-crystal medium comprises one or more compounds of the formula I-2, in which preferably
$R^{11}$ and $R^{12}$, independently of one another, denote an alkyl radical having 2 to 7 C atoms, for example a propyl or hexyl radical, or each denote a propyl, butyl, pentyl or hexyl radical.

In a preferred embodiment of the present invention the compounds of the formula I-3 are selected from the group of the compounds of the formulae I-3a-1 to I-3a-3 and I-3b-1 to I-3b-3, preferably I-3a-2, I-3b-2,

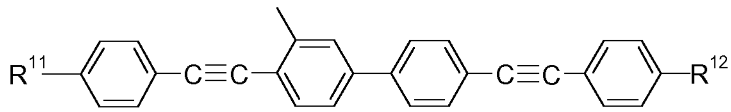

I-3a-1

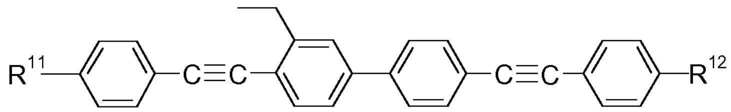

I-3a-2

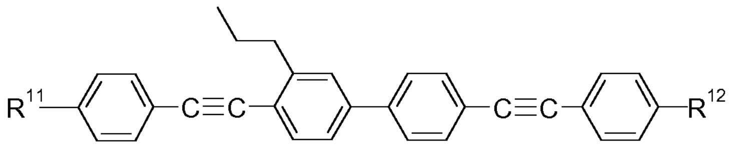

I-3a-3

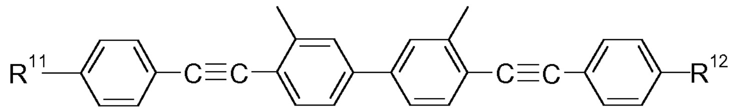

I-3b-1

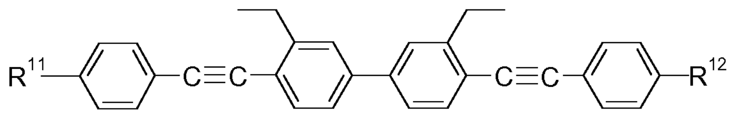

I-3b-2

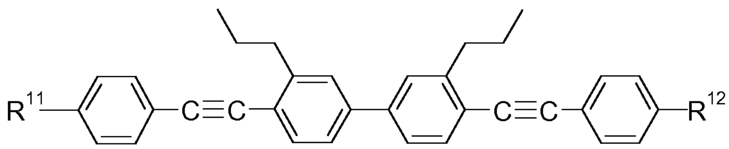

I-3b-3

in which the parameters have the meanings given above under formula I-3, and preferably

$R^{11}$ and $R^{12}$, independently of one another, denote an alkyl radical having 2 to 7 C atoms, for example a propyl or hexyl radical, or each denote a propyl, butyl, pentyl or hexyl radical.

In a preferred embodiment of the present invention, the compounds of the formula I-4 are selected from the group of the compounds of the formulae I-4a-1 to I-4a-3 and I-4b-1 to I-4b-3, preferably I-4b-2,

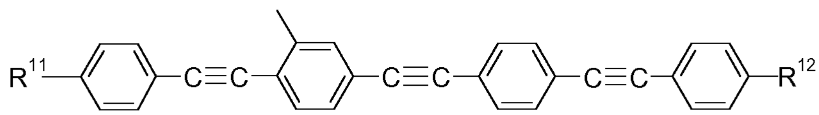

I-4a-1

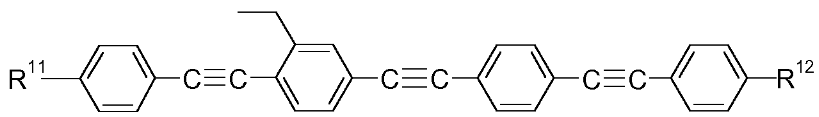

I-4a-2

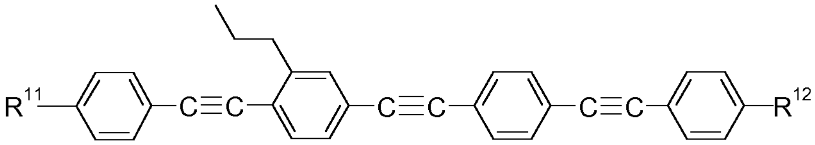

I-4a-3

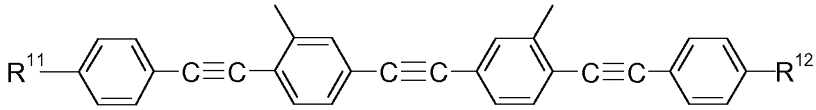

I-4b-1

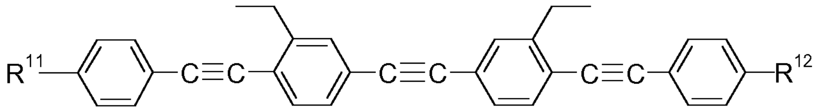

I-4b-2

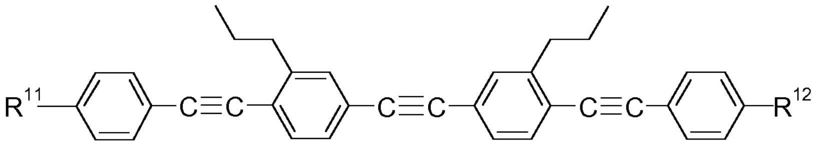

I-4b-3

in which the parameters have the meanings given above under formula I-4, and preferably
$R^{11}$ and $R^{12}$, independently of one another, denote an alkyl radical having 2 to 7 C atoms, for example a propyl or hexyl radical, or each denote a propyl, butyl, pentyl or hexyl radical.

In a preferred embodiment of the present invention the liquid-crystalline medium comprises one or more compounds selected from the group of the compounds of the formulae II and III:

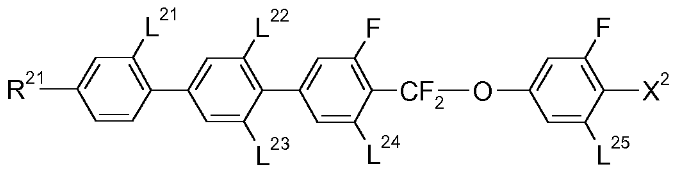

II

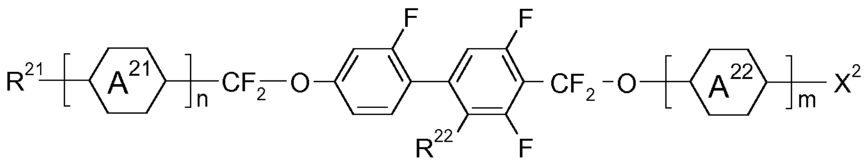

III

wherein

| | |
|---|---|
| $R^{21}$ | denotes unfluorinated alkyl or unfluorinated alkoxy, each having 1 to 15 C atoms, or unfluorinated alkenyl, unfluorinated alkenyloxy or unfluorinated alkoxyalkyl, each having 2 to 15 C atoms, preferably alkyl, particularly preferably *n*-alkyl, |
| $R^{22}$ | denotes H, unfluorinated alkyl or unfluorinated alkoxy, each having 1 to 5, preferably 1 to 3, particularly preferably 3, C atoms, |
| $L^{21}$, $L^{22}$,$L^{23}$, $L^{24}$ and $L^{25}$ | denote, independently from one another, H or F, |

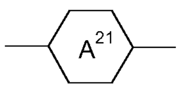

to

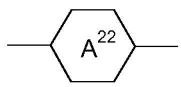

,

independently of one another and, if they occur more than once, these also in each case independently of one another, denote

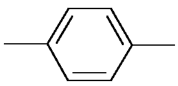, 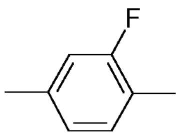, 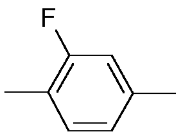,

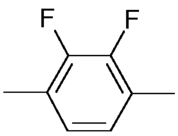, 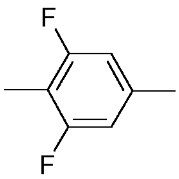, 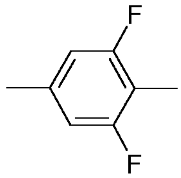

or

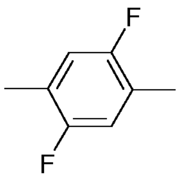,

preferably

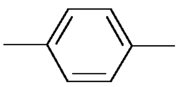, 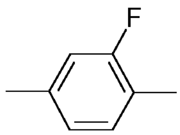

or

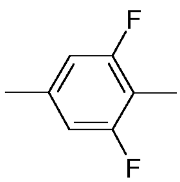,

| | |
|---|---|
| n and m, | independently of one another, denote 1 or 2, preferably |
| (n+m) | denotes 3 or 4, and particularly preferably |
| n | denotes 2, |
| $X^2$ | denotes F, Cl, $-CF_3$ or $-OCF_3$, preferably F or Cl, particularly preferably F, |

Preferred compounds of the formula II are the compounds of the sub-formula II-1

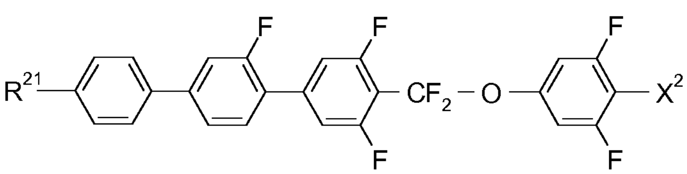

II-1

in which $R^{21}$ and $X^2$ have the meanings given above, and $X^2$ preferably denotes F.

Preferred compounds of the formula III are the compounds of the sub-formulae III-1 and III-2:

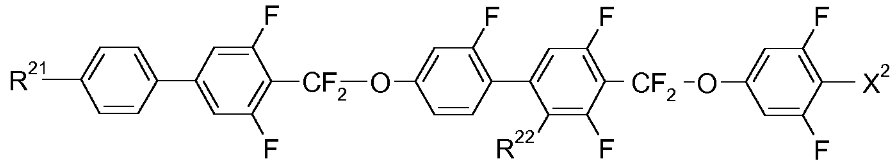

III-1

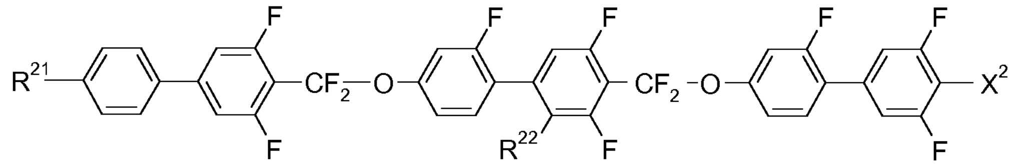

III-2

in which $R^{21}$, $R^{22}$ and $X^2$ have the respective meanings given above.

In a preferred embodiment of the present invention, the liquid-crystalline medium comprises one or more compounds of formula IV:

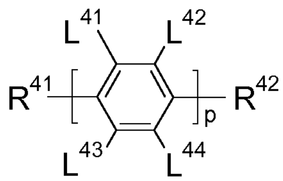

IV

in which

$R^{41}$ and $R^{42}$, independently of one another, have one of the meanings indicated above for $R^{11}$ under formula I,

$L^{41}$ to $L^{44}$ on each appearance, in each case independently of one another, denote H, alkyl having 1 to 5 C atoms, F or Cl, and

p denotes an integer in the range from 7 to 14, preferably from 8 to 12 and particularly preferably from 9 to 10,

and preferably
at least two of the substituents

$L^{41}$ to $L^{44}$ present have a meaning other than H, and

$R^{41}$ denotes $C_nH_{2n+1}$or $CH_2$=CH-$(CH_2)_Z$, and

$R^{42}$ denotes $C_mH_{2m+1}$ or O-$C_mH_{2m+1}$ or $(CH_2)_z$-CH=$CH_2$,

and in which

n and m, independently of one another, denote an integer in the range from 0 to 15, preferably in the range from 1 to 7 and particularly preferably 1 to 5, and

z denotes 0, 1, 2, 3 or 4, preferably 0 or 2.

In a preferred embodiment of the present application, the liquid-crystal medium additionally comprises one or more compounds selected from the group of compounds of the formulae V, VII, VIII and IX:

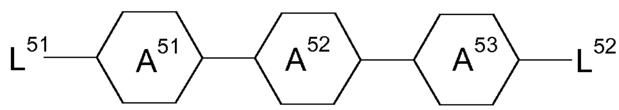

V

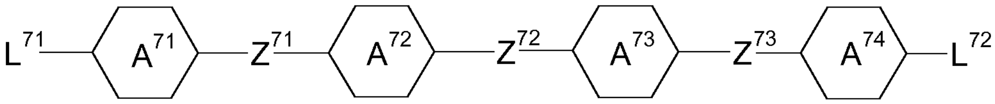 VII

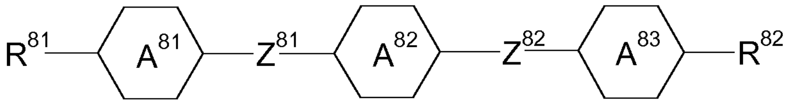 VIII

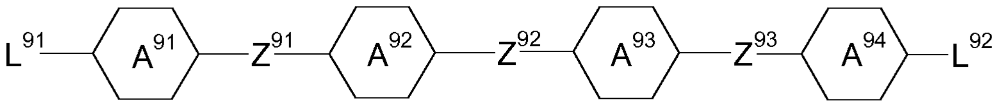 IX

in which

$L^{51}$ denotes $R^{51}$ or $X^{51}$,

$L^{52}$ denotes $R^{52}$ or $X^{52}$,

$R^{51}$and $R^{52}$, independently of one another, denote H, unfluorinated alkyl or unfluorinated alkoxy having 1 to 17, preferably 3 to 10, C atoms or unfluorinated alkenyl, unfluorinated alkenyloxy or unfluorinated alkoxyalkyl having 2 to 15, preferably 3 to 10, C atoms, preferably alkyl or unfluorinated alkenyl,

$X^{51}$ and $X^{52}$, independently of one another, denote H, F, Cl,-CN, -NCS, $-SF_5$, fluorinated alkyl or fluorinated alkoxy having 1 to 7 C atoms or fluorinated alkenyl, fluorinated alkenyloxy or fluorinated alkoxyalkyl having 2 to 7 C atoms, preferably fluorinated alkoxy, fluorinated alkenyloxy, F or Cl, and

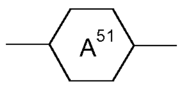 to 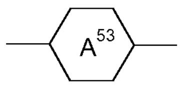 ,

independently of one another, denote

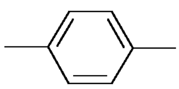 , 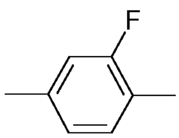 , 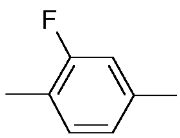 ,

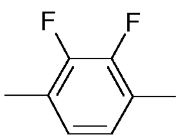 , 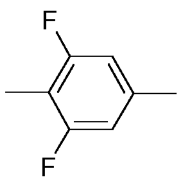 , 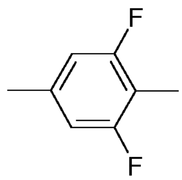

or

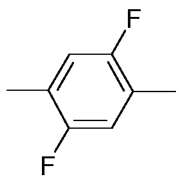

, preferably

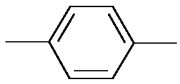 , 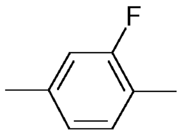 , 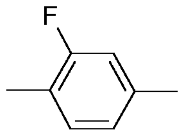

or

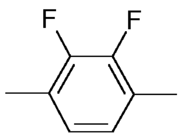 ,

$L^{71}$ denotes $R^{71}$ or $X^{71}$,

$L^{72}$ denotes $R^{72}$ or $X^{72}$,

$R^{71}$ and $R^{72}$, independently of one another, denote H, unfluorinated alkyl or unfluorinated alkoxy having 1 to 17, preferably 3 to 10, C atoms or unfluorinated alkenyl, unfluorinated alkenyloxy or unfluorinated alkoxyalkyl having 2 to 15, preferably 3 to 10, C atoms, preferably alkyl or unfluorinated alkenyl,

$X^{71}$ and $X^{72}$, independently of one another, denote H, F, Cl,CN, -NCS, $-SF_5$, fluorinated alkyl or fluorinated alkoxy having 1 to 7 C atoms or fluorinated alkenyl, unfluorinated or fluorinated alkenyloxy or unfluorinated or fluorinated alkoxyalkyl having 2 to 7 C atoms, preferably fluorinated alkoxy, fluorinated alkenyloxy, F or Cl, and

$Z^{71}$ to $Z^{73}$, independently of one another, denote *trans*-CH=CH-, *trans*-CF=CF-, -C≡C- or a single bond, preferably one or more of them denote a single bond, particularly preferably all denote a single bond and

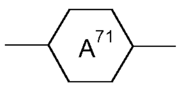 to 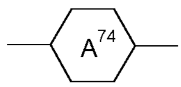 ,

independently of one another, denote

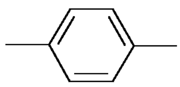 , 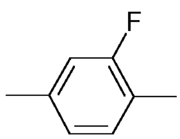 , 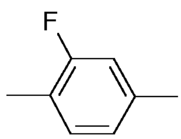 ,

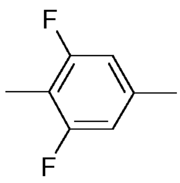, 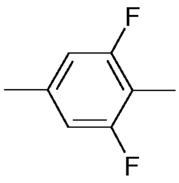, 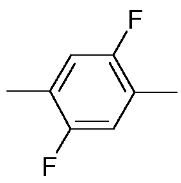

or

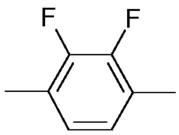, preferably

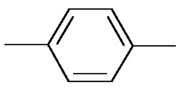, 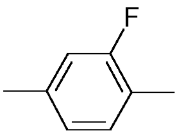, 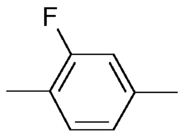

or

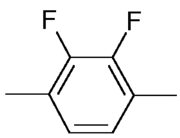,

$R^{81}$ and $R^{82}$, independently of one another, denote H, unfluorinated alkyl or alkoxy having 1 to 15, preferably 3 to 10, C atoms or unfluorinated alkenyl, alkenyloxy or alkoxyalkyl having 2 to 15, preferably 3 to 10, C atoms, preferably unfluorinated alkyl or alkenyl,

one of $Z^{81}$ and $Z^{82}$ denotes *trans*-CH=CH-, *trans*-CF=CF- or -C≡C- and the other, independently thereof, denotes *trans*-CH=CH-, *trans*-CF=CF- or a single bond, preferably one of them denotes -C≡C- or *trans*-CH=CH- and the other denotes a single bond, and

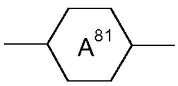 denotes 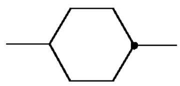,

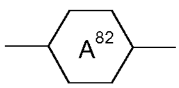 and 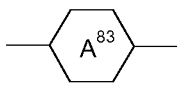,

independently of one another, denote

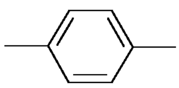, 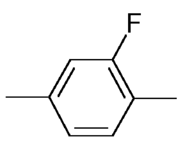, 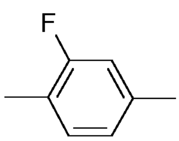,

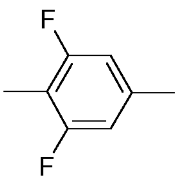, 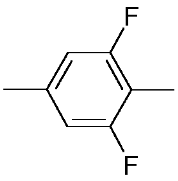, 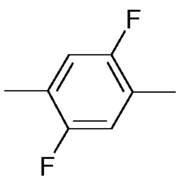

or

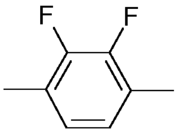,

| | |
|---|---|
| $L^{91}$ | denotes $R^{91}$ or $X^{91}$, |
| $L^{92}$ | denotes $R^{92}$ or $X^{92}$, |
| $R^{91}$ and $R^{92}$, | independently of one another, denote H, unfluorinated alkyl or alkoxy having 1 to 15, preferably 3 to 10, C atoms or unfluorinated alkenyl, alkenyloxy or alkoxyalkyl having 2 to 15, preferably 3 to 10, C atoms, preferably unfluorinated alkyl or alkenyl, |
| $X^{91}$ and $X^{92}$, | independently of one another, denote H, F, Cl,-CN, -NCS, $-SF_5$, fluorinated alkyl or fluorinated alkoxy having 1 to 7 C atoms or fluorinated alkenyl, unfluorinated or fluorinated alkenyloxy or unfluorinated or fluorinated alkoxyalkyl having 2 to 7 C atoms, preferably fluorinated alkoxy, fluorinated alkenyloxy, F or Cl, and |
| $Z^{91}$ to $Z^{93}$, | independently of one another, denote trans-CH=CH-, trans-CF=CF-, -C=C- or a single bond, preferably one or more of them denotes a single bond, and particularly preferably all denote a single bond, |

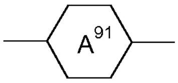 denotes 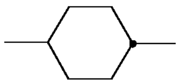, 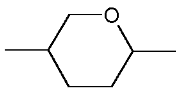

or

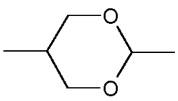,

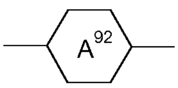 to 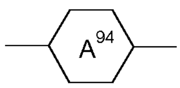

independently of one another, denote

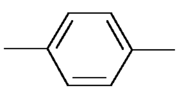, 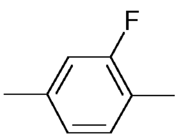, 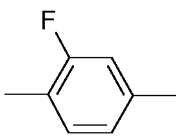,

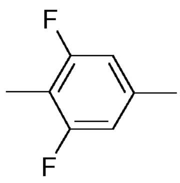
,
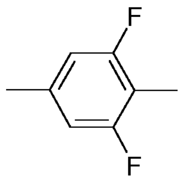
,
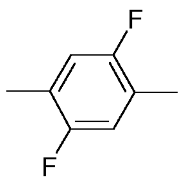

or

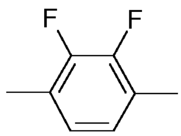
.

In a preferred embodiment of the present invention, the liquid-crystal medium comprises one or more compounds of the formula V, preferably selected from the group of the compounds of the formulae V-1 to V-3, preferably of the formulae V-1 and/or V-2 and/or V-3, preferably of the formulae V-1 and V-2:

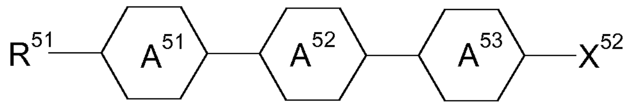
V-1

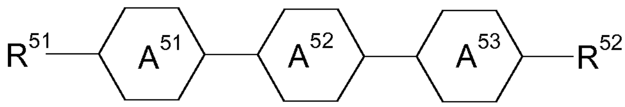
V-2

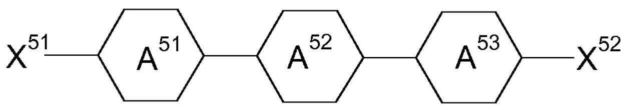
V-3

in which the parameters have the respective meanings indicated above for formula V and preferably

$R^{51}$ denotes unfluorinated alkyl having 1 to 7 C atoms or unfluorinated alkenyl having 2 to 7 C atoms,

$R^{52}$ denotes unfluorinated alkyl having 1 to 7 C atoms or unfluorinated alkenyl having 2 to 7 C atoms or unfluorinated alkoxy having 1 to 7 C atoms,

$X^{51}$ and $X^{52}$, independently of one another, denote F, Cl, $-OCF_3$, $-CF_3$, -CN, -NCS or $-SF_5$, preferably F, Cl, $-OCF_3$ or -CN.

The compounds of the formula V-1 are preferably selected from the group of the compounds of the formulae V-1 a to V-1d, preferably V-1c and V-1d :

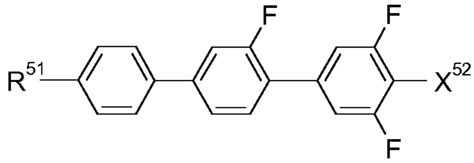
V-1a

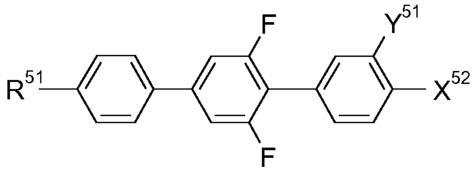

V-1b

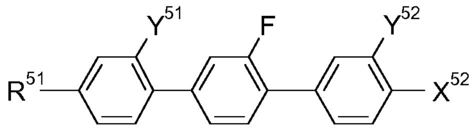

V-1c

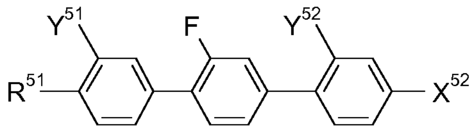

V-1d

in which the parameters have the respective meanings indicated above for formula V-1 and in which

$Y^{51}$ and $Y^{52}$, in each case independently of one another, denote H or F, and preferably

$R^{51}$ denotes alkyl or alkenyl, and

$X^{51}$ denotes F, Cl or $-OCF_3$.

The compounds of the formula V-2 are preferably selected from the group of the compounds of the formulae V-2a to V-2e and/or from the group of the compounds of the formulae V-2f and V-2g:

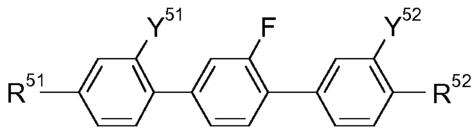

V-2a

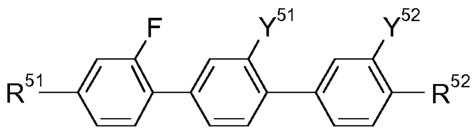

V-2b

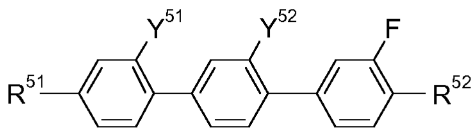

V-2c

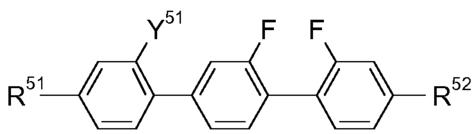

V-2d

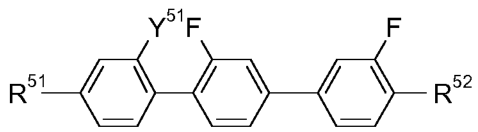

V-2e

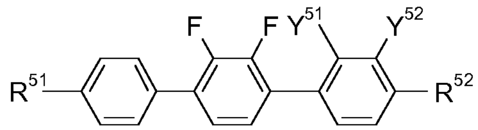

V-2f

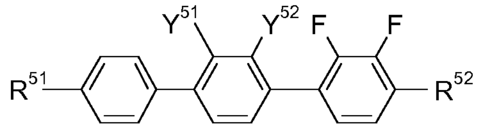

V-2g

where in each case the compounds of the formula V-2a are excluded from the compounds of the formulae V-2b and V-2c, the compounds of the formula V-2b are excluded from the compounds of the formula V-2c and the compounds of the formula V-2e are excluded from the compounds of the formula V-2f, and
in which the parameters have the respective meanings indicated above for formula V-1 and in which

$Y^{51}$ and $Y^{52}$, in each case independently of one another, denote H or F, and preferably

$Y^{51}$ and $Y^{52}$ denotes H and the other denotes H or F, preferably like-wise denotes H.

The compounds of the formula V-3 are preferably compounds of the formula V-3a:

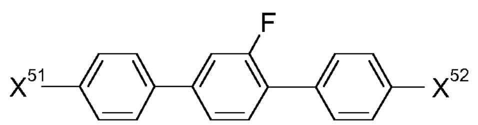

V-3a

in which the parameters have the respective meanings indicated above for formula V-1 and in which preferably

$X^{51}$ denotes F, Cl, preferably F,

$X^{52}$ denotes F, Cl or $-OCF_3$, preferably $-OCF_3$.

The compounds of the formula V-1a are preferably selected from the group of the compounds of the formulae V-1a-1 and V-1a-2, more preferably these compounds of the formula V predominantly consist, even more preferably essentially consist and very particularly preferably completely consist thereof:

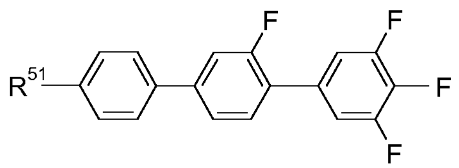

V-1a-1

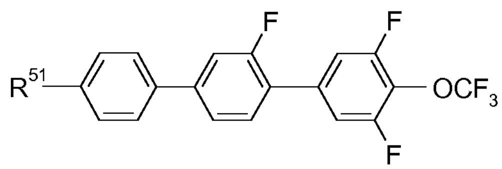

V-1a-2

in which

$R^{51}$ has the meaning indicated above and preferably denotes $C_nH_{2n+1}$, in which

n denotes an integer in the range from 0 to 7, preferably in the range from 1 to 5 and particularly preferably 3 or 7.

The compounds of the formula V-1b are preferably compounds of the formula V-1b-1:

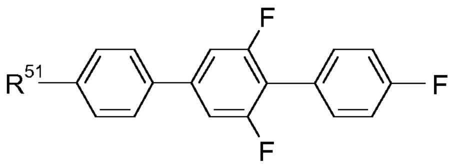

V-1b-1

in which

$R^{51}$ has the meaning indicated above and preferably denotes $C_nH_{2n+1}$, in which

n denotes an integer in the range from 0 to 15, preferably in the range from 1 to 7 and particularly preferably 1 to 5.

The compounds of the formula V-1c are preferably selected from the group of the compounds of the formulae V-1c-1 to V-1c-4, particularly preferably selected from the group of the compounds of the formulae V-1c-1 and V-1c-2:

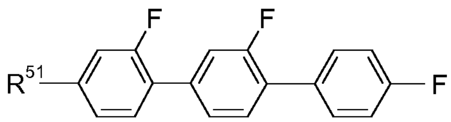

V-1c-1

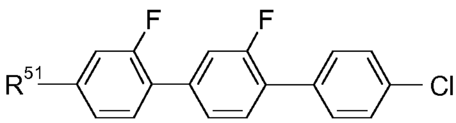

V-1c-2

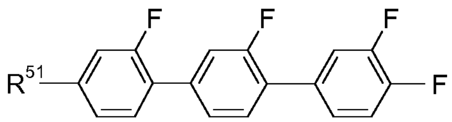

V-1c-3

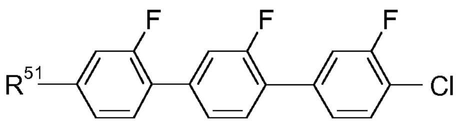

V-1c-4

in which

$R^{51}$ has the meaning indicated above and preferably denotes $C_nH_{2n+1}$, in which

n denotes an integer in the range from 0 to 15, preferably in the range from 1 to 7 and particularly preferably 1 to 5.

The compounds of the formula V-1d are preferably selected from the group of the compounds of the formulae V-1d-1 and V-1d-2, particularly preferably the compound of the formula V-1d-2:

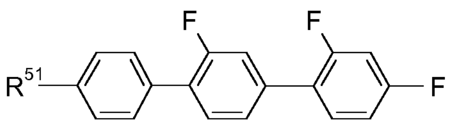

V-1d-1

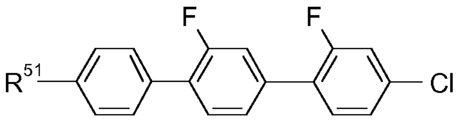

V-1d-2

in which

$R^{51}$ has the meaning indicated above and preferably denotes $C_nH_{2n+1}$, in which

n denotes an integer in the range from 0 to 15, preferably in the range from 1 to 7 and particularly preferably 1 to 5.

The compounds of the formula V-2a are preferably selected from the group of the compounds of the formulae V-2a-1 and V-2a-2, particularly preferably the compounds of the formula V-2a-1:

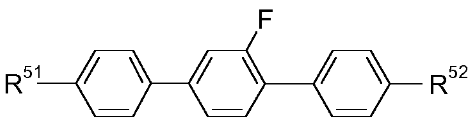

V-2a-1

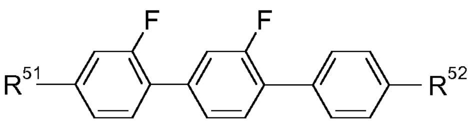

V-2a-2

in which

$R^{51}$ has the meaning indicated above and preferably denotes $C_nH_{2n+1}$ or $CH_2=CH-(CH_2)_Z$, and

$R^{52}$ has the meaning indicated above and preferably denotes $C_mH_{2m+1}$ or $O-C_mH_{2m+1}$ or $(CH_2)_Z-CH=CH_2$, and in which

n and m, independently of one another, denote an integer in the range from 0 to 15, preferably in the range from 1 to 7 and particularly preferably 1 to 5, and

z denotes 0, 1, 2, 3 or 4, preferably 0 or 2.

Preferred combinations of ($R^{51}$ and $R^{52}$), in particular in the case of formula V-2a-1, are ($C_nH_{2n+1}$ and $C_mH_{2m+1}$), ($C,H_{2n+1}$ and $O-C_mH_{2m+1}$), ($CH_2=CH-(CH_2)_Z$ and $C_mH_{2m+1}$), ($CH_2=CH-(CH_2)_Z$ and $O-C_mH_{2m+1}$) and ($C_nH_{2n+1}$and $(CH_2)_Z-CH=CH_2$).

Preferred compounds of the formula V-2b are the compounds of the formula V-2b-1:

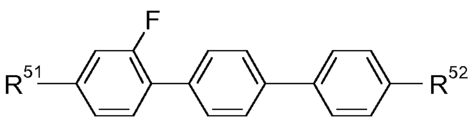

V-2b-1

in which

$R^{51}$ has the meaning indicated above and preferably denotes $C_nH_{2n+1}$ or $CH_2=CH-(CH_2)_Z$, and

$R^{52}$ has the meaning indicated above and preferably denotes $C_mH_{2m+1}$ or $O-C_mH_{2m+1}$ or $(CH_2)_Z-CH=CH_2$, and in which

n and m, independently of one another, denote an integer in the range from 0 to 15, preferably in the range from 1 to 7 and particularly preferably 1 to 5, and

z denotes 0, 1, 2, 3 or 4, preferably 0 or 2.

The preferred combination of ($R^{51}$ and $R^{52}$) here is, in particular, ($C_nH_{2n+1}$ and $C_mH_{2m+1}$).

Preferred compounds of the formula V-2c are the compounds of the formula V-2c-1 :

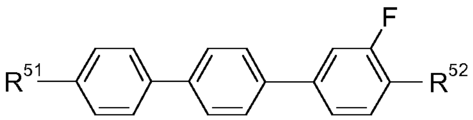

V-2c-1

in which

$R^{51}$ has the meaning indicated above and preferably denotes $C_nH_{2n+1}$ or $CH_2=CH-(CH_2)_Z$, and

$R^{52}$ has the meaning indicated above and preferably denotes $C_mH_{2m+1}$ or $O-C_mH_{2m+1}$ or $(CH_2)_Z-CH=CH_2$, and in which

n and m, independently of one another, denote an integer in the range from 0 to 15, preferably in the range from 1 to 7 and particularly preferably 1 to 5, and

z denotes 0, 1, 2, 3 or 4, preferably 0 or 2.

The preferred combination of ($R^{51}$ and $R^{52}$) here is, in particular, ($C_nH_{2n+1}$ and $C_mH_{2m+1}$).

Preferred compounds of the formula V-2d are the compounds of the formula V-2d-1 :

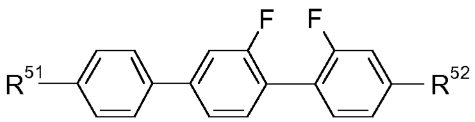

V-2d-1

in which

$R^{51}$ has the meaning indicated above and preferably denotes $C_nH_{2n+1}$ or $CH_2=CH-(CH_2)_Z$, and

$R^{52}$ has the meaning indicated above and preferably denotes $C_mH_{2m+1}$ or $O-C_mH_{2m+1}$ or $(CH_2)_Z-CH=CH_2$, and in which

n and m, independently of one another, denote an integer in the range from 0 to 15, preferably in the range from 1 to 7 and particularly preferably 1 to 5, and

z denotes 0, 1, 2, 3 or 4, preferably 0 or 2.

The preferred combination of ($R^{51}$ and $R^{52}$) here is, in particular, ($C_nH_{2n+1}$ and $C_mH_{2m+1}$).

Preferred compounds of the formula V-2e are the compounds of the formula V-2e-1 :

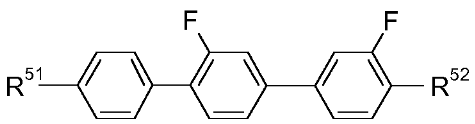

V-2e-1

in which

$R^{51}$ has the meaning indicated above and preferably denotes $C_nH_{2n+1}$ or $CH_2=CH-(CH_2)_z$, and

$R^{52}$ has the meaning indicated above and preferably denotes $C_mH_{2m+1}$ or $O-C_mH_{2m+1}$ or $(CH_2)_Z-CH=CH_2$, and in which

n and m, independently of one another, denote an integer in the range from 0 to 15, preferably in the range from 1 to 7 and particularly preferably 1 to 5, and

z denotes 0, 1, 2, 3 or 4, preferably 0 or 2.

The preferred combination of ($R^{51}$ and $R^{52}$) here is, in particular, ($C_nH_{2n+1}$ and $O\text{-}C_mH_{2m+1}$).

Preferred compounds of the formula V-2f are the compounds of the formula V-2f-1 :

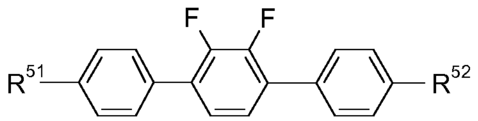

V-2f-1

in which

$R^{51}$ has the meaning indicated above and preferably denotes $C_nH_{2n+1}$ or $CH_2=CH\text{-}(CH_2)_Z$, and

$R^{52}$ has the meaning indicated above and preferably denotes $C_mH_{2m+1}$ or $O\text{-}C_mH_{2m+1}$ or $(CH_2)_Z\text{-}CH=CH_2$, and in which

n and m, independently of one another, denote an integer in the range from 0 to 15, preferably in the range from 1 to 7 and particularly preferably 1 to 5, and

z denotes 0, 1, 2, 3 or 4, preferably 0 or 2.

The preferred combinations of ($R^{51}$ and $R^{52}$) here are, in particular, ($C_nH_{2n+1}$ and $C_mH_{2m+1}$) and ($C_nH_{2n+1}$ and $O\text{-}C_mH_{2m+1}$), particularly preferably ($C_nH_{2n+1}$ and $C_mH_{2m+1}$).

Preferred compounds of the formula V-2g are the compounds of the formula V-2g-1 :

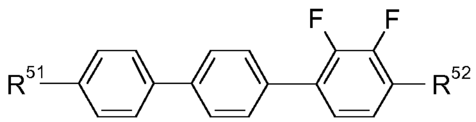

V-2g-1

in which

$R^{51}$ has the meaning indicated above and preferably denotes $C_nH_{2n+1}$ or $CH_2=CH\text{-}(CH_2)_Z$, and

$R^{52}$ has the meaning indicated above and preferably denotes $C_mH_{2m+1}$ or $O\text{-}C_mH_{2m+1}$ or $(CH_2)_Z\text{-}CH=CH_2$, and in which

n and m, independently of one another, denote an integer in the range from 0 to 15, preferably in the range from 1 to 7 and particularly preferably 1 to 5, and

z denotes 0, 1, 2, 3 or 4, preferably 0 or 2.

The preferred combinations of ($R^{51}$ and $R^{52}$) here are, in particular, ($C_nH_{2n+1}$ and $C_mH_{2m+1}$) and ($C_nH_{2n+1}$ and $O\text{-}C_mH_{2m+1}$), particularly preferably ($C_nH_{2n+1}$ and $O\text{-}C_mH_{2m+1}$).

The compounds of the formula VII are preferably selected from the group of the compounds of the formulae VII-1 to VII-6:

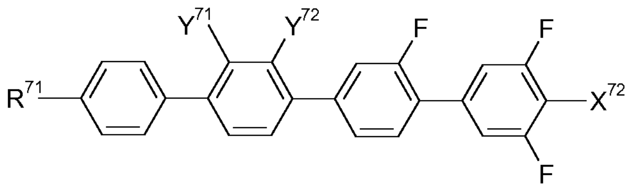

VII-1

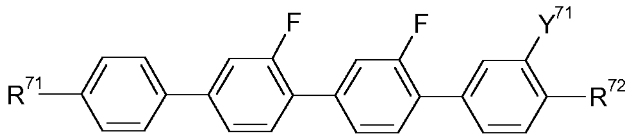

VII-2

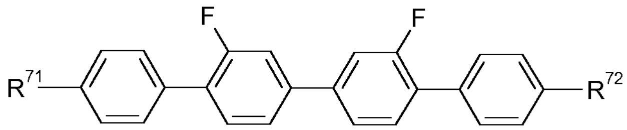

VII-3

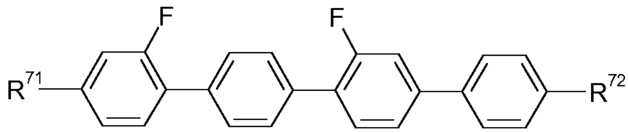

VII-4

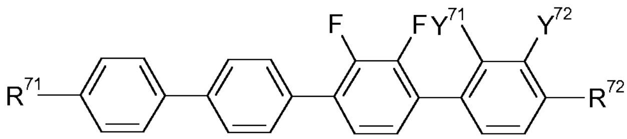

VII-5

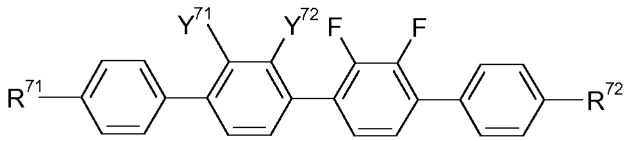

VII-6

where the compounds of the formula VII-5 are excluded from the compounds of the formula VII-6, and in which the parameters have the respective meanings indicated above for formula VII, and preferably

$R^{71}$ denotes unfluorinated alkyl or alkoxy, each having 1 to 7 C atoms, or unfluorinated alkenyl having 2 to 7 C atoms,

$R^{72}$ denotes unfluorinated alkyl or alkoxy, each having 1 to 7 C atoms, or unfluorinated alkenyl having 2 to 7 C atoms, and

$X^{72}$ denotes F, Cl or $-OCF_3$, preferably F, and

particularly preferably

$R^{71}$ has the meaning indicated above and preferably denotes $C_nH_{2n+1}$ or $CH_2=CH-(CH_2)_Z$, and

$R^{72}$ has the meaning indicated above and preferably denotes $C_mH_{2m+1}$ or $O-C_mH_{2m+1}$ or $(CH_2)_Z-CH=CH_2$, and in which

n and m, independently of one another, denote an integer in the range from 0 to 15, preferably in the range from 1 to 7 and particularly preferably 1 to 5, and

z denotes 0, 1, 2, 3 or 4, preferably 0 or 2.

The compounds of the formula VII-1 are preferably selected from the group of the compounds of the formulae VII-1a to VII-1d:

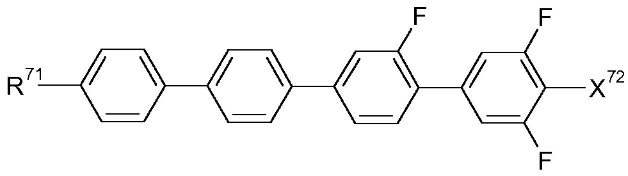
VII-1a

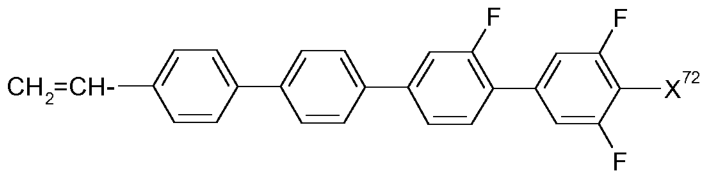
VII-1b

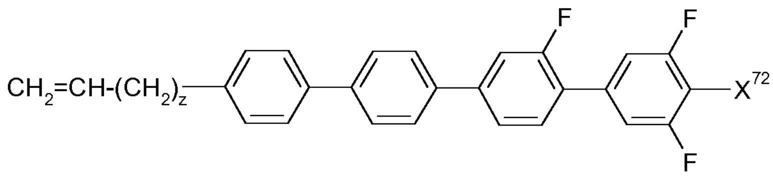
VII-1c

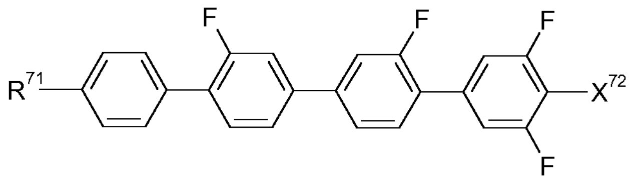
VII-1d

in which $X^{72}$ has the meaning given above for formula VII-2 and

$R^{71}$ has the meaning indicated above and preferably denotes $C_nH_{2n+1}$, in which

n denotes 1 to 7, preferably 2 to 6, particularly preferably 2, 3 or 5, and

z denotes 0, 1, 2, 3 or 4, preferably 0 or 2, and

$X^{72}$ preferably denotes F.

The compounds of the formula VII-2 are preferably selected from the group of the compounds of the formulae VII-2a and VII-2b, particularly preferably of the formula VII-2a:

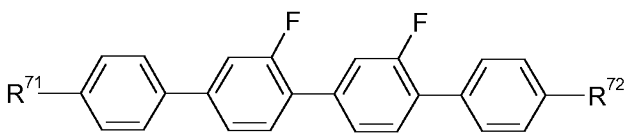
VII-2a

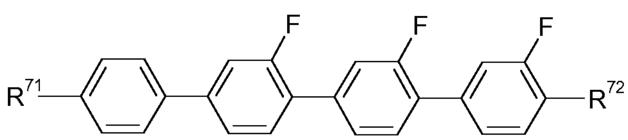
VII-2b

in which

$R^{71}$ has the meaning indicated above and preferably denotes $C_nH_{2n+1}$ or $CH_2=CH-(CH_2)_Z$, and

$R^{72}$ has the meaning indicated above and preferably denotes $C_mH_{2m+1}$ or $O-C_mH_{2m+1}$ or $(CH_2)_Z-CH=CH_2$, and

in which

n and m, independently of one another, denote an integer in the range from 0 to 15, preferably in the range from 1 to 7 and particularly preferably 1 to 5, and

z denotes 0, 1, 2, 3 or 4, preferably 0 or 2.

The preferred combinations of ($R^{71}$ and $R^{72}$) here are, in particular, ($C_nH_{2n+1}$ and $C_mH_{2m+1}$) and ($C_nH_{2n+1}$ and $O-C_mH_{2m+1}$), particularly preferably ($C_nH_{2n+1}$ and $C_mH_{2m+1}$).

The compounds of the formula VII-3 are preferably compounds of the formula VII-3a:

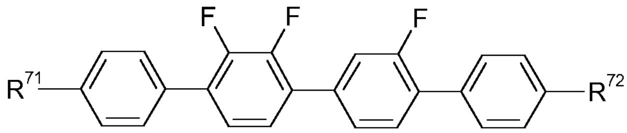

VII-3a

in which

$R^{71}$ has the meaning indicated above and preferably denotes $C_nH_{2n+1}$ or $CH_2=CH-(CH_2)_Z$, and

$R^{72}$ has the meaning indicated above and preferably denotes $C_mH_{2m+1}$ or $O-C_mH_{2m+1}$ or $(CH_2)_Z-CH=CH_2$, and in which

n and m, independently of one another, denote an integer in the range from 0 to 15, preferably in the range from 1 to 7 and particularly preferably 1 to 5, and

z denotes 0, 1, 2, 3 or 4, preferably 0 or 2.

The preferred combinations of ($R^{71}$ and $R^{72}$) here are, in particular, ($C_nH_{2n+1}$ and $C_mH_{2m+1}$) and ($C_nH_{2n+1}$ and $O-C_mH_{2m+1}$), particularly preferably ($C_nH_{2n+1}$ and $C_mH_{2m+1}$).

The compounds of the formula VII-4 are preferably compounds of the formula VII-4a:

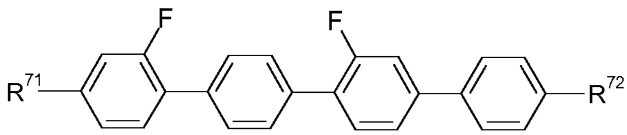

VII-4a

in which

$R^{71}$ has the meaning indicated above and preferably denotes $C_nH_{2n+1}$ or $CH_2=CH-(CH_2)_Z$, and

$R^{72}$ has the meaning indicated above and preferably denotes $C_mH_{2m+1}$ or $O-C_mH_{2m+1}$ or $(CH_2)_Z-CH=CH_2$, and in which

n and m, independently of one another, denote an integer in the range from 0 to 15, preferably in the range from 1 to 7 and particularly preferably 1 to 5, and

z denotes 0, 1, 2, 3 or 4, preferably 0 or 2.

The preferred combinations of ($R^{71}$ and $R^{72}$) here are, in particular, ($C_nH_{2n+1}$ and $C_mH_{2m+1}$) and ($C_nH_{2n+1}$ and $O-C_mH_{2m+1}$), particularly preferably ($C_nH_{2n+1}$ and $C_mH_{2m+1}$).

The compounds of the formula VII-5 are preferably selected from the group of the compounds of the formulae VII-5a and VII-5b, more preferably of the formula VII-5a:

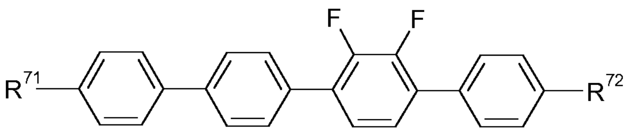

VII-5a

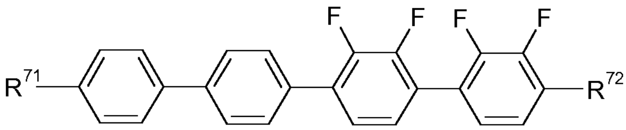

VII-5b

in which

| | |
|---|---|
| $R^{71}$ | has the meaning indicated above and preferably denotes $C_nH_{2n+1}$ or $CH_2=CH-(CH_2)_Z$, and |
| $R^{72}$ | has the meaning indicated above and preferably denotes $C_mH_{2m+1}$ or $O-C_mH_{2m+1}$ or $(CH_2)_Z-CH=CH_2$, and in which |
| n and m, | independently of one another, denote an integer in the range from 0 to 15, preferably in the range from 1 to 7 and particularly preferably 1 to 5, and |
| z | denotes 0, 1, 2, 3 or 4, preferably 0 or 2. |

The preferred combinations of ($R^{71}$ and $R^{72}$) here are, in particular, ($C_nH_{2n+1}$ and $C_mH_{2m+1}$) and ($C_nH_{2n+1}$ and $O-C_mH_{2m+1}$), particularly preferably ($C_nH_{2n+1}$ and $C_mH_{2m+1}$).

The compounds of the formula VII-6 are preferably selected from the group of the compounds of the formulae VII-6a and VII-6b:

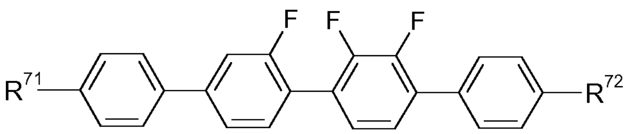

VII-6a

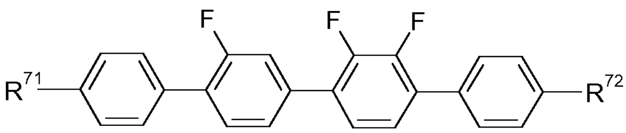

VII-6b

in which

| | |
|---|---|
| $R^{71}$ | has the meaning indicated above and preferably denotes $C_nH_{2n+1}$ or $CH_2=CH-(CH_2)_Z$, and |
| $R^{72}$ | has the meaning indicated above and preferably denotes $C_mH_{2m+1}$ or $O-C_mH_{2m+1}$ or $(CH_2)_Z-CH=CH_2$, and in which |
| n and m, | independently of one another, denote an integer in the range from 0 to 15, preferably in the range from 1 to 7 and particularly preferably 1 to 5, and |
| z | denotes 0, 1, 2, 3 or 4, preferably 0 or 2. |

The preferred combinations of ($R^{71}$ and $R^{72}$) here are, in particular, ($C_nH_{2n+1}$ and $C_mH_{2m+1}$) and ($C_nH_{2n+1}$ and $O-C_mH_{2m+1}$), particularly preferably ($C_nH_{2n+1}$ and $C_mH_{2m+1}$).

The compounds of the formula VIII are preferably selected from the group of the compounds of the formulae VIII-1 to VIII-3, more preferably these compounds of the formula VIII predominantly consist, even more preferably essentially consist and very particularly preferably completely consist thereof:

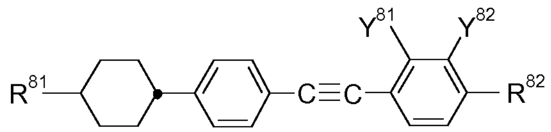

VIII-1

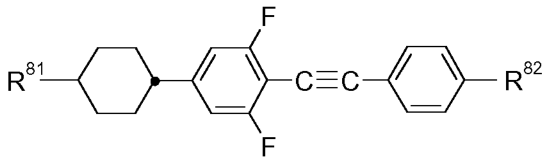

VIII-2

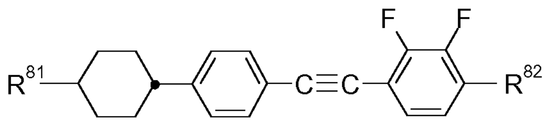

VIII-3

in which one of

| | |
|---|---|
| $Y^{81}$ and $Y^{82}$ | denotes H and the other denotes H or F, and |
| $R^{81}$ | has the meaning indicated above and preferably denotes $C_nH_{2n+1}$ or $CH_2$=CH-$(CH_2)_Z$, and |
| $R^{82}$ | has the meaning indicated above and preferably denotes $C_mH_{2m+1}$ or O-$C_mH_{2m+1}$ or $(CH_2)_Z$-CH=$CH_2$, and in which |
| n and m, | independently of one another, denote an integer in the range from 0 to 15, preferably in the range from 1 to 7 and particularly preferably 1 to 5, and |
| z | denotes 0, 1, 2, 3 or 4, preferably 0 or 2. |

The preferred combinations of ($R^{81}$ and $R^{82}$) here are, in particular, ($C_nH_{2n+1}$ and $C_mH_{2m+1}$) and ($C_nH_{2n+1}$ and O-$C_mH_{2m+1}$), particularly preferably ($C_nH_{2n+1}$ and $C_mH_{2m+1}$).

The compounds of the formula VIII-1 are preferably selected from the group of the compounds of the formulae VIII-1 a to VIII-1 c:

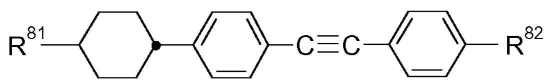

VIII-1a

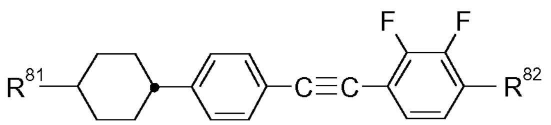

VIII-1b

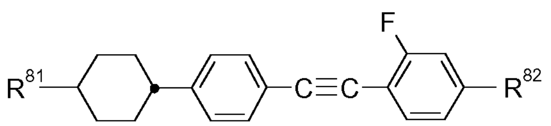

VIII-1c

in which

| | |
|---|---|
| $R^{81}$ | has the meaning indicated above and preferably denotes $C_nH_{2n+1}$ or $CH_2$=CH-$(CH_2)_Z$, and |
| $R^{82}$ | has the meaning indicated above and preferably denotes $C_mH_{2m+1}$ or O-$C_mH_{2m+1}$ or $(CH_2)_Z$-CH=$CH_2$, and in which |

n and m, independently of one another, denote an integer in the range from 0 to 15, preferably in the range from 1 to 7 and particularly preferably 1 to 5, and

z denotes 0, 1, 2, 3 or 4, preferably 0 or 2.

The preferred combinations of ($R^{81}$ and $R^{82}$) here are, in particular, ($C_nH_{2n+1}$ and $C_mH_{2m+1}$) and ($C_nH_{2n+1}$ and $O-C_mH_{2m+1}$), particularly preferably ($C_nH_{2n+1}$ and $C_mH_{2m+1}$).

The compounds of the formula VIII-2 are preferably compounds of the formula VIII-2a:

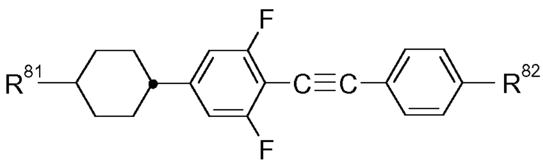

VIII-2a

in which

$R^{81}$ has the meaning indicated above and preferably denotes $C_nH_{2n+1}$ or $CH_2=CH-(CH_2)_Z$, and

$R^{82}$ has the meaning indicated above and preferably denotes $C_mH_{2m+1}$ or $O-C_mH_{2m+1}$ or $(CH_2)_Z-CH=CH_2$, and in which

n and m, independently of one another, denote an integer in the range from 0 to 15, preferably in the range from 1 to 7 and particularly preferably 1 to 5, and

z denotes 0, 1, 2, 3 or 4, preferably 0 or 2.

The preferred combinations of ($R^{81}$ and $R^{82}$) here are, in particular, ($C_nH_{2n+1}$ and $C_mH_{2m+1}$), ($C_nH_{2n+1}$ and $O-C_mH_{2m+1}$) and ($CH_2=CH-(CH_2)_Z$ and $C_mH_{2m+1}$), particularly preferably ($C_nH_{2n+1}$ and $C_mH_{2m+1}$).

The compounds of the formula VIII-3 are preferably compounds of the formula VIII-3a:

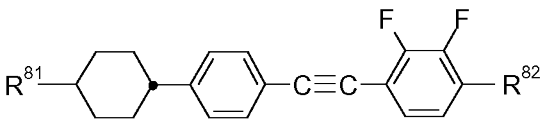

VIII-3a

in which

$R^{81}$ has the meaning indicated above and preferably denotes $C_nH_{2n+1}$ or $CH_2=CH-(CH_2)_Z$, and

$R^{82}$ has the meaning indicated above and preferably denotes $C_mH_{2m+1}$ or $O-C_mH_{2m+1}$ or $(CH_2)_Z-CH=CH_2$, and in which

n and m, independently of one another, denote an integer in the range from 0 to 15, preferably in the range from 1 to 7 and particularly preferably 1 to 5, and

z denotes 0, 1, 2, 3 or 4, preferably 0 or 2.

The preferred combinations of ($R^{81}$ and $R^{82}$) here are, in particular, ($C_nH_{2n+1}$ and $C_mH_{2m+1}$) and ($C_nH_{2n+1}$ and $O-C_mH_{2m+1}$).

The compounds of the formula IX are preferably selected from the group of the compounds of the formulae IX-1 to IX-3:

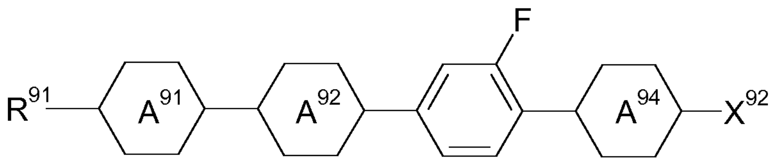

IX-1

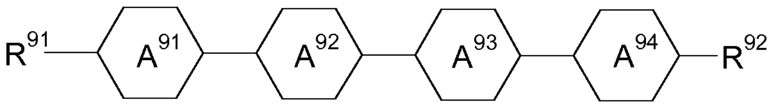

IX-2

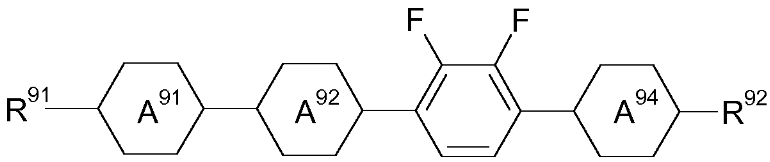

IX-3

in which the parameters have the respective meaning indicated above under formula IX and preferably one of

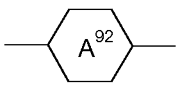

to

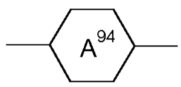

denotes

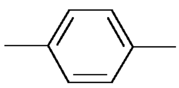

,

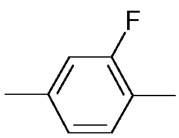

,

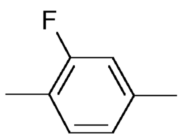

,

and
in which

$R^{91}$ has the meaning indicated above and preferably denotes $C_nH_{2n+1}$ or $CH_2$=CH-$(CH_2)_Z$, and

$R^{92}$ has the meaning indicated above and preferably denotes $C_mH_{2m+1}$ or O-$C_mH_{2m+1}$ or $(CH_2)_Z$-CH=$CH_2$, and in which

n and m, independently of one another, denote an integer in the range from 0 to 15, preferably in the range from 1 to 7 and particularly preferably 1 to 5, and

z denotes 0, 1, 2, 3 or 4, preferably 0 or 2.

The preferred combinations of ($R^{91}$ and $R^{92}$) here are, in particular, ($C_nH_{2n+1}$ and $C_mH_{2m+1}$) and ($C_nH_{2n+1}$ and O-$C_mH_{2m+1}$).

The compounds of the formula IX-1 are preferably selected from the group of the compounds of the formulae IX-1a to IX-1e:

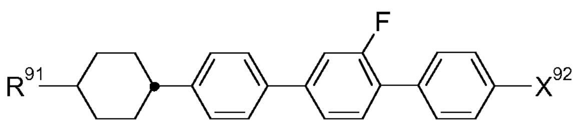

IX-1a

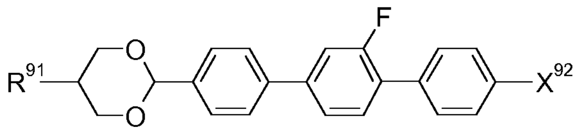

IX-1b

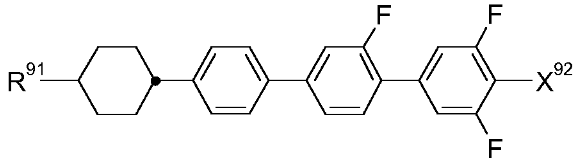

IX-1c

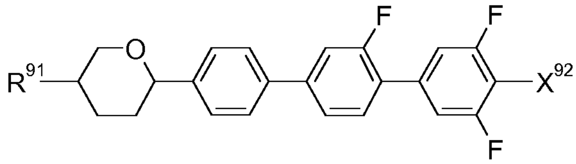

IX-1d

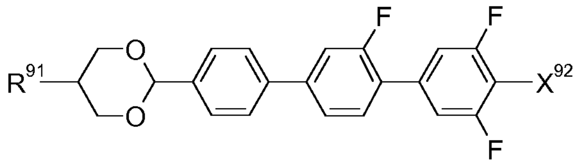

IX-1e

in which the parameters have the meaning given above and preferably

$R^{91}$ has the meaning indicated above and preferably denotes $C_nH_{2n+1}$, and

n denotes an integer in the range from 0 to 15, preferably in the range from 1 to 7 and particularly preferably 1 to 5, and

$X^{92}$ preferably denotes F or Cl.

The compounds of the formula IX-2 are preferably selected from the group of the compounds of the formulae IX-2a and IX-2b:

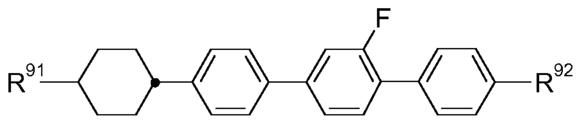

IX-2a

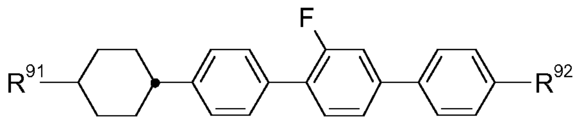

IX-2b

in which

$R^{91}$ has the meaning indicated above and preferably denotes $C_nH_{2n+1}$ or $CH_2$=CH-$(CH_2)_Z$, and

$R^{92}$ has the meaning indicated above and preferably denotes $C_mH_{2m+1}$ or O-$C_mH_{2m+1}$ or $(CH_2)_Z$-CH=$CH_2$, and in which

n and m, independently of one another, denote an integer in the range from 0 to 15, preferably in the range from 1 to 7 and particularly preferably 1 to 5, and

z denotes 0, 1, 2, 3 or 4, preferably 0 or 2.

The preferred combination of ($R^{91}$ and $R^{92}$) here is, in particular, ($C_nH_{2n+1}$ and $C_mH_{2m+1}$).

The compounds of the formula IX-3 are preferably compounds of the formulae IX-3a and IX-3b:

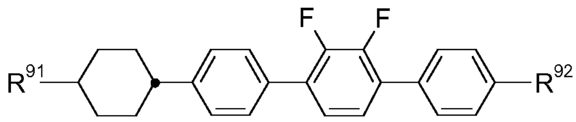

IX-3a

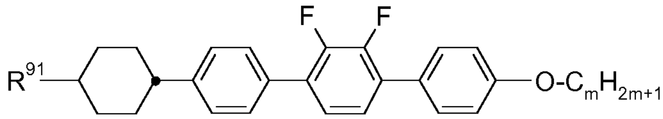

IX-3b

in which

$R^{91}$ has the meaning indicated above and preferably denotes $C_nH_{2n+1}$ or $CH_2$=CH-$(CH_2)_Z$, and

$R^{92}$ has the meaning indicated above and preferably denotes $C_mH_{2m+1}$ or O-$C_mH_{2m+1}$ or $(CH_2)_Z$-CH=$CH_2$, and in which

n and m, independently of one another, denote an integer in the range from 0 to 15, preferably in the range from 1 to 7 and particularly preferably 1 to 5, and

z denotes 0, 1, 2, 3 or 4, preferably 0 or 2.

The preferred combinations of ($R^{91}$ and $R^{92}$) here are, in particular, ($C_nH_{2n+1}$ and $C_mH_{2m+1}$) and ($C_nH_{2n+1}$ and O-$C_mH_{2m+1}$), particularly preferably ($C_nH_{2n+1}$ and O-$C_mH_{2m+1}$).

The liquid-crystal media according to the invention are eminently suitable for use in components for high-frequency technology or for the microwave region and/or millimetre wave region of the electromagnetic spectrum. The present invention relates to this use of the media and to these components.

The present invention also relates to the use of the liquid-crystalline media in electro-optical displays and in particular in components for high-frequency technology.

The invention further relates to a component for high-frequency technology, especially components for high-frequency devices, in particular antennas, especially for the gigahertz region and the terahertz region, which are operated in the microwave or millimetre wave region, containing a liquid-crystal medium according to the present invention. The invention also relates to a microwave antenna array comprising such a component. Preferred components are phase shifters, varactors, wireless and radio wave antenna arrays, matching circuit adaptive filters and others and are employed for the phase shifting of microwaves for tuneable phased-array antennas or for tuneable cells of microwave antennas based on "reflectarrays".

The invention further relates to a process for tuning a microwave antenna array wherein a component for high-frequency technology according to the invention is electrically addressed.

The liquid-crystalline media in accordance with the present invention preferably comprise 10% or less, preferably 5% or less, particularly preferably 2% or less, very particularly preferably 1% or less, and in particular absolutely no compound having only two or fewer five- and/or six-membered rings.

The definitions of the abbreviations (acronyms) used for the compounds in the present application are indicated below in Table D or are evident from Tables A to C.

According to the present invention, the liquid-crystal medium comprises one or more compounds of formula Q and one or more compounds of formula T.

According to preferred embodiments of the present invention, the liquid-crystalline medium comprises

- one or more compounds of formula Q and one or more compounds of formula T,
- one or more compounds of formula Q and one or more compounds of formula U
- one or more compounds of formula Q and one or more compounds of formula I
- one or more compounds of formula Q, one or more compounds of formula T, and one or more compounds of formula U,
- one or more compounds of formula Q, one or more compounds of formula T, and one or more compounds of formula I,
- one or more compounds of formula Q, one or more compounds of formula U, and one or more compounds of formula I,

- one or more compounds of formula Q, one or more compounds of formula T, one or more compounds of formula U and one or more compounds of formula I
- one or more compounds of formula Q, one or more compounds of formula T, and one or more compounds of formula V,
- one or more compounds of formula Q, one or more compounds of formula T and one or more compounds of formula II,
- one or more compounds of formula Q, one or more compounds of formula T, and one or more compounds of formulae V and U.

According to the present invention, the liquid-crystal medium comprises one or more compounds of the formula Q and one or more compounds of the formula T. The medium preferably comprises compounds of formula Q-4 and/or Q5, more preferably Q-5, in combination with one or more compounds of formulae T-1, T-2, T-3, T-4 and/or T-5, preferably T-1 and/or T-3, particularly preferably T-1 and T-3. The medium optionally comprises additionally one or more compounds of formula II, preferably of formula II-1.

The liquid-crystal medium preferably comprises one or more compounds selected from the compounds of the formulae I-1a-1 to I-1a-12, particularly preferably of the formula I-1a-2; very particularly preferably one or more compounds of the formula I-1a-2 and one or more compounds selected from the group of the compounds of the formula I-1a-1 and formulae I-1a-3 to I-1a-12, and one or more compounds of the formulae I-1b-1 to I-1b-12 and/or I-2 and/or I-3 and/or I-4.

In a further preferred embodiment of the present invention, the liquid-crystal medium comprises one or more compounds selected from the group of the compounds of the formulae I-1b-1 to I-1b-12, particularly preferably selected from the group of the compounds of the formulae I-1b-5 and/or I-1b-7 and/or I-1b-8 and/or I-1b-9 and/or I-1b-10, and one or more compounds selected from the group of the compounds of the formulae I-1a-1 to I-1a-12, preferably of the formula I-1a-2, and/or one or more compounds of the formulae I-2 and/or I-3 and/or I-4.

In a further preferred embodiment of the present invention the liquid-crystal medium comprises one or more compounds of the formula I-2 and one or more compounds of the formula I-1, preferably of the formula I-1a, preferably of the formulae I-1a-2, and/or I-1b, and/or one or more compounds of the formulae I-3 and/or I-4.

In a further preferred embodiment of the present invention, the liquid-crystal medium comprises one or more compounds of the formula I-3 and one or more compounds of the formula I-1, preferably of the formula I-1a, preferably of the formula I-1a-2, and/or I-1b, and/or one or more compounds of the formulae I-2 and/or I-4.

In a further preferred embodiment of the present invention, the liquid-crystal medium comprises one or more compounds of the formula I-4 and one or more compounds of the formula I-1, preferably of the formula I-1a, preferably of the formula I-1a-2, and/or I-1b, and/or one or more compounds of the formulae I-2 and/or I-3.

In a preferred embodiment of the present invention, the liquid crystal medium comprises one or more compounds of the formula V, preferably of the sub-formulae V-2, particularly preferably of the formula V-2a.

In a preferred embodiment, the liquid crystal medium comprises one or more compounds selected from the group of compounds PGP-2-3, PGP-2-4, PGP-2-5, PGP-2-2V and PGP-2-2V1.

In a preferred embodiment of the present invention, the liquid crystal medium comprises one or more compounds of the formula U, preferably selected from the group of the sub-formulae U-1a, U-2b, U-2c, U-3b, and U-3c, particularly preferably of the formula U-1a.

The liquid-crystalline media in accordance with the present invention preferably comprise, more preferably predominantly consist of, even more preferably essentially consist of and very particularly preferably completely consist of compounds selected from the group of the compounds of the formulae Q, T, I, V and U, preferably of Q, T, V and U, or of Q, T, and U.

In a further preferred embodiment of the present invention, the liquid-crystalline media comprise one or more compounds of the formula V and one or more compounds of the formula VII.

The liquid-crystalline media in accordance with the present invention likewise preferably comprise one or more compounds of the formula V, one or more compounds of the formula U and one or more compounds of the formula VIII.

In a preferred embodiment, the liquid crystalline media according to the present invention comprise one or more compounds of formula Q in a total concentration of 1% to 15%, more preferably 2% to 12%, even more preferably 3% to 10% and very preferably 4% to 8%, of the mixture as a whole.

In a preferred embodiment, the liquid crystalline media according to the present invention comprise one or more compounds of formula T in a total concentration of 20% to 70%, more preferably 25% to 60%, and very preferably 30% to 45% of the mixture as a whole.

In a preferred embodiment, the liquid crystalline media according to the present invention comprise one or more compounds of formula I in a total concentration of 10% to 90%, more preferably 20% to 80%, even more preferably 30% to 70% and very preferably 40% to 60%, of the mixture as a whole.

If present in the medium, the compounds of the formula IV are preferably used in a total concentration of 1% to 20%, more preferably 2% to 15%, even more preferably 3% to 12% and very preferably 5% to 10%, of the mixture as a whole.

If the liquid-crystalline media in accordance with the present application comprise one or more compounds of

the formula V, the concentration of these compounds is preferably in total 3 to 25%, preferably 7 to 20% and particularly preferably 10 to 15%.

If the liquid-crystalline media in accordance with the present application comprise one or more compounds of the formula U, the concentration of these compounds is preferably in total 15 to 75%, preferably 30 to 60% and particularly preferably 45 to 55%.

If the liquid-crystalline media in accordance with the present application comprise one or more compounds of the formula VII, the concentration of these compounds is preferably in total 4 to 25%, preferably 8 to 20% and particularly preferably 10 to 14%.

If the liquid-crystalline media in accordance with the present application comprise one or more compounds of the formula VIII, the concentration of these compounds is preferably in total 15 to 35%, preferably 18 to 30% and particularly preferably 22 to 26%.

If the liquid-crystalline media in accordance with the present application comprise one or more compounds of the formula IX, the concentration of these compounds is preferably in total 5 to 25%, preferably 10 to 20% and particularly preferably 13 to 17%.

In this application, comprise in connection with compositions means that the medium comprises the compound or compounds indicated, preferably in a total concentration of 10% or more and very preferably 20% or more.

In this context, predominantly consist of means that the medium comprises 55% or more, preferably 60% or more and very preferably 70% or more, of the compound or compounds indicated.

In this context, essentially consist of means that the medium comprises 80% or more, preferably 90% or more and very preferably 95% or more, of the compound or compounds indicated.

In this context, completely consist of means that the medium comprises 98% or more, preferably 99% or more and very preferably 100.0% of the compound or compounds indicated.

Other mesogenic compounds which are not explicitly mentioned above can optionally and advantageously also be used in the media in accordance with the present invention. Such compounds are known to the person skilled in the art.

The liquid-crystal media in accordance with the present invention preferably have a clearing point of 90°C or more, more preferably 100°C or more, even more preferably 120°C or more, particularly preferably 150°C or more and very particularly preferably 170°C or more.

The liquid-crystal media in accordance with the present invention preferably have a clearing point of 160°C or less, more preferably 140°C or less, particularly preferably 120°C or less, and very particularly preferably 100°C or less.

The nematic phase of the media according to the invention preferably extends at least from 0°C or less to 90°C or more. It is advantageous for the media according to the invention to exhibit even broader nematic phase ranges, preferably at least from -10°C or less to 120°C or more, very preferably at least from -20°C or less to 140°C or more and in particular at least from -30°C or less to 150°C or more, very particularly preferably at least from -40°C or less to 170°C or more.

The expression "to have a nematic phase" here means on the one hand that no smectic phase and no crystallisation are observed at low temperatures at the corresponding temperature and on the other hand that no clearing occurs on heating from the nematic phase. The investigation at low temperatures is carried out in a flow viscometer at the corresponding temperature and checked by storage in test cells having a layer thickness of 5 μm for at least 100 hours. At high temperatures, the clearing point is measured in capillaries by conventional methods.

In a preferred embodiment of the present invention, the liquid-crystal media employed have positive dielectric anisotropy ($\Delta\varepsilon$). The $\Delta\varepsilon$ of the liquid-crystal medium in accordance with the invention, at 1 kHz and 20°C, is preferably 1 or more, more preferably 2 or more and very preferably 5 or more.

In a preferred embodiment, the $\Delta\varepsilon$ is 1.8 or more and 15.0 or less, more preferably between 2.0 or more and 12.0 or less, particularly preferably between 3.0 or more and 11.0 or less and very particularly preferably between 3.5 or more and 10.0 or less.

The $\Delta n$ of the liquid-crystal media in accordance with the present invention, at 589 nm ($Na^D$) and 20°C, is preferably in the range from 0.200 or more to 0.90 or less, more preferably in the range from 0.250 or more to 0.90 or less, even more preferably in the range from 0.300 or more to 0.85 or less and very particularly preferably in the range from 0.350 or more to 0.800 or less.

The $\Delta n$ of the liquid-crystal media in accordance with the present invention, at 589 nm ($Na^D$) and 20°C, is preferably 0.350 or less, more preferably 0.300 or less, even more preferably 0.250 or less and particularly preferably 0.200 or less.

The $\Delta n$ of the liquid-crystal media in accordance with the present invention, at 589 nm ($Na^D$) and 20°C, is preferably 0.900 or more, more preferably 0.850 or more, and particularly preferably 0.800 or more.

Furthermore, the liquid-crystal media according to the invention are characterised by high anisotropy values in the microwave range. The birefringence at about 8.3 GHz is, for example, preferably 0.14 or more, particularly preferably 0.15 or more, particularly preferably 0.20 or more, particularly preferably 0.25 or more and very particularly preferably 0.30 or more. In addition, the birefringence is preferably 0.80 or less.

In the present application, the expression dielectrically positive describes compounds where $\Delta\varepsilon > 3.0$, dielectrically neutral describes those where $-1.5 \leq \Delta\varepsilon \leq 3.0$ and dielectrically negative describes those where $\Delta\varepsilon < -1.5$. $\Delta\varepsilon$ is determined at a frequency of 1 kHz and at 20°C. The dielectric anisotropy of the respective compound is determined from the results of a solution of 10% of the respective individual compound in a nematic host mixture. If the solubility of the respective compound in the host mixture is less than 10%, the concentration is reduced to 5%. The capacitances of the test mixtures are determined both in a cell having homeotropic alignment and in a cell having homogeneous alignment. The cell thickness of both types of cells is approximately 20 μm. The voltage applied is a rectangular wave having a frequency of 1 kHz and an effective value of typically 0.5 V to 1.0 V, but it is always selected to be below the capacitive threshold of the respective test mixture.

The host mixture used for dielectrically positive compounds is mixture ZLI-4792 and that used for dielectrically neutral and dielectrically negative compounds is mixture ZLI-3086, both from Merck KGaA, Germany. The absolute values of the dielectric constants of the compounds are determined from the change in the respective values of the host mixture on addition of the compounds of interest. The values are extrapolated to a concentration of the compounds of interest of 100%.

The expression threshold voltage in the present application refers to the optical threshold and is quoted for 10% relative contrast ($V_{10}$), and the expression saturation voltage refers to the optical saturation and is quoted for 90% relative contrast ($V_{90}$), in both cases unless expressly stated otherwise. The capacitive threshold voltage ($V_0$), also called the Freedericks threshold ($V_{Fr}$), is only used if expressly mentioned.

The parameter ranges indicated in this application all include the limit values, unless expressly stated otherwise.

The different upper and lower limit values indicated for various ranges of properties in combination with one another give rise to additional preferred ranges.

Throughout this application, the following conditions and definitions apply, unless expressly stated otherwise. All concentrations are quoted in per cent by weight and relate to the respective mixture as a whole, all temperatures are quoted in degrees Celsius and all temperature differences are quoted in differential degrees. All physical properties are determined in accordance with "Merck Liquid Crystals, Physical Properties of Liquid Crystals", Status Nov. 1997, Merck KGaA, Germany, and are quoted for a temperature of 20°C, unless expressly stated otherwise. The optical anisotropy ($\Delta n$) is determined at a wavelength of 589.3 nm. The dielectric anisotropy ($\Delta\varepsilon$) is determined at a frequency of 1 kHz. The threshold voltages, as well as all other electro-optical properties, are determined using test cells produced at Merck KGaA, Germany. The test cells for the determination of $\Delta\varepsilon$ have a cell thickness of approximately 20 μm. The electrode is a circular ITO electrode having an area of 1.13 $cm^2$ and a guard ring. The orientation layers are SE-1211 from Nissan Chemicals, Japan, for homeotropic orientation ($\varepsilon\|$) and polyimide AL-1054 from Japan Synthetic Rubber, Japan, for homogeneous orientation ($\varepsilon_\perp$). The capacitances are determined using a Solatron 1260 frequency response analyser using a sine wave with a voltage of 0.3 $V_{rms}$.

Where experimental values are not available this is indicated by the abbreviation "N/A".

The light used in the electro-optical measurements is white light. A set-up using a commercially available DMS instrument from Autronic-Melchers, Germany, is used here. The characteristic voltages have been determined under perpendicular observation. The threshold ($V_{10}$), mid-grey ($V_{50}$) and saturation ($V_{90}$) voltages have been determined for 10%, 50% and 90% relative contrast, respectively.

The liquid-crystalline media are investigated with respect to their properties in the microwave frequency region as described in A. Penirschke et al., "Cavity Perturbation Method for Characterisation of Liquid Crystals up to 35GHz", 34th European Microwave Conference - Amsterdam, pp. 545-548. Compare in this respect also A. Gaebler et al., "Direct Simulation of Material Permittivites ...", 12MTC 2009 - International Instrumentation and Measurement Technology Conference, Singapore, 2009 (IEEE), pp. 463-467, and DE 10 2004 029 429 A, in which a measurement method is likewise described in detail.

The liquid crystal is introduced into a cylindrical polytetrafluoroethylene (PTFE) or quartz capillary. The capillary has an internal radius of 180 μm and an external radius of 350 μm. The effective length is 2.0 cm. The filled capillary is introduced into the centre of the cylindrical cavity with a resonance frequency of 19 GHz. This cavity has a length of 11.5 mm and a radius of 6 mm. The input signal (source) is then applied, and the result of the output signal is recorded using a commercial vector network analyser. For other frequencies, the dimensions of the cavity are adapted correspondingly.

The change in the resonance frequency and the Q factor between the measurement with the capillary filled with the liquid crystal and the measurement without the capillary filled with the liquid crystal is used to determine the dielectric constant and the loss angle at the corresponding target frequency by means of equations 10 and 11 of the above-mentioned publication A. Penirschke et al., "Cavity Perturbation Method for Characterisation of Liquid Crystals up to 35GHz", 34th European Microwave Conference - Amsterdam, pp. 545-548, as described therein.

The values for the components of the properties perpendicular and parallel to the director of the liquid crystal are obtained by alignment of the liquid crystal in a magnetic field. To this end, the magnetic field of a permanent magnet is used. The strength of the magnetic field is 0.35 tesla. The alignment of the magnet is set correspondingly and then

rotated correspondingly through 90°.

Preferred components are phase shifters, varactors, wireless and radio wave antenna arrays, matching circuit adaptive filters and others.

In the present application, the term compounds is taken to mean both one compound and a plurality of compounds, unless expressly stated otherwise.

The dielectric anisotropy in the microwave region is defined as

$$\Delta\varepsilon_r \equiv (\varepsilon_{r,||} - \varepsilon_{r,\perp}), \text{ while } \varepsilon_{ave.} \text{ is } (\varepsilon_{||} + 2\,\varepsilon_{\perp}) / 3.$$

The tunability ($\tau$) is defined as

$$\tau \equiv (\Delta\varepsilon_r / \varepsilon_{r,||}) .$$

The material quality ($\eta$) is defined as

$$\eta \equiv (\tau / \tan\delta_{\varepsilon\ r,max.}) ,$$

where
the maximum dielectric loss is

$$\tan\delta_{\varepsilon\ r,max.} \equiv \max. \{ \tan\delta_{\varepsilon\ r,\perp}; \tan\delta_{\varepsilon\ r,||} \} .$$

The material quality ($\eta$) of the preferred liquid-crystal materials is 6 or more, preferably 8 or more, preferably 10 or more, preferably 15 or more, preferably 17 or more, preferably 20 or more, particularly preferably 25 or more, very particularly preferably 30 and in particular 40 or more or even 50 or more.

The Figure of Merit (FoM) $\eta$($\mu$-waves)/tan($\delta$) of the preferred liquid-crystal materials is 5 or more, preferably 10 or more, and particularly preferably 20 or more.

In the corresponding components, the preferred liquid-crystal materials have phase shifter qualities of 15°/dB or more, preferably 20°/dB or more, preferably 30°/dB or more, preferably 40°/dB or more, preferably 50°/dB or more, particularly preferably 80°/dB or more and very particularly preferably 100°/dB or more.

In some embodiments, however, it is also possible to use liquid crystals having a negative value of the dielectric anisotropy.

The liquid crystals employed are either individual substances or mixtures. They preferably have a nematic phase.

The term "alkyl" preferably encompasses straight-chain and branched alkyl groups, as well as cycloalkyl groups, each having 1 to 15 carbon atoms, in particular the straight-chain groups methyl, ethyl, propyl, butyl, pentyl, hexyl and heptyl, as well as cyclopropyl and cyclohexyl. Groups having 2 to 10 carbon atoms are generally preferred.

The term "alkenyl" preferably encompasses straight-chain and branched alkenyl groups having 2 to 15 carbon atoms, in particular the straight-chain groups. Particularly preferred alkenyl groups are $C_2$- to $C_7$-1E-alkenyl, $C_4$- to $C_7$-3E-alkenyl, $C_5$- to $C_7$-4-alkenyl, $C_6$- to $C_7$-5-alkenyl and $C_7$-6-alkenyl, in particular $C_2$- to $C_7$-1E-alkenyl, $C_4$- to $C_7$-3E-alkenyl and $C_5$- to $C_7$-4-alkenyl. Examples of further preferred alkenyl groups are vinyl, 1E-propenyl, 1E-butenyl, 1E-pentenyl, 1E-hexenyl, 1E-heptenyl, 3-butenyl, 3E-pentenyl, 3E-hexenyl, 3E-heptenyl, 4-pentenyl, 4Z-hexenyl, 4E-hexenyl, 4Z-heptenyl, 5-hexenyl, 6-heptenyl and the like. Groups having up to 5 carbon atoms are generally preferred.

The term "fluoroalkyl" preferably encompasses straight-chain groups having a terminal fluorine, i.e. fluoromethyl, 2-fluoroethyl, 3-fluoropropyl, 4-fluorobutyl, 5-fluoropentyl, 6-fluorohexyl and 7-fluoroheptyl. However, other positions of the fluorine are not excluded.

The term "oxaalkyl" or "alkoxyalkyl" preferably encompasses straight-chain radicals of the formula $C_nH_{2n+1}$-O-$(CH_2)_m$, in which n and m each, independently of one another, denote an integer from 1 to 10. Preferably, n here is 1 and m is 1 to 6.

Compounds containing a vinyl end group and compounds containing a methyl end group have low rotational viscosity.

In the present application, both high-frequency technology and hyper-frequency technology denote applications having frequencies in the range from 1 MHz to 100 THz, preferably from 1 GHz to 30 THz, more preferably 2 GHz to 10 THz, particularly preferably from about 5 GHz to 5 THz.

The liquid-crystal media in accordance with the present invention may comprise further additives and chiral

dopants in the usual concentrations. The total concentration of these further constituents is in the range from 0% to 10%, preferably 0.1% to 6%, based on the mixture as a whole. The concentrations of the individual compounds used are each preferably in the range from 0.1% to 3%. The concentration of these and similar additives is not taken into consideration when quoting the values and concentration ranges of the liquid-crystal compounds of the liquid-crystal media in this application.

The liquid-crystal media according to the invention consist of a plurality of compounds, preferably 3 to 30, more preferably 4 to 20 and very preferably 4 to 15 compounds. These compounds are mixed in a conventional manner. In general, the desired amount of the compound used in the smaller amount is dissolved in the compound used in the larger amount. If the temperature is above the clearing point of the compound used in the higher concentration, it is particularly easy to observe completion of the dissolution process. It is, however, also possible to prepare the media in other conventional ways, for example using so-called pre-mixes, which can be, for example, homologous or eutectic mixtures of compounds, or using so-called "multibottle" systems, the constituents of which are themselves ready-to-use mixtures. Hence, the invention relates to a Process for the preparation of a liquid-crystal medium where one or more compounds of formula Q and one or more compounds of formula T are mixed with one or more further compounds and/or with one or more additives.

All temperatures, such as, for example, the melting point T(C,N) or T(C,S), the transition from the smectic (S) to the nematic (N) phase T(S,N) and the clearing point T(N,I) of the liquid crystals, are quoted in degrees Celsius. All temperature differences are quoted in differential degrees.

In the present invention and especially in the following examples, the structures of the mesogenic compounds are indicated by means of abbreviations, also referred to as acronyms. In these acronyms, the chemical formulae are abbreviated as follows using Tables A to C below. All groups $C_nH_{2n+1}$, $C_mH_{2m+1}$ and $C_lH_{2l+1}$ or $C_nH_{2n-1}$, $C_mH_{2m-1}$ and $C_lH_{2l-1}$ denote straight-chain alkyl or alkenyl, preferably 1*E*-alkenyl, having n, m and l C atoms respectively, where n, m and l, independently of one another, denote an integer from 1 to 9, preferably 1 to 7, or from 2 to 9, preferably 2 to 7, respectively. $C_oH_{2o+1}$ denotes straight-chain alkyl having 1 to 7, preferably 1 to 4, C atoms, or branched alkyl having 1 to 7, preferably 1 to 4, C atoms.

Table A lists the codes used for the ring elements of the core structures of the compounds, while Table C shows the linking groups. Table C gives the meanings of the codes for the left-hand or right-hand end groups. Table D shows illustrative structures of compounds with their respective abbreviations.

**Table A: Ring elements**

| | | | |
|---|---|---|---|
| **C** | 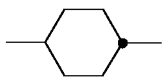 | **P** | 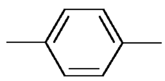 |
| **D** | 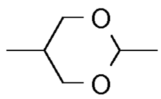 | **DI** | 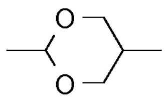 |
| **A** | 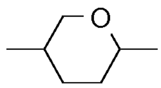 | **AI** | 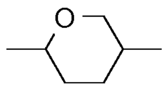 |
| **G** | 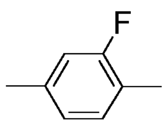 | **GI** | 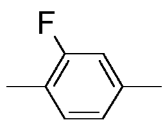 |
| **U** | 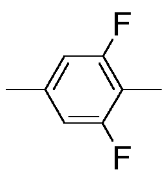 | **UI** | 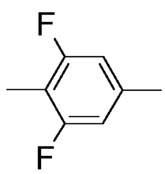 |
| **Y** | 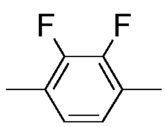 | | |

(continued)

| | | | |
|---|---|---|---|
| fX | 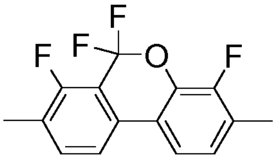 | fXI | 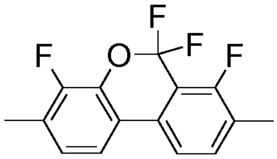 |
| M | 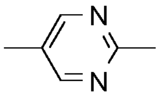 | MI | 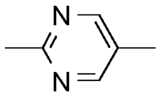 |
| N | 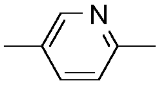 | NI | 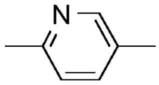 |
| fN | 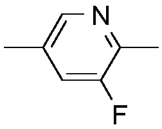 | fNI | 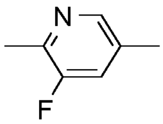 |
| dH | 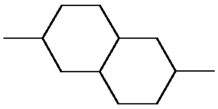 | N(2,6) | 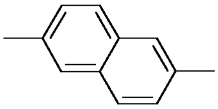 |
| N(1,4) | 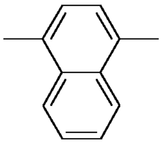 | | |
| N3f | 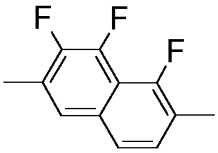 | N3fI | 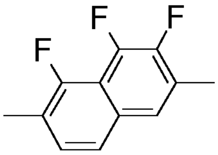 |
| tH | 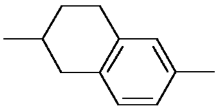 | tHI | 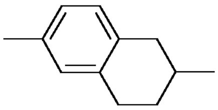 |
| tH2f | 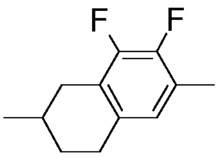 | tH2fI | 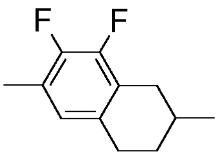 |
| K | 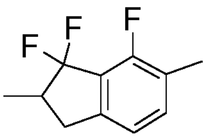 | KI | 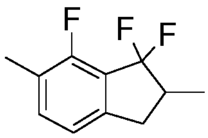 |
| L | 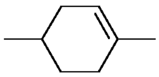 | LI | 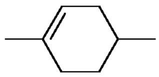 |
| F | 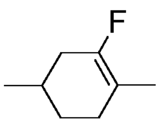 | FI | 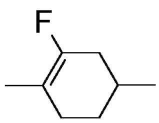 |

(continued)

P(o) 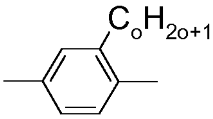

P(i3) 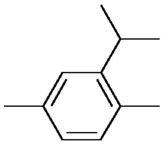

P(t4) 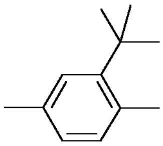

P(c3) 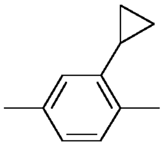

P(c4) 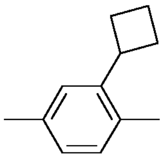

P(c5) 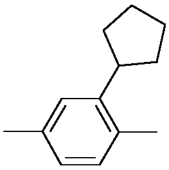

P(e5) 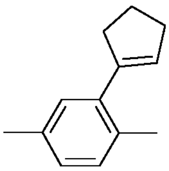

P(c6) 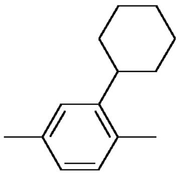

P(e6) 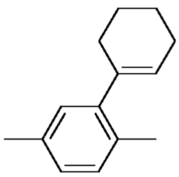

GI(o) 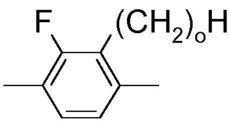

o ∈ {1;2;3;4;5;6}

PI(o) 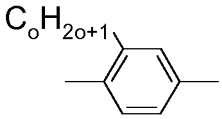

PI(c3) 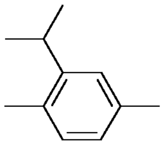

PI(t4) 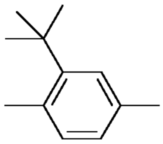

PI(c3) 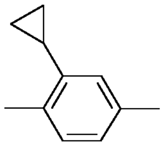

PI(c4) 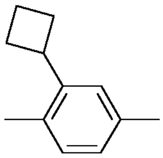

PI(c5) 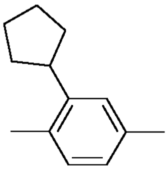

PI(e5) 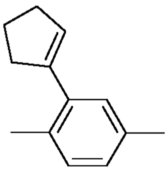

PI(c6) 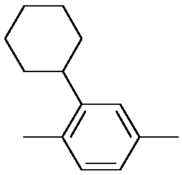

PI(e6) 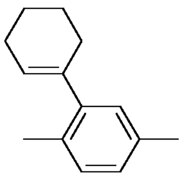

G(o) 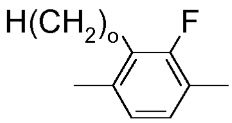

**o** ∈ {1;2;3;4;5;6}

(continued)

| | | | |
|---|---|---|---|
| **GI(i3)** | 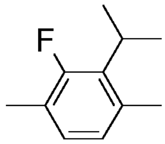 | **G(i3)** | 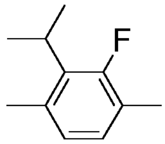 |
| **GI(t4)** | 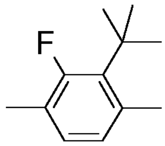 | **G(t4)** | 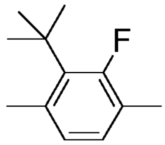 |
| **GI(c3)** | 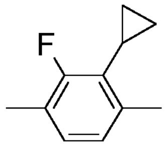 | **G(c3)** | 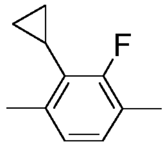 |
| **GI(c4)** | 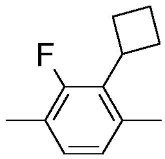 | **G(c4)** | 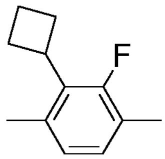 |
| **GI(c5)** | 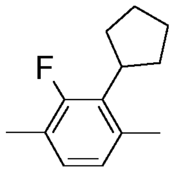 | **G(c5)** | 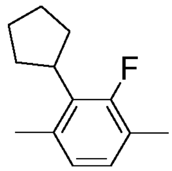 |
| **GI(e5)** | 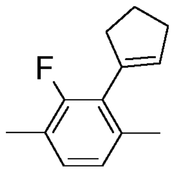 | **G(e5)** | 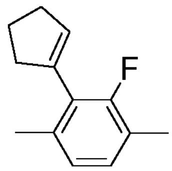 |
| **GI(c6)** | 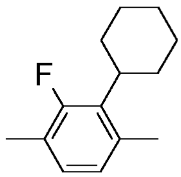 | **G(c6)** | 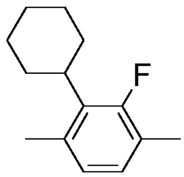 |
| **GI(e6)** | 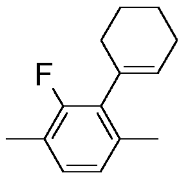 | **G(e6)** | 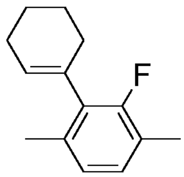 |

**Table B: Linking groups**

| | | | |
|---|---|---|---|
| **E** | $-CH_2CH_2-$ | **Z** | -CO-O- |
| **V** | -CH=CH- | **ZI** | -O-CO- |
| **X** | -CF=CH- | **O** | $-CH_2-O-$ |
| **XI** | -CH=CF- | **OI** | $-O-CH_2-$ |
| **B** | -CF=CF- | **Q** | $-CF_2-O-$ |
| **T** | -C≡C- | **QI** | $-O-CF_2-$ |
| **W** | $-CF_2CF_2-$ | | |

**Table C: End groups**

| Left-hand side | | Right-hand side | |
|---|---|---|---|
| | | **Use alone** | |
| **-n-** | $C_nH_{2n+1}$- | **-n** | -$C_nH_{2n+1}$ |
| **-nO-** | $C_nH_{2n+1}$-O- | **-nO** | -O-$C_nH_{2n+1}$ |
| **-V-** | $CH_2$=CH- | **-V** | -CH=$CH_2$ |
| **-nV-** | $C_nH_{2n+1}$-CH=CH- | **-nV** | -$C_nH_{2n}$-CH=$CH_2$ |
| **-Vn-** | $CH_2$=CH- $C_nH_{2n+1}$- | **-Vn** | -CH=CH-$C_nH_{2n+1}$ |
| **-nVm-** | $C_nH_{2n+1}$-CH=CH-$C_mH_{2m}$- | **-nVm** | -$C_nH_{2n}$-CH=CH-$C_mH_{2m+1}$ |
| **-N-** | N≡C- | **-N** | -C≡N |
| **-S-** | S=C=N- | **-S** | -N=C=S |
| **-F-** | F- | **-F** | -F |
| **-CL-** | Cl- | **-CL** | -Cl |
| **-M-** | $CFH_2$- | **-M** | -$CFH_2$ |
| **-D-** | $CF_2H$- | **-D** | -$CF_2H$ |
| **-T-** | $CF_3$- | **-T** | -$CF_3$ |
| **-MO-** | $CFH_2O$ - | **-OM** | -$OCFH_2$ |
| **-DO-** | $CF_2HO$- | **-OD** | -$OCF_2H$ |
| **-TO-** | $CF_3O$ - | **-OT** | -$OCF_3$ |
| **-FXO-** | $CF_2$=CH-O- | **-OXF** | -O-CH=$CF_2$ |
| **-A-** | H-C≡C- | **-A** | -C≡C-H |
| **-nA-** | $C_nH_{2n+1}$-C≡C- | **-An** | -C≡C-$C_nH_{2n+1}$ |
| **-NA-** | N≡C-C≡C- | **-AN** | -C≡C-C≡N |
| | | **Use together with others** | |
| **-...A...-** | -C≡C- | **-...A...** | -C≡C- |
| **-...V...-** | CH=CH- | **-...V...** | -CH=CH- |
| **-...Z...-** | -CO-O- | **-...Z...** | -CO-O- |
| **-...ZI...-** | -O-CO- | **-...ZI...** | -O-CO- |
| **-...K...-** | -CO- | **-...K...** | -CO- |
| **-...W...-** | -CF=CF- | **-...W...** | -CF=CF- |

in which n and m each denote integers, and the three dots "..." are place-holders for other abbreviations from this table.

The following table shows illustrative structures together with their respective abbreviations. These are shown in order to illustrate the meaning of the rules for the abbreviations. They furthermore represent compounds which are preferably used.

**Table D: Illustrative structures**

The illustrative structures show compounds which are particularly preferably employed.

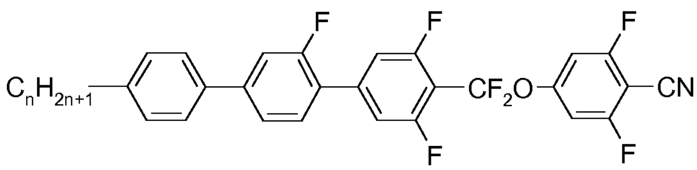

**PGUQU-n-N**

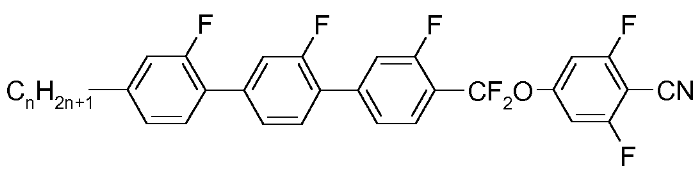

**GGGQU-n-N**

(continued)

The illustrative structures show compounds which are particularly preferably employed.

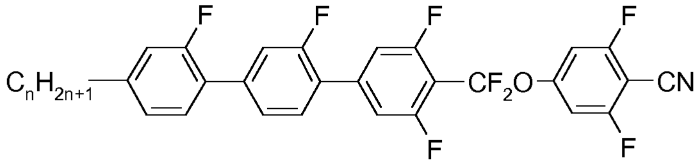

**GGUQU-n-N**

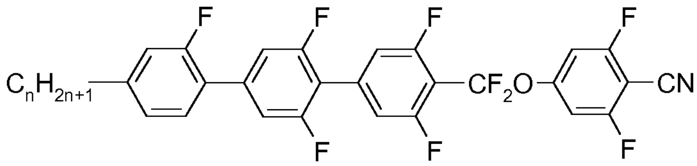

**GUUQU-n-N**

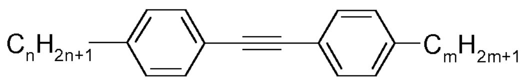

**PTP-n-m**

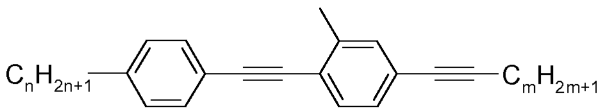

**PTPI(1)-n-Am**

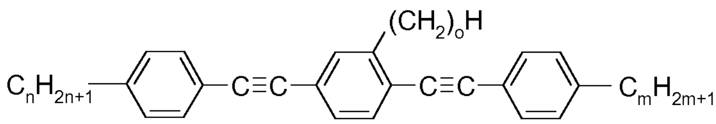

**PTP(o)TP-n-m,** o ∍ {1;2;3;4;5;6}

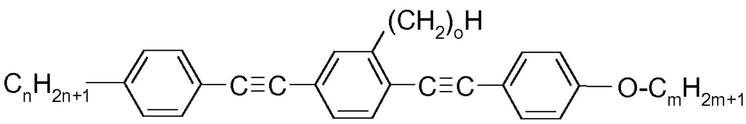

**PTP(o)TP-n-Om,** o ∍ {1;2;3;4;5;6}

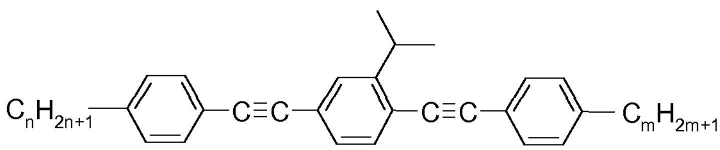

**PTP(i3)TP-n-m**

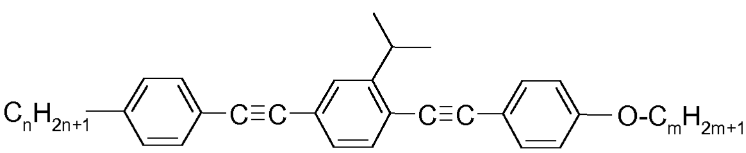

**PTP(i3)TP-n-Om**

(continued)

The illustrative structures show compounds which are particularly preferably employed.

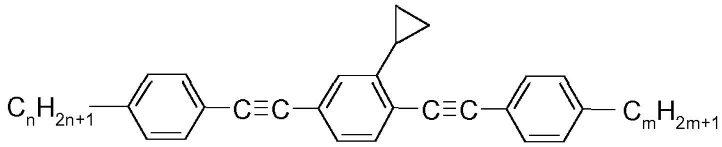

**PTP(c3)TP-n-m**

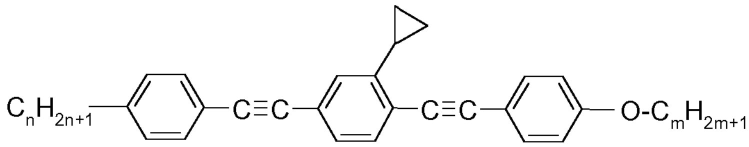

**PTP(c3)TP-n-Om**

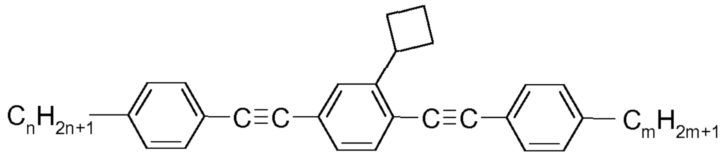

**PTP(c4)TP-n-m**

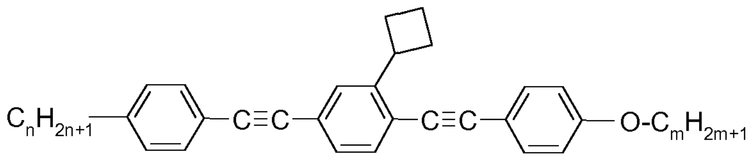

**PTP(c4)TP-n-Om**

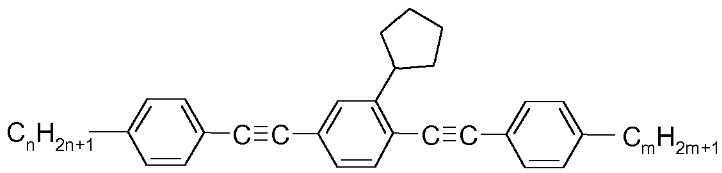

**PTP(c5)TP-n-m**

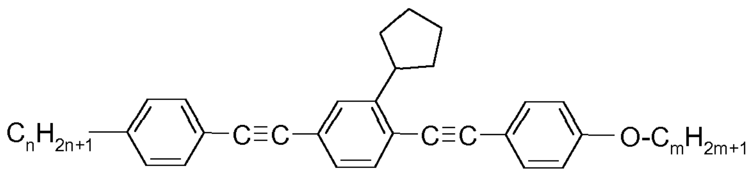

**PTP(c5)TP-n-Om**

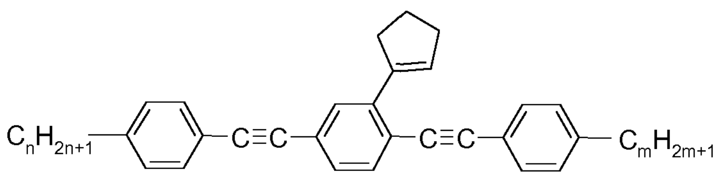

**PTP(e5)TP-n-m**

(continued)

The illustrative structures show compounds which are particularly preferably employed.

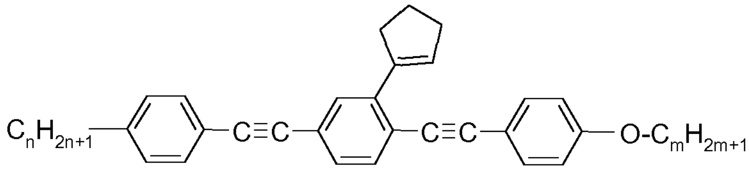

**PTP(e5)TP-n-Om**

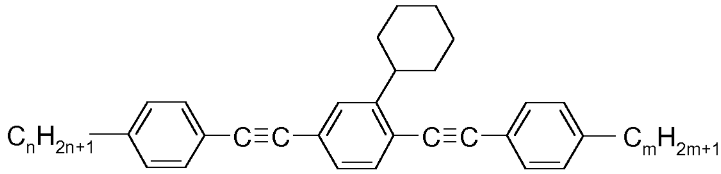

**PTP(c6)TP-n-m**

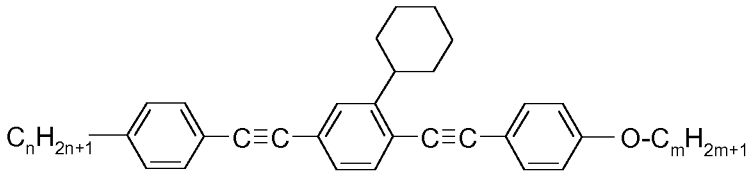

**PTP(c6)TP-n-Om**

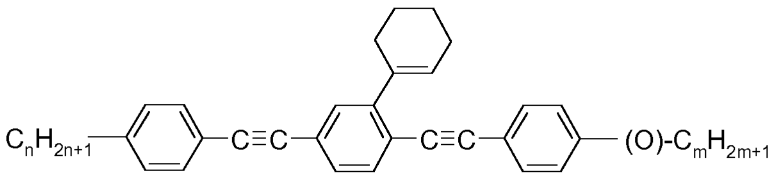

**PTP(e6)TP-n-(O)m**

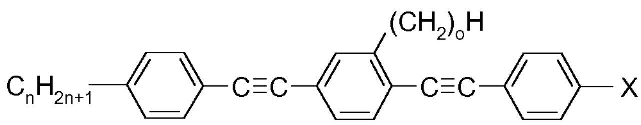

**PTP(o)TP-n-X, X= F, Cl,** o ∍ {1;2;3;4;5;6}

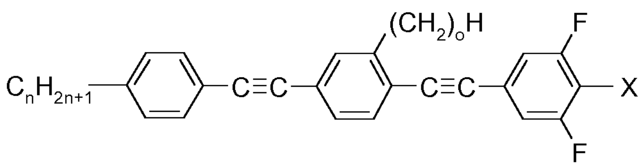

**PTP(o)TU-n-X, X= F, Cl,** o ∈ {1;2;3;4;5;6}

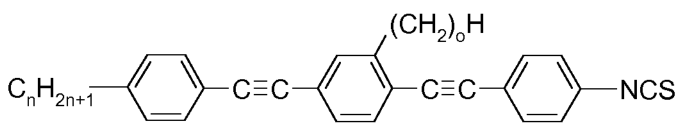

**PTP(o)TP-n-S** o ∍ {1;2;3;4;5;6}

(continued)

The illustrative structures show compounds which are particularly preferably employed.

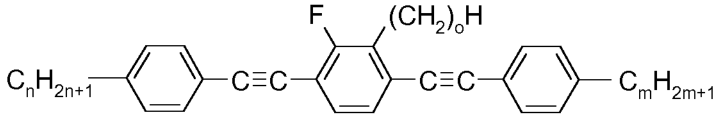

**PTGI(o)TP-n-m,** o ϶ {1;2;3;4;5;6}

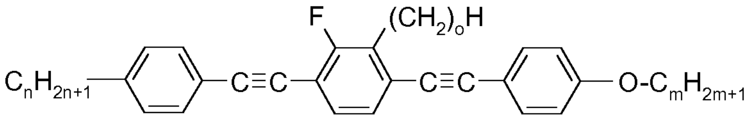

**PTGI(o)TP-n-Om,** o ϶ {1;2;3;4;5;6}

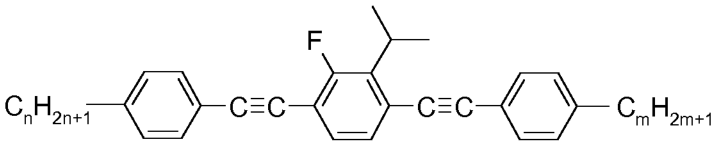

**PTGI(i3)TP-n-m**

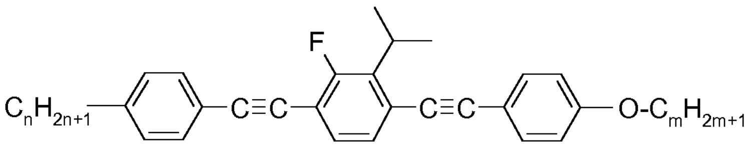

**PTGI(i3)TP-n-Om**

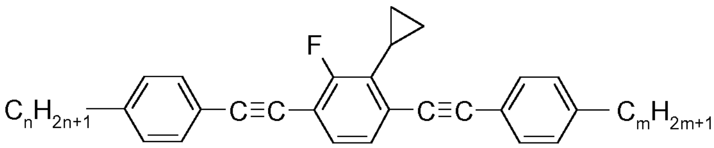

**PTGI(c3)TP-n-m**

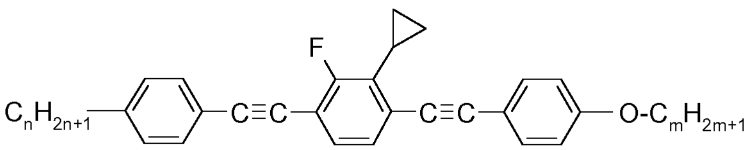

**PTGI(c3)TP-n-Om**

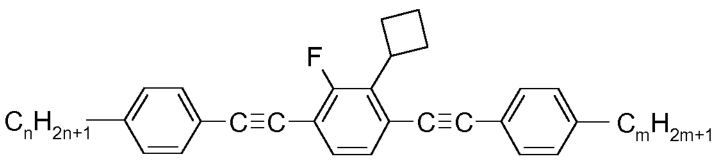

**PTGI(c4)TP-n-m**

(continued)

The illustrative structures show compounds which are particularly preferably employed.

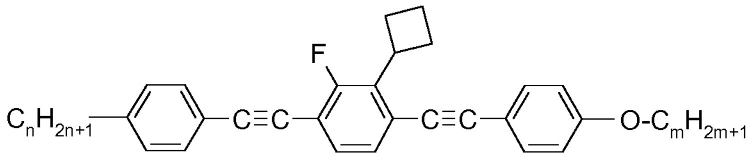

**PTGI(c4)TP-n-Om**

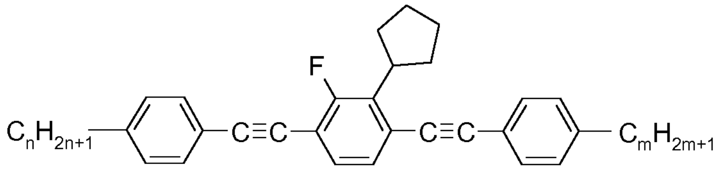

**PTGI(c5)TP-n-m**

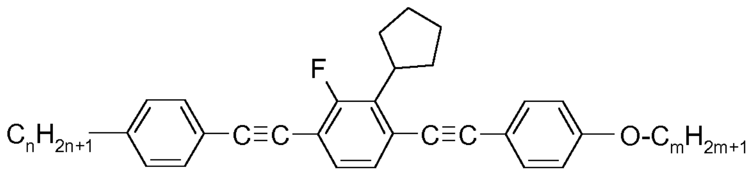

**PTGI(c5)TP-n-Om**

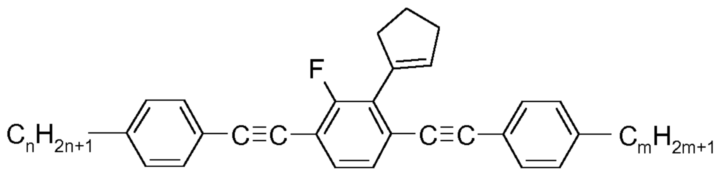

**PTGI(e5)TP-n-m**

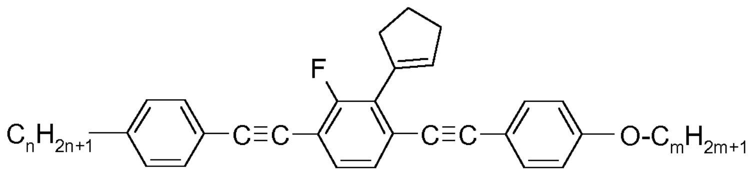

**PTGI(e5)TP-n-Om**

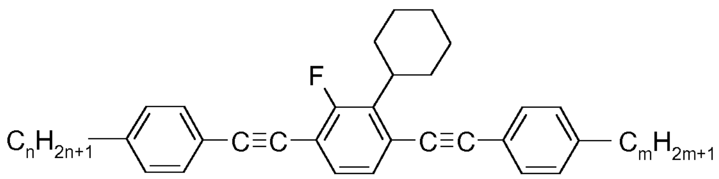

**PTGI(c6)TP-n-m**

(continued)

The illustrative structures show compounds which are particularly preferably employed.

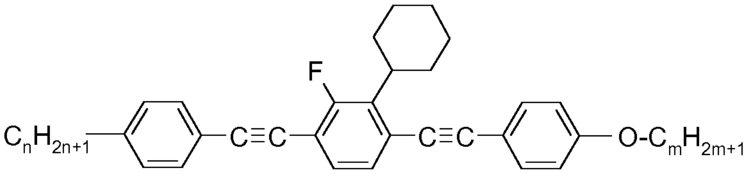

**PTGI(c6)TP-n-Om**

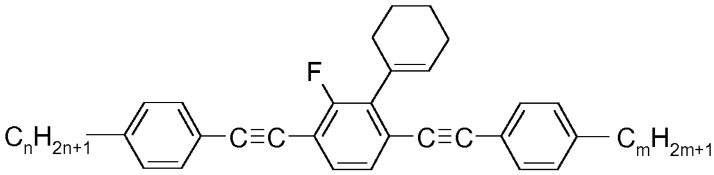

**PTGI(e6)TP-n-m**

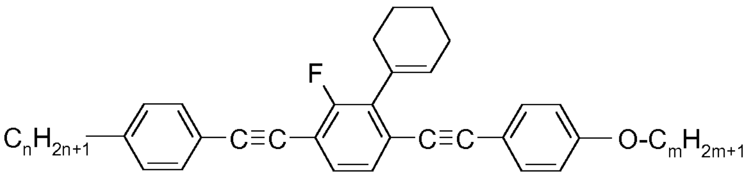

**PTGI(e6)TP-n-Om**

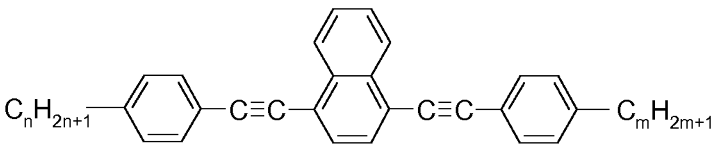

**PTN(1,4)TP-n-m**

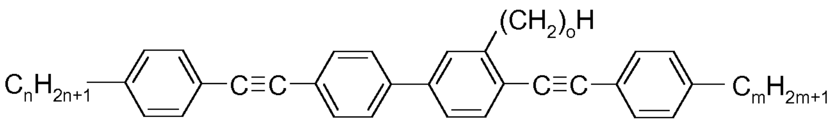

**PTPP(o)TP-n-m,** o ∍ {1;2;3;4;5;6}

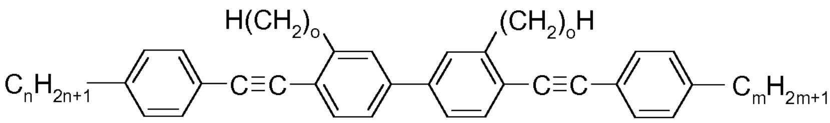

**PTPI(o)P(o)TP-n-m,** o ∍ {1;2;3;4;5;6}

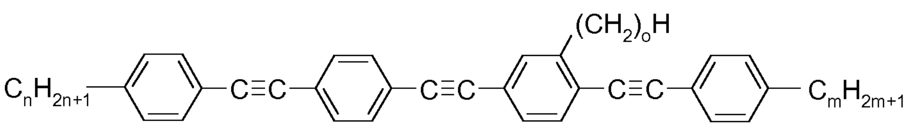

**PTPTP(o)P-n-m,** o ∍ {1;2;3;4;5;6}

(continued)

The illustrative structures show compounds which are particularly preferably employed.

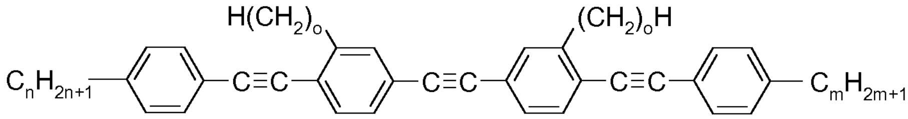

**PTPI(o)TP(o)P-n-m,** o ∍ {1;2;3;4;5;6}

(n ∍ {1;2;3;4;5;6;7} and m ∍ {1;2;3;4;5;6;7})

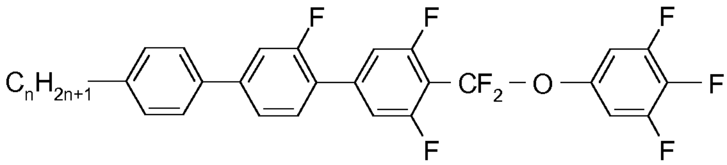

**PGUQU-n-F**

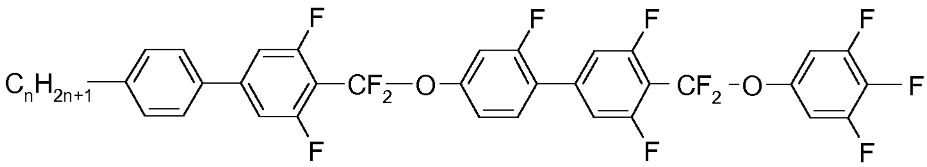

**PUQGUQU-n-F**

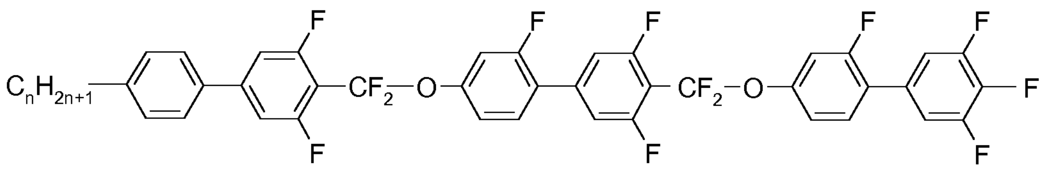

**PUQGUQGU-n-F = PU[QGU]$_2$-n-F**

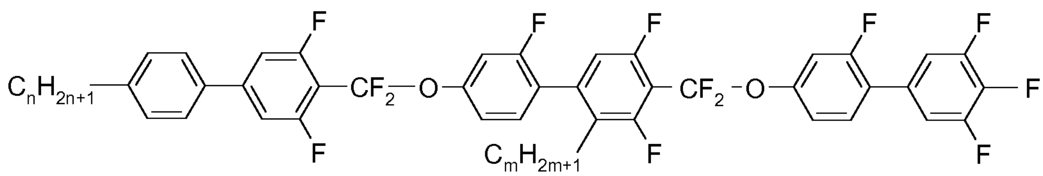

**PUQGU(m)QGU-n-F = PU[QGU]$_2^{(m)}$-n-F**

(n ∍ {1;2;3;4;5;6;7} and m ∍ {1;2;3;4})

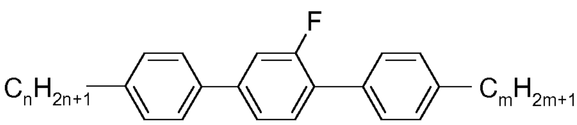

**PGP-n-m**

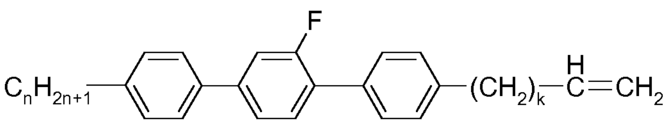

**PGP-n-kV**

(continued)

The illustrative structures show compounds which are particularly preferably employed.

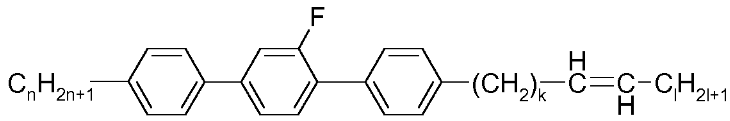

**PGP-n-kVI**

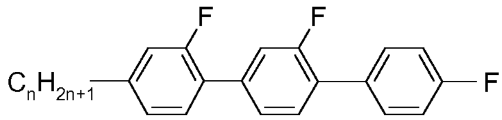

**GGP-n-F**

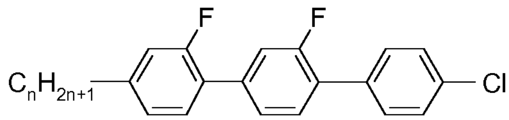

**GGP-n-CL**

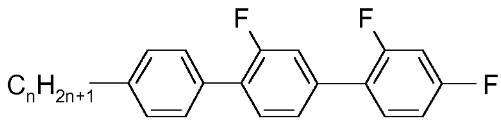

**PGIGI-n-F**

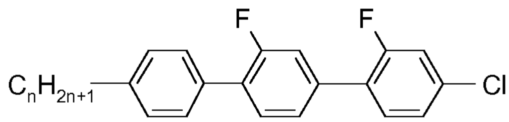

**PGIGI-n-CL**

(n ∍ {1;2;3;4;5;6;7}, m ∍ {1;2;3;4;5;6;7}, and k ∍ {0;1;2;3;4}, preferably 0 or 2, and l ∍ {0;1;2;3})

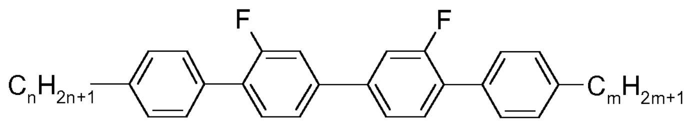

**PGIGP-n-m**

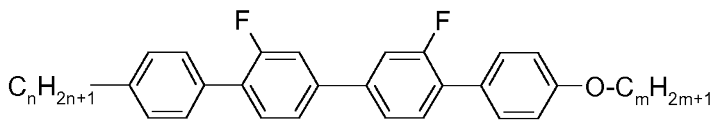

**PGIGP-n-Om**

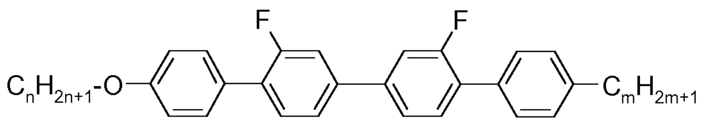

**PGIGP-nO-Om**

(continued)

The illustrative structures show compounds which are particularly preferably employed.

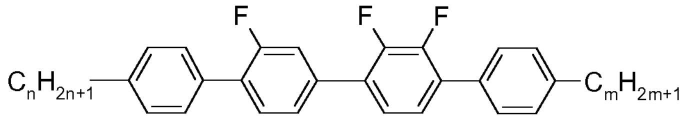

**PGIYP-n-m**

(n ∍ {1;2;3;4;5;6;7} and m ∍ {1;2;3;4;5;6;7})

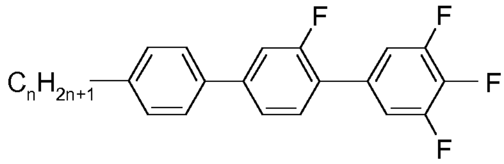

**PGU-n-F**

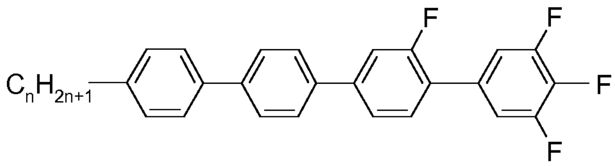

**PPGU-n-F**

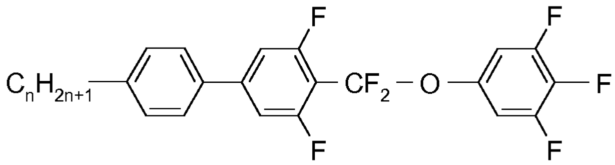

**PUQU-n-F**

(n ∍ {1;2;3;4;5;6;7})

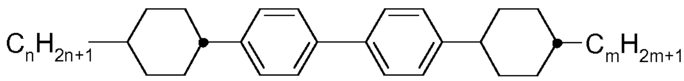

**CPPC-n-m**

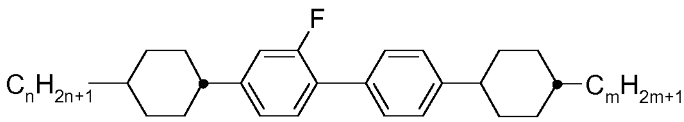

**CGPC-n-m**

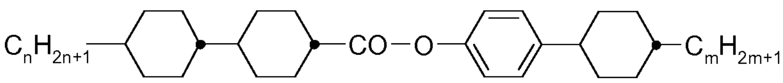

**CCZPC-n-m**

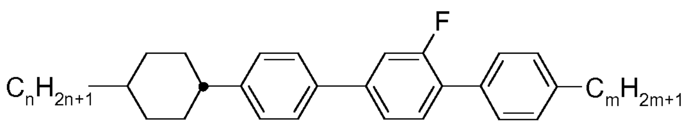

**CPGP-n-m**

(continued)

The illustrative structures show compounds which are particularly preferably employed.

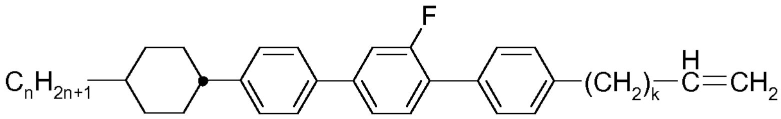

**CPGP-n-kV**

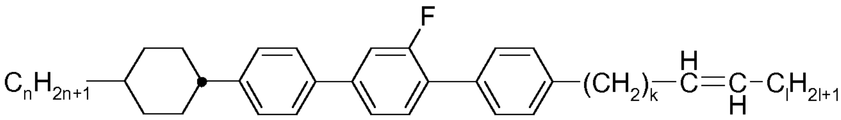

**CPGP-n-kVI**

(n ∋ {1;2;3;4;5;6;7}, m ∋ {1;2;3;4;5;6;7}, and k ∋ {0;1 ;2;3;4}, preferably 0 or 2, and l ∋ {0;1;2;3})

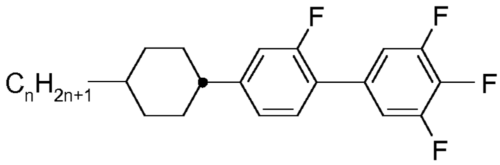

**CGU-n-F**

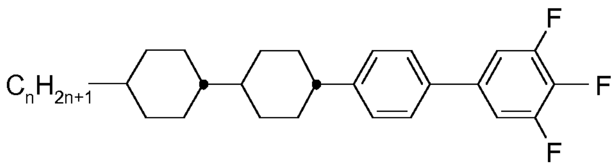

**CCPU-n-F**

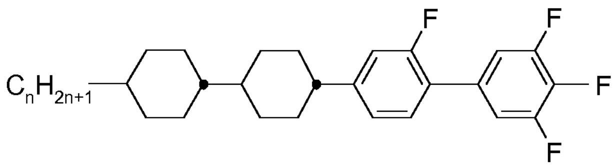

**CCGU-n-F**

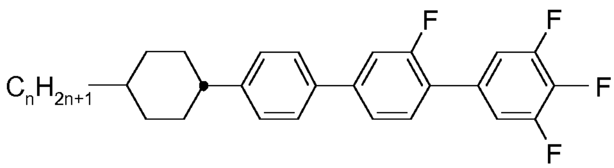

**CPGU-n-F**

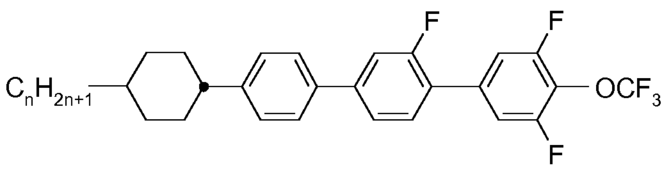

**CPGU-n-OT**

(continued)

The illustrative structures show compounds which are particularly preferably employed.

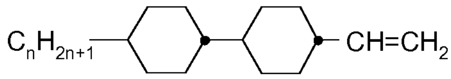

**CC-n-V**

(n ∋ {1;2;3;4;5;6;7})

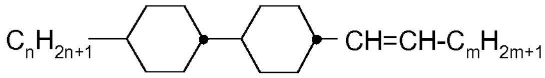

**CC-n-Vm**

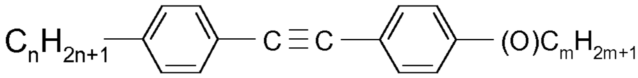

**PTP-n-(O)m**

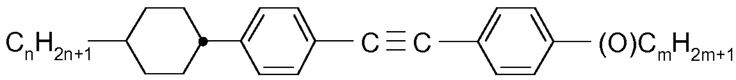

**CPTP-n-(O)m**

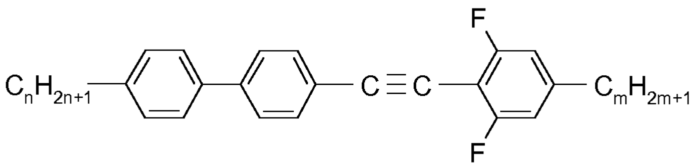

**PPTUI-n-m**

(n ∋ {1;2;3;4;5;6;7}; m ∋ {1;2;3;4;5;6;7})

The following table, Table E, shows illustrative compounds which can be used as stabiliser in the mesogenic media in accordance with the present invention. The total concentration of these and similar compounds in the media is preferably 5% or less.

## Table E

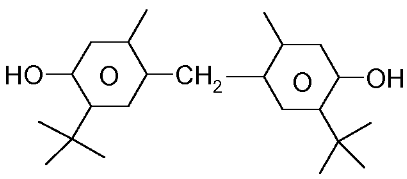

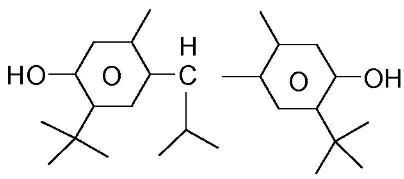

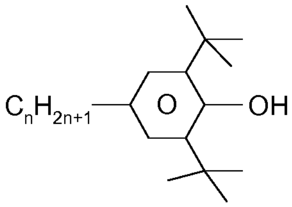

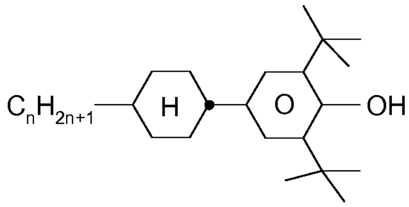

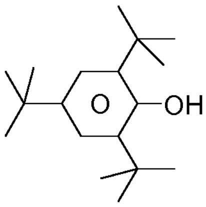

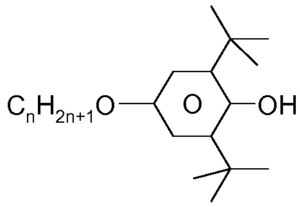

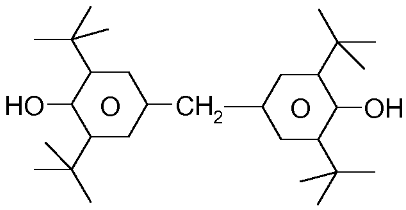

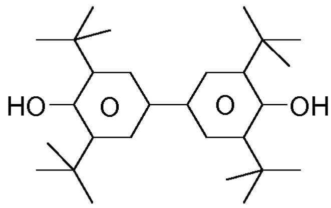

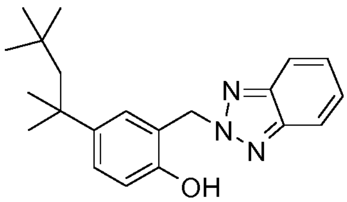

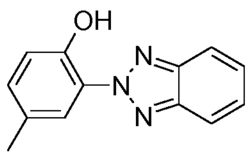

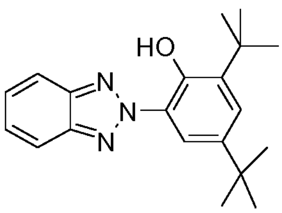

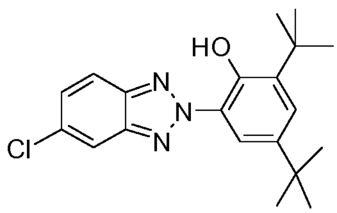

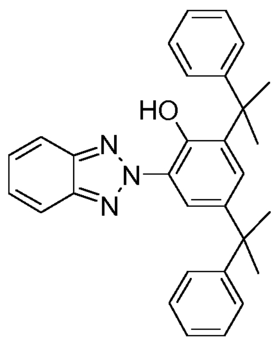

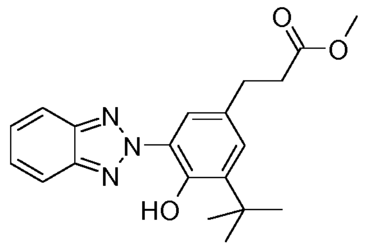

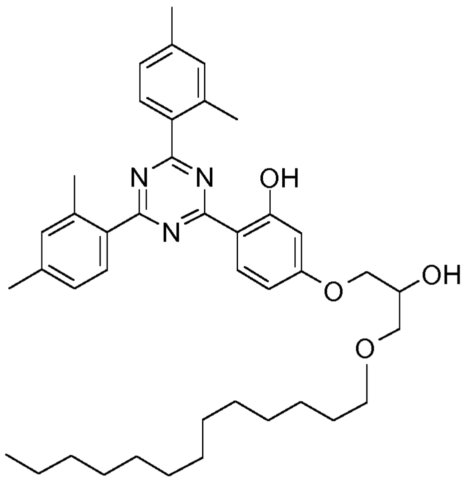

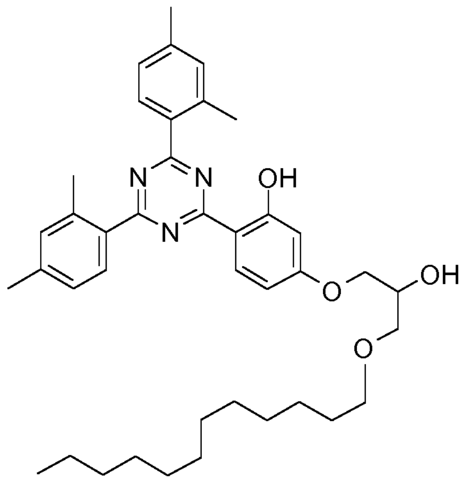

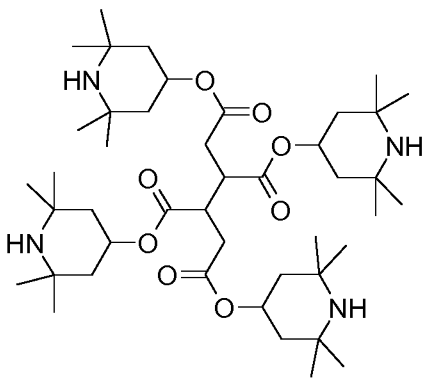

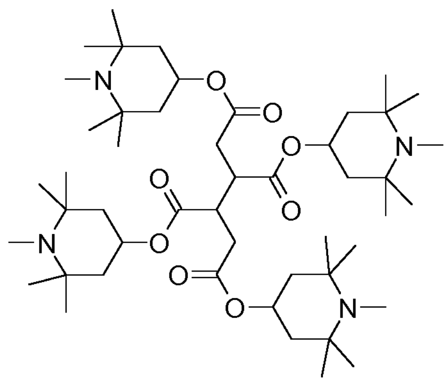

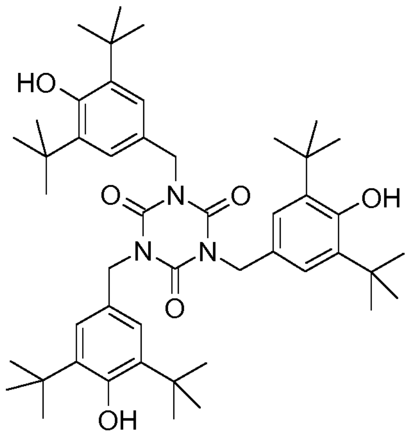

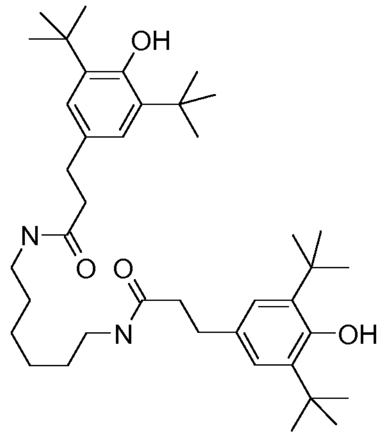

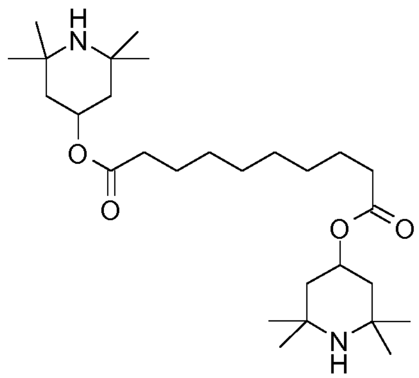

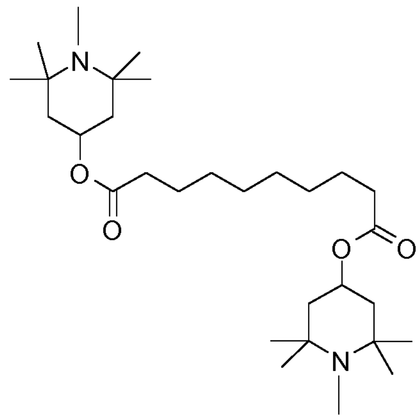

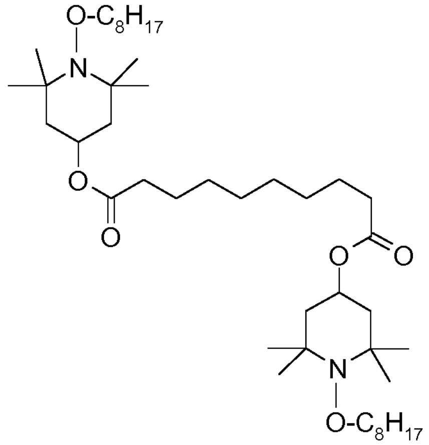

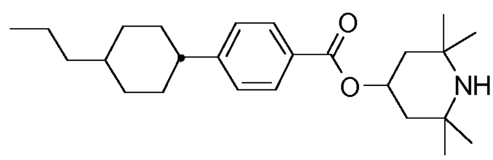

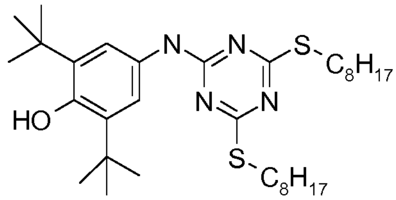

In a preferred embodiment of the present invention, the mesogenic media comprise one or more compounds selected from the group of the compounds from Table E.

The mesogenic media in accordance with the present application preferably comprise two or more, preferably four or more, compounds selected from the group consisting of the compounds from the above tables.

The liquid-crystal media in accordance with the present invention preferably comprise

- seven or more, preferably eight or more, compounds, preferably compounds having three or more, preferably four or more, different formulae, selected from the group of the compounds from Table D.

The compounds of the formula Q can be prepared analogously to processes known to the person skilled in the art and described in standard works of organic chemistry, such as, for example, Houben-Weyl, Methoden der organischen Chemie [Methods of Organic Chemistry], Thieme Verlag, Stuttgart. For specific processes for the preparation of compounds of the formula I, reference is furthermore made to the known literature.

The starting materials for the synthesis of compounds of formula Q are commercially available or can be synthesised according to known procedures. Preferably, compounds of formula Q are synthesised in analogy to the procedures disclosed in EP1900792 A1, as shown in scheme 1.

Scheme 1.

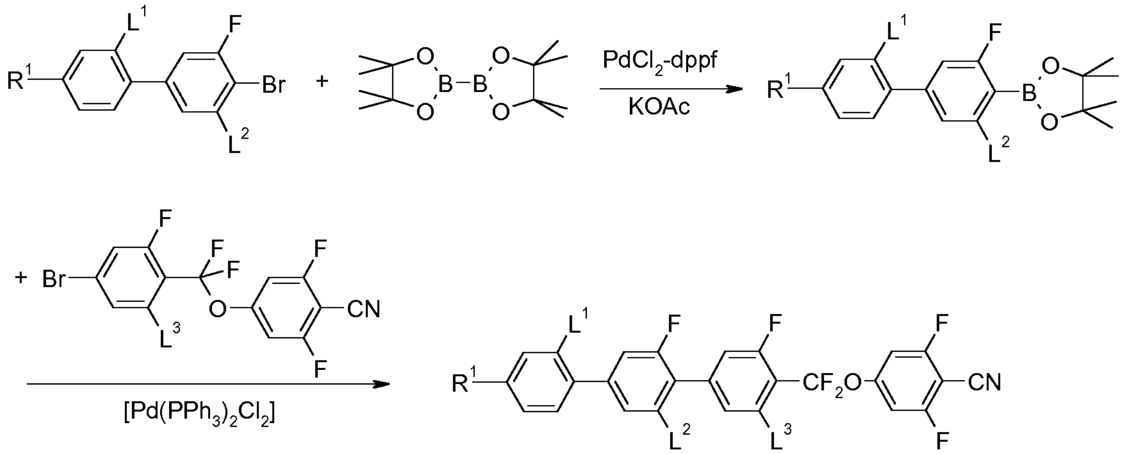


## Examples

The following examples illustrate the present invention without limiting it in any way. However, it becomes clear to the person skilled in the art from the physical properties what properties can be achieved and in what ranges they can be modified. In particular, the combination of the various properties which can preferably be achieved is thus well defined for the person skilled in the art.

### Use Examples

### Comparative Example 1

A liquid-crystal mixture C-1, having the composition and properties as indicated in the following table, is prepared.

| Composition | | | Physical properties | | |
|---|---|---|---|---|---|
| Compound | | | T(N,I) | = 164 | °C |
| No. | Abbreviation | c [%] | $n_o$ (20°C, 589.3 nm) | = 1.4745 | |
| 1 | PPTUI-3-4 | 25.1 | $\Delta n$ (20°C, 589.3 nm) | = 0.3984 | |
| 2 | PPTUI-4-4 | 48.5 | $\varepsilon_{\parallel}$ (20°C, 1 kHz) | = 3.9 | |
| 3 | PPTUI-3-2 | 26.4 | $\Delta\varepsilon$ (20°C, 1 kHz) | = 1.2 | |
| $\Sigma$ | | 100.0 | $k_{11}$ (20°C) | = 17.4 | pN |

(continued)

| Composition | | | Physical properties | | |
|---|---|---|---|---|---|
| | | | $k_{33}$ (20°C) | = 38.8 | pN |
| | | | $V_0$ (20°C) | = 4.06 | V |
| | | | $\gamma_1$ (20°C) | = 697 | mPa · s |

This mixture is suitable for applications in the microwave region and/or millimetre wave region, in particular for phase shifters.

Mixture Example 1

A liquid-crystal mixture M-1, having the composition and properties as indicated in the following table, is prepared.

| Composition | | | Physical properties | | |
|---|---|---|---|---|---|
| Compound | | | T(N,I) | = 97 | °C |
| No. | Abbreviation | c [%] | $n_o$ (20°C, 589.3 nm) | = N/A | |
| 1 | PPTUI-3-4 | 10.0 | $\Delta n$ (20°C, 589.3 nm) | = N/A | |
| 2 | PPTUI-4-4 | 20.0 | $\varepsilon_{\|\|}$ (20°C, 1 kHz) | = 5.5 | |
| 3 | PPTUI-3-2 | 25.0 | $\Delta\varepsilon$ (20°C, 1 kHz) | = 2.7 | |
| 4 | PTPI(1)-4-A1 | 30.0 | $k_{11}$ (20°C) | = 10.8 | pN |
| 5 | PTP-3-5 | 6.0 | $k_{33}$ (20°C) | = 24.7 | pN |
| 6 | PTP-4-5 | 6.0 | $V_0$ (20°C) | = 2.11 | V |
| 7 | GUUQU-3-N | 3.0 | $\gamma_1$ (20°C) | = 450 | mPa · s |
| Σ | | 100.0 | | | |

A liquid-crystal mixture M-2, having the composition and properties as indicated in the following table, is prepared.

| Composition | | | Physical properties | | |
|---|---|---|---|---|---|
| Compound | | | T(N,I) | = 109 | °C |
| No. | Abbreviation | c [%] | $n_o$ (20°C, 589.3 nm) | = N/A | |
| 1 | PPTUI-3-4 | 10.0 | $\Delta n$ (20°C, 589.3 nm) | = N/A | |
| 2 | PPTUI-4-4 | 20.0 | $\varepsilon_{\|\|}$ (20°C, 1 kHz) | = 6.4 | |
| 3 | PPTUI-3-2 | 20.0 | $\Delta\varepsilon$ (20°C, 1 kHz) | = 3.4 | |
| 4 | PTPI(1)-4-A1 | 35.0 | $k_{11}$ (20°C) | = 11.6 | pN |
| 5 | GUUQU-3-N | 4.0 | $k_{33}$ (20°C) | = 26.6 | pN |
| 6 | PGP-2-3 | 6.0 | $V_0$ (20°C) | = 1.96 | V |
| 7 | PGP-2-5 | 5.0 | $\gamma_1$ (20°C) | = 555 | mPa · s |
| Σ | | 100.0 | | | |

A liquid-crystal mixture M-3, having the composition and properties as indicated in the following table, is prepared.

| Composition | | | Physical properties | | |
|---|---|---|---|---|---|
| Compound | | | T(N,I) | = 96 | °C |
| No. | Abbreviation | c [%] | $n_o$ (20°C, 589.3 nm) | = N/A | |
| 1 | PPTUI-3-4 | 10.0 | $\Delta n$ (20°C, 589.3 nm) | = N/A | |

(continued)

| Composition | | | Physical properties | | |
|---|---|---|---|---|---|
| 2 | PPTUI-4-4 | 20.0 | $\varepsilon_{\parallel}$ (20°C, 1 kHz) | = 6.2 | |
| 3 | PPTUI-3-2 | 25.0 | $\Delta\varepsilon$ (20°C, 1 kHz) | = 3.3 | |
| 4 | PTPI(1)-4-A1 | 30.0 | $k_{11}$ (20°C) | = 10.2 | pN |
| 5 | PTP-3-5 | 6.0 | $k_{33}$ (20°C) | = 25.0 | pN |
| 6 | PTP-4-5 | 6.0 | $V_0$ (20°C) | = 1.85 | V |
| 7 | GUUQU-3-N | 3.0 | $\gamma_1$ (20°C) | = 456 | mPa · s |
| Σ | | 100.00 | | | |

A liquid-crystal mixture M-4, having the composition and properties as indicated in the following table, is prepared.

| Composition | | | Physical properties | | |
|---|---|---|---|---|---|
| Compound | | | T(N,I) | = N/A | °C |
| No. | Abbreviation | c [%] | $n_o$ (20°C, 589.3 nm) | = N/A | |
| 1 | PPTUI-3-4 | 10.0 | $\Delta n$ (20°C, 589.3 nm) | = N/A | |
| 2 | PPTUI-4-4 | 20.0 | $\varepsilon_{\parallel}$ (20°C, 1 kHz) | = N/A | |
| 3 | PPTUI-3-2 | 25.0 | $\Delta\varepsilon$ (20°C, 1 kHz) | = N/A | |
| 4 | PTPI(1)-4-A1 | 30.0 | $k_{11}$ (20°C) | = N/A | pN |
| 5 | PTP-3-5 | 6.0 | $k_{33}$ (20°C) | = N/A | pN |
| 6 | PTP-4-5 | 6.0 | $V_0$ (20°C) | = N/A | V |
| 7 | GGGQU-3-N | 3.0 | $\gamma_1$ (20°C) | = N/A | mPa · s |
| Σ | | 100.00 | | | |

A liquid-crystal mixture M-5, having the composition and properties as indicated in the following table, is prepared.

| Composition | | | Physical properties | | |
|---|---|---|---|---|---|
| Compound | | | T(N,I) | = N/A | °C |
| No. | Abbreviation | c [%] | $n_o$ (20°C, 589.3 nm) | = N/A | |
| 1 | PPTUI-3-4 | 10.0 | $\Delta n$ (20°C, 589.3 nm) | = N/A | |
| 2 | PPTUI-4-4 | 20.0 | $\varepsilon_{\parallel}$ (20°C, 1 kHz) | = N/A | |
| 3 | PPTUI-3-2 | 25.0 | $\Delta\varepsilon$ (20°C, 1 kHz) | = N/A | |
| 4 | PTPI(1)-4-A1 | 30.0 | $k_{11}$ (20°C) | = N/A | pN |
| 5 | PTP-3-5 | 6.0 | $k_{33}$ (20°C) | = N/A | pN |
| 6 | PTP-4-5 | 6.0 | $V_0$ (20°C) | = N/A | V |
| 7 | GGUQU-3-N | 3.0 | $\gamma_1$ (20°C) | = N/A | mPa · s |
| Σ | | 100.00 | | | |

Comparison of the properties of the various examples at 19 GHz and 20°C

| Example | LC mixture | $\tau$ | tan $\delta_{\varepsilon\ max.}$ | $\eta$ |
|---|---|---|---|---|
| comparative example 1 | C-1 | 0.2516 | 0.0118 | 21.3 |
| 1 | M-1 | 0.2358 | 0.0096 | 24.6 |
| 2 | M-2 | 0.2451 | 0.0097 | 25.3 |
| 3 | M-3 | 0.2411 | 0.0093 | 25.8 |

(continued)

| Example | LC mixture | $\tau$ | tan $\delta_{\varepsilon\ max.}$ | $\eta$ |
|---|---|---|---|---|
| 4 | M-4 | N/A | N/A | N/A |
| 5 | M-5 | N/A | N/A | N/A |

The use of an amount of 3 to 4 % of a compound of formula Q (GUUQU-3-N, GGGQU-3-N and GGUQU-3-N in the examples) leads to a very strong increase of $\Delta\varepsilon$ at low frequency (1 kHz) and consequently to a drastic reduction of the response time for switching the device on (i.e. $\tau_{on}$) compared to comparative example 1 (C-1).

The use of a compound of formula Q in combination with one or more compounds selected from the group of compounds of formulae T, U and I results in a significant increase of the material quality ($\eta$) due to a decrease of the dielectric loss while the tunability is on a very similar high level compared to comparative example 1 (C-1).

## Claims

1. Liquid-crystal medium, **characterised in that** it comprises one or more compounds of formula Q

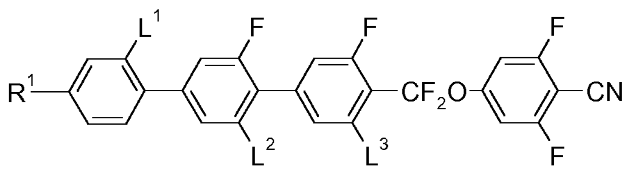

Q

and
one or more compounds selected from the group of compounds of formulae T, U and I

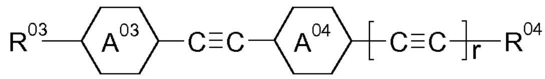

T

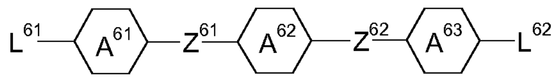

U

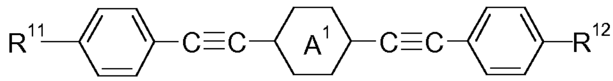

I

wherein

$R^1$ denotes alkyl, which is straight chain or branched having 1 to 15 C-atoms, is unsubstituted, mono- or poly-substituted by F, Cl or CN, preferably by F, and in which one or more $CH_2$ groups are optionally replaced, in each case independently from one another, by -O-, -S-, $-CR^{01}R^{02}-$, $-SiR^{01}R^{02}-$, -CO-, -COO-, -OCO-, -OCO-O-, -S-CO-, -CO-S-, $-CY^{01}=CY^{02}-$ or -C≡C- in such a way that O and/or S atoms are not linked directly to one another;
$Y^{01}$ and $Y^{02}$ are, independently of each other, F, Cl or CN, and alternatively one of them may be H,
$R^{01}$ and $R^{02}$ are, independently of each other, H or alkyl with 1 to 12 C-atoms,
$L^1$, $L^2$ and $L^3$ each, independently from one another, denote H or F;
$R^{03}$ and $R^{04}$ independently from one another, have the meaning given for $R^1$ above,

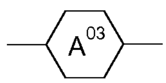

and

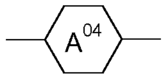

,

independently of one another, denote

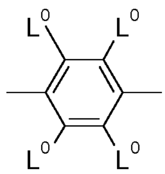

,

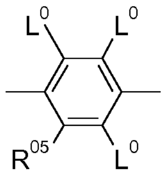

,

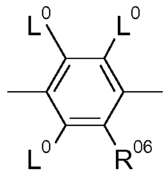

,

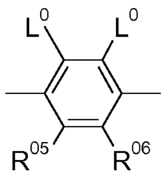

,

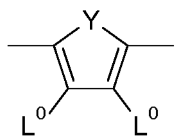

,

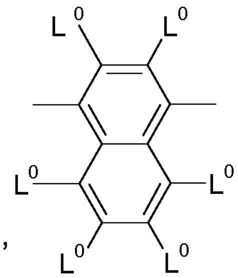

,

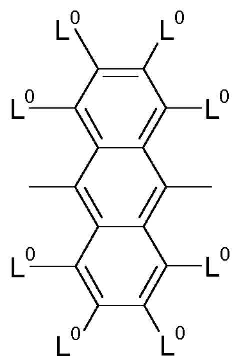

,

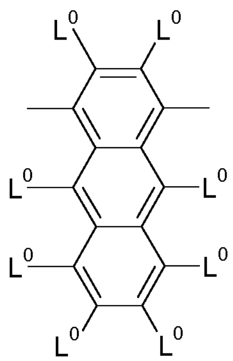

,

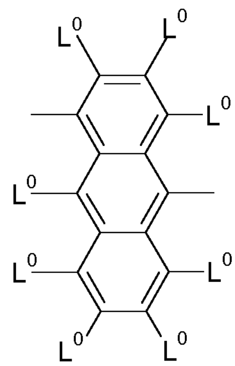

or

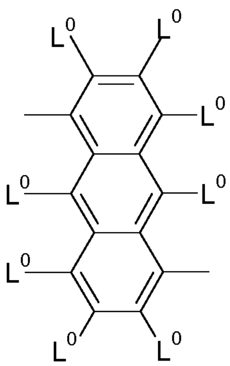

,

wherein Y denotes S or O, and wherein in the 1,4-phenylene groups, one or more C-H groups may be replaced

by N, and

$L^0$ on each occurrence, independently of one another, denotes H, Br, Cl, F, -CN, -NCS, -SCN, $SF_5$, $C_1$-$C_{10}$ alkyl, $C_1$-$C_{10}$ alkoxy, $C_3$-$C_6$ cycloalkyl or a mono- or polyfluorinated $C_1$-$C_{10}$ alkyl or alkoxy group,

$R^{05}$ and $R^{06}$ each, independently of one another, denote a halogenated or unsubstituted alkyl radical having 1 to 6 C atoms, where, one or more $CH_2$ groups in these radicals may each be replaced, independently of one another by -C≡C-, -CH=CH-, -CF=CF-, -CF=CH-, -CH=CF-, -(CO)O-, -O(CO), -(CO)-, -O- or -S- in such a way that O or S atoms are not linked directly to one another,

r is 0 or 1;

$L^{61}$ denotes $R^{61}$ and, in the case where $Z^{61}$ and/or $Z^{62}$ denote *trans*-CH=CH- or *trans*-CF=CF-, alternatively also denotes $X^{61}$,

$L^{62}$ denotes $R^{62}$ and, in the case where $Z^{61}$ and/or $Z^{62}$ denote *trans*-CH=CH- or *trans*-CF=CF-, alternatively also denotes $X^{62}$;

$R^{61}$ and $R^{62}$, independently of one another, denote H, unfluorinated alkyl or unfluorinated alkoxy having 1 to 17 C atoms or unfluorinated alkenyl, unfluorinated alkenyloxy or unfluorinated alkoxyalkyl having 2 to 15 C atoms,

$X^{61}$ and $X^{62}$, independently from one another, denote F or Cl, -CN, -NCS, $-SF_5$, fluorinated alkyl or alkoxy having 1 to 7 C atoms or fluorinated alkenyl, alkenyloxy or alkoxyalkyl having 2 to 7 C atoms, one of

$Z^{61}$ and $Z^{62}$ denotes *trans*-CH=CH-, *trans*-CF=CF- or -C≡C- and the other denotes *trans*-CH=CH-, *trans*-CF=CF- or a single bond, and

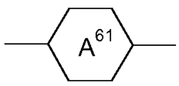 to 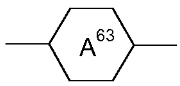,

independently of one another, denote

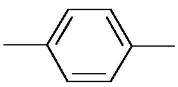, 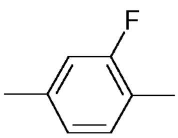, 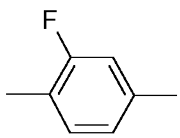,

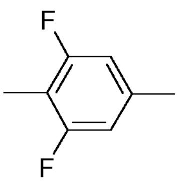, 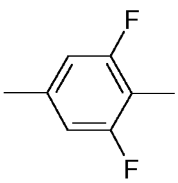, 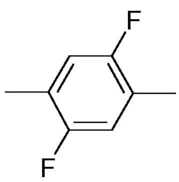,

or

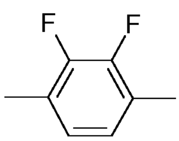.

$R^{11}$ and $R^{12}$, independently of one another, denote unfluorinated alkyl or unfluorinated alkoxy, each having 1 to 15 C atoms, unfluorinated alkenyl, unfluorinated alkenyloxy or unfluorinated alkoxyalkyl, each having 2 to 15 C atoms, or cycloalkyl, alkylcycloalkyl, cycloalkenyl, alkylcycloalkenyl, alkylcycloalkylalkyl or alkylcycloalkenylalkyl, each having up to 15 C atoms;

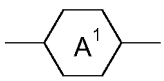

denotes

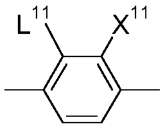

,

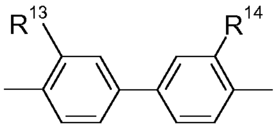

,

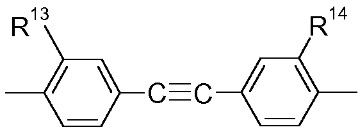

or

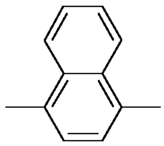

,

$L^{11}$ denotes H, alkyl having 1 to 6 C atoms, cycloalkyl having 3 to 6 C atoms or cycloalkenyl having 4 to 6 C atoms,
$X^{11}$ denotes H, alkyl having 1 to 3 C atoms or halogen,
$R^{13}$ and $R^{14}$, independently of one another, have the meaning given for $R^{11}$ and $R^{12}$, and alternatively one of $R^{13}$ and $R^{14}$ or both also denote H.

**2.** Liquid crystal medium according to claim 1, **characterised in that** it comprises one or more compounds selected from the group of compounds of formulae Q-1 to Q-5

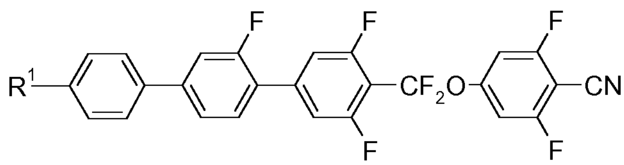

Q-1

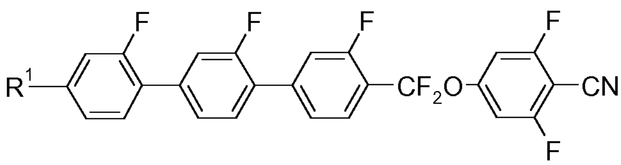

Q-2

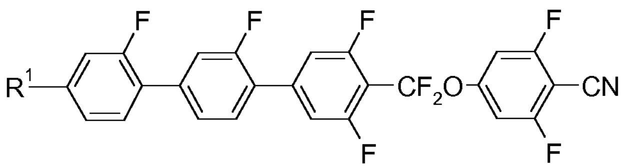

Q-3

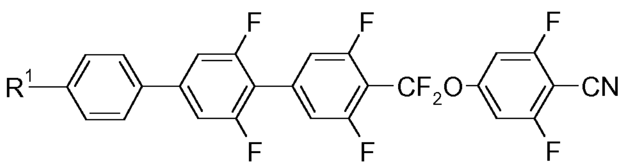

Q-4

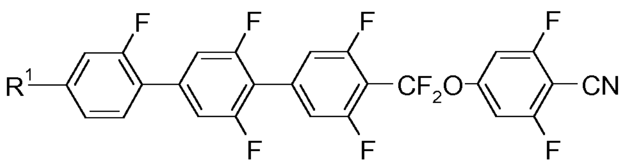

Q-5

wherein $R^1$ has the meaning indicated in claim 1.

**3.** Liquid-crystal medium according to claim 1 or 2, **characterised in that** it comprises one or more compounds of formula T.

**4.** Liquid-crystal medium according to one or more of claims 1 to 3, **characterised in that** it comprises one or more compounds of formula U.

**5.** Liquid-crystal medium according to one or more of claims 1 to 4, **characterised in that** it comprises one or more compounds of formula I.

**6.** Liquid-crystal medium according to one or more of claims 1 to 5, **characterised in that** one or more compounds of formula T are selected from the group of compounds of the sub-formulae T-1 to T-7

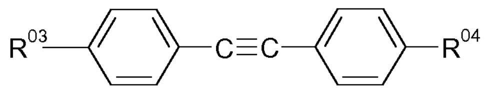

T-1

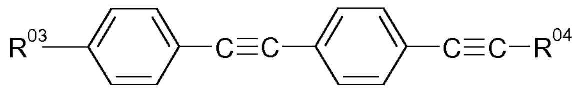

T-2

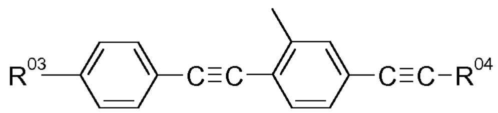

T-3

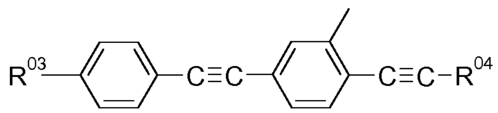

T-4

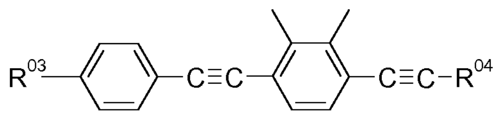

T-5

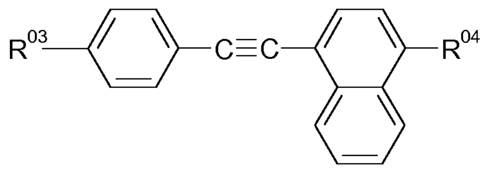

T-6

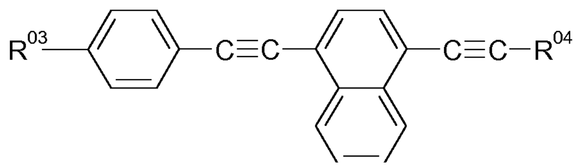

T-7

wherein $R^{03}$ and $R^{04}$ have the meaning indicated in claim 1.

**7.** Liquid-crystal medium according to one or more of claims 1 to 6, **characterised in that** one or more compounds of formula U are selected from the group of compounds of the formulae

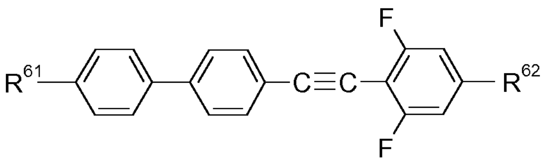

U-1a

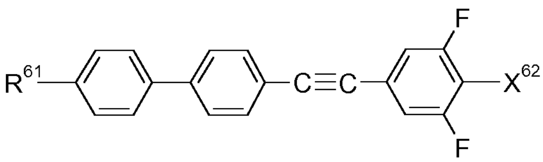

U-2b

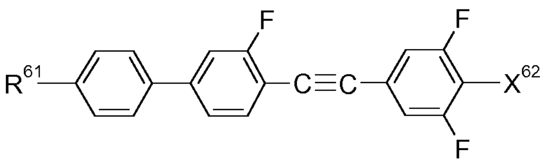

U-2c

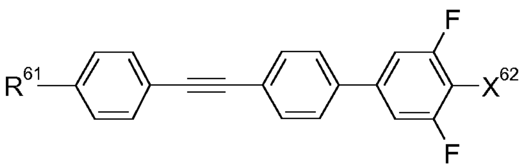

U-3b

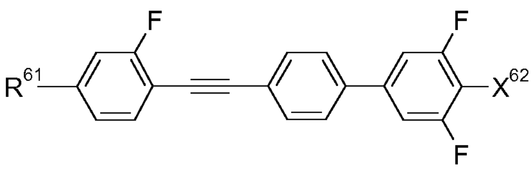

U-3c

wherein the occurring groups have the meaning indicated for formula U in claim 1.

**8.** Liquid-crystal medium according to one or more of claims 1 to 7, **characterised in that** it comprises one or more compounds of formula U as indicated in claim 1, wherein $X^{62}$ denotes -NCS.

**9.** Liquid crystal medium according to one or more of claims 1 to 8, **characterised in that** it additionally comprises one or more compounds of formula V

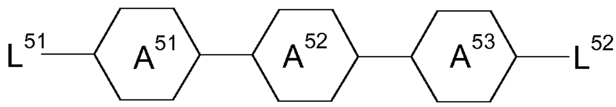

V

in which

$L^{51}$ denotes $R^{51}$ or $X^{51}$,
$L^{52}$ denotes $R^{52}$ or $X^{52}$,
$R^{51}$ and $R^{52}$, independently of one another, denote H, unfluorinated alkyl or unfluorinated alkoxy having 1 to 17 C atoms or unfluorinated alkenyl, unfluorinated alkenyloxy or unfluorinated alkoxyalkyl having 2 to 15 C atoms,
$X^{51}$ and $X^{52}$, independently of one another, denote H, F, Cl, -CN, -NCS, -$SF_5$, fluorinated alkyl or fluorinated alkoxy having 1 to 7 C atoms or fluorinated alkenyl, fluorinated alkenyloxy or fluorinated alkoxyalkyl having 2 to 7 C atoms, and

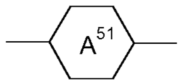 to 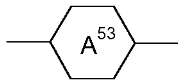,

independently of one another, denote

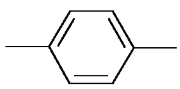, 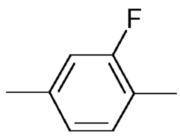, 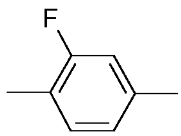,

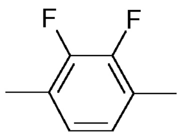, 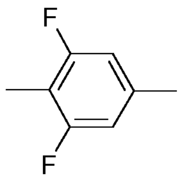, 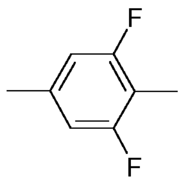

or

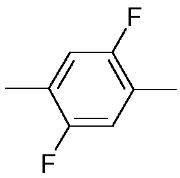.

**10.** Liquid crystal medium according to one or more of claims 1 to 9, **characterised in that** it additionally comprises one or more compounds of formula V, selected from the group of compounds of the sub-formulae V-2a to V2-g

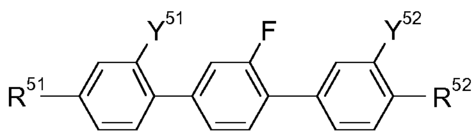

V-2a

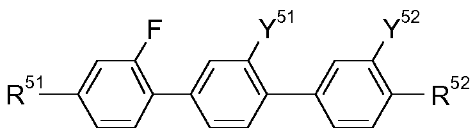

V-2b

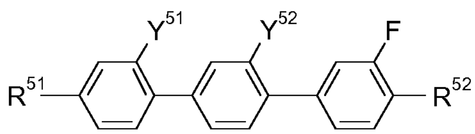

V-2c

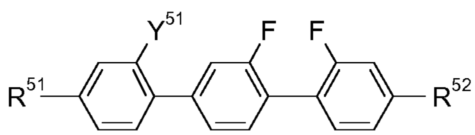

V-2d

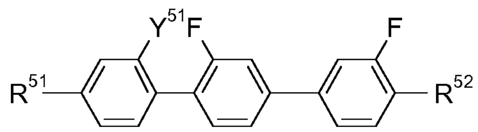

V-2e

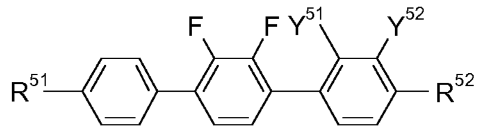

V-2f

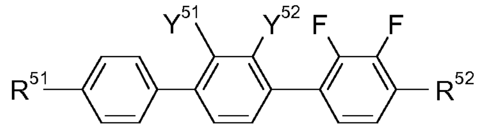

V-2g

where in each case the compounds of the formula V-2a are excluded from the compounds of the formulae V-2b and V-2c, the compounds of the formula V-2b are excluded from the compounds of the formula V-2c and the compounds of the formula V-2e are excluded from the compounds of the formula V-2f, and

$R^{51}$ denotes unfluorinated alkyl having 1 to 7 C atoms or unfluorinated alkenyl having 2 to 7 C atoms,
$R^{52}$ denotes unfluorinated alkyl having 1 to 7 C atoms or unfluorinated alkenyl having 2 to 7 C atoms or unfluorinated alkoxy having 1 to 7 C atoms,
$Y^{51}$ and $Y^{52}$, in each case independently from one another, denote H or F.

**11.** Process for the preparation of a liquid-crystal medium according to one or more of claims 1 to 10, **characterised in that** one or more compounds of formula Q and one or more compounds of formula T and/or U and/or I, as defined in claim 1, are mixed with one another and optionally with one or more further compounds and/or with one or more additives.

**12.** Use of a liquid-crystal medium according to one or more of claims 1 to 10 in a component for high-frequency technology.

**13.** Component for high-frequency technology, **characterised in that** it contains a liquid-crystal medium according to one or more of claims 1 to 10.

**14.** Microwave antenna array, **characterised in that** it comprises one or more components for high-frequency technology according to claim 13.

**15.** Compound of formula Q as indicated in claim 1, with the proviso that one or both of the radicals $L^2$ and $L^3$ denotes H.

## Patentansprüche

**1.** Flüssigkristallmedium, **dadurch gekennzeichnet, dass** es eine oder mehrere Verbindungen der Formel Q

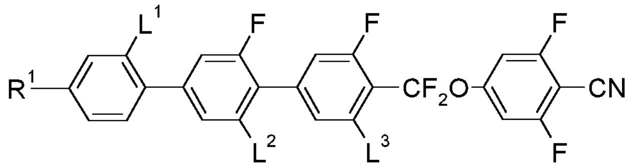

Q

und
eine oder mehrere Verbindungen, die ausgewählt sind aus der Gruppe der Verbindungen der Formeln T, U und I

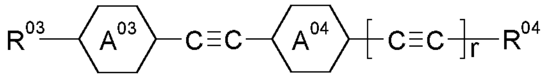

T

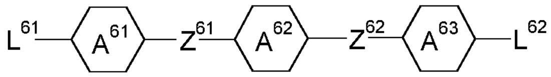

U

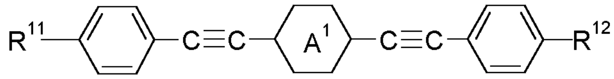

I

bei denen

$R^1$ Alkyl bedeutet, das geradkettig oder verzweigt ist, 1 bis 15 C-Atome aufweist, unsubstituiert oder ein- oder mehrfach durch F, Cl oder CN, vorzugsweise durch F substituiert ist und worin gegebenenfalls eine oder mehrere $CH_2$-Gruppen jeweils unabhängig voneinander so durch -O-, -S-, $-CR^{01}R^{02}-$, $-SiR^{01}R^{02}-$, -CO-, -COO-, -OCO-, -OCO-O-, -S-CO-, -CO-S-, $-CY^{01}=CY^{02}-$ oder -C≡C- ersetzt sind, dass O- und/oder S-Atome nicht direkt miteinander verknüpft sind;

$Y^{01}$ und $Y^{02}$ unabhängig voneinander F, Cl oder CN sind und einer von ihnen alternativ H sein kann,

$R^{01}$ und $R^{02}$ unabhängig voneinander H oder Alkyl mit 1 bis 12 C-Atomen sind,

$L^1$, $L^2$ und $L^3$ jeweils unabhängig voneinander H oder F bedeuten;

$R^{03}$ und $R^{04}$ unabhängig voneinander die vorstehend für $R^1$ gegebene Bedeutung besitzen,

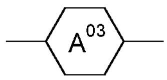

und

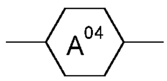

unabhängig voneinander

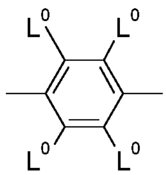 , 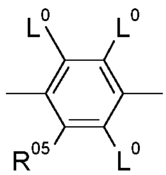 , 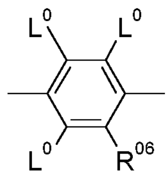 ,

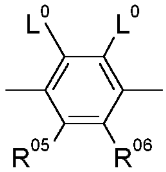 , 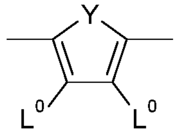 , 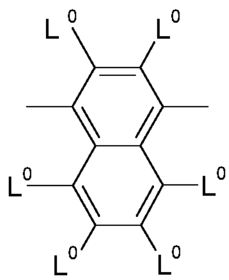 ,

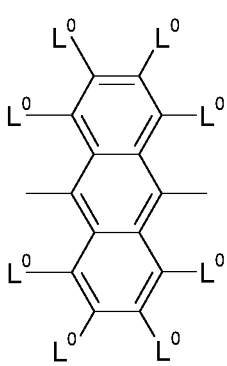, 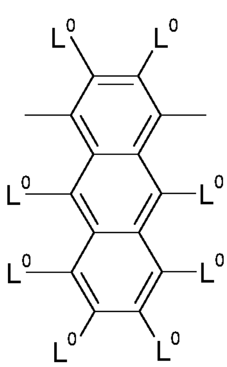, 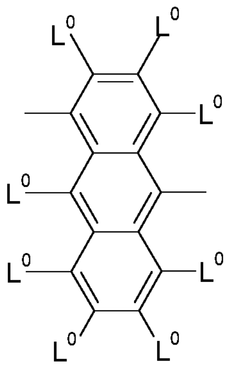,

oder

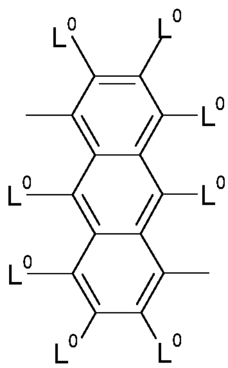

bedeuten,

bei denen Y S oder O bedeutet,
und bei denen in den 1,4-Phenylengruppen eine oder mehrere C-H-Gruppen durch N ersetzt sein können und

$L^0$ bei jedem Auftreten, unabhängig voneinander, H, Br, Cl, F, -CN, -NCS, -SCN, $SF_5$, $C_1$-$C_{10}$-Alkyl, $C_1$-$C_{10}$-Alkoxy, $C_3$-$C_6$-Cycloalkyl oder eine mono- oder polyfluorierte $C_1$-$C_{10}$-Alkyl- oder -Alkoxygruppe bedeutet,
$R^{05}$ und $R^{06}$ jeweils unabhängig voneinander einen halogenierten oder unsubstituierten Alkylrest mit 1 bis 6 C-Atomen bedeuten, wobei eine oder mehrere $CH_2$-Gruppen in diesen Resten jeweils unabhängig voneinander so durch -C≡C-, -CH=CH-, -CF=CF-, -CF=CH-, -CH=CF-, -(CO)O-, -O(CO)-, -(CO)-, -O- oder -S- ersetzt sein können, dass O- oder S-Atome nicht direkt miteinander verknüpft sind,
r 0 oder 1 ist;
$L^{61}$ $R^{61}$ bedeutet und, wenn $Z^{61}$ und/oder $Z^{62}$ *trans*-CH=CH- oder *trans*-CF=CF- bedeuten, alternativ auch $X^{61}$ bedeutet,
$L^{62}$ $R^{62}$ bedeutet und, wenn $Z^{61}$ und/oder $Z^{62}$ *trans*-CH=CH- oder *trans*-CF=CF- bedeuten, alternativ auch $X^{62}$ bedeutet;
$R^{61}$ und $R^{62}$ unabhängig voneinander H, unfluoriertes Alkyl oder unfluoriertes Alkoxy mit 1 bis 17 C-Atomen oder unfluoriertes Alkenyl, unfluoriertes Alkenyloxy oder unfluoriertes Alkoxyalkyl mit 2 bis 15 C-Atomen bedeuten,
$X^{61}$ und $X^{62}$ unabhängig voneinander F oder Cl, -CN, -NCS, $-SF_5$, fluoriertes Alkyl oder Alkoxy mit 1 bis 7 C-Atomen oder fluoriertes Alkenyl, Alkenyloxy oder Alkoxyalkyl mit 2 bis 7 C-Atomen bedeuten,
einer von $Z^{61}$ und $Z^{62}$ *trans*-CH=CH-, *trans*-CF=CF- oder -C=C- bedeutet und der andere *trans*-CH=CH-, *trans*-CF=CF- oder eine Einfachbindung bedeutet und

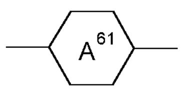

bis

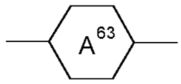

unabhängig voneinander

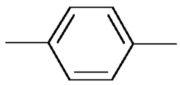
,
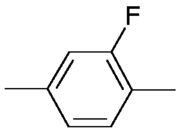
,
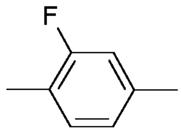
,

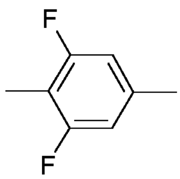
,
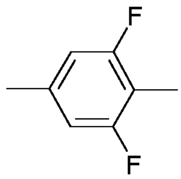
,
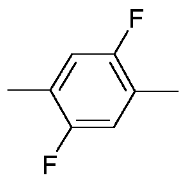
,

oder

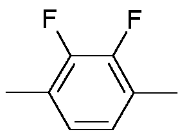

bedeuten,

$R^{11}$ bis $R^{12}$ unabhängig voneinander unfluoriertes Alkyl oder unfluoriertes Alkoxy, jeweils mit 1 bis 15 C-Atomen, unfluoriertes Alkenyl, unfluoriertes Alkenyloxy oder unfluoriertes Alkoxyalkyl, jeweils mit 2 bis 15 C-Atomen, oder Cycloalkyl, Alkylcycloalkyl, Cycloalkenyl, Alkylcycloalkenyl, Alkylcycloalkylalkyl oder Alkylcycloalkenylalkyl, jeweils mit bis zu 15 C-Atomen, bedeuten;

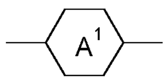
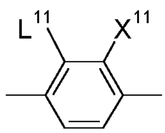
,
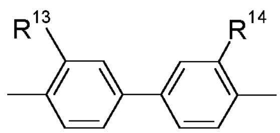
,

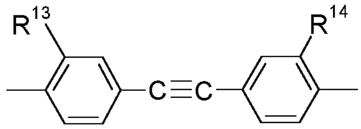

oder

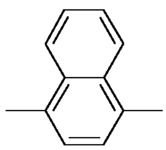

bedeutet,

$L^{11}$ H, Alkyl mit 1 bis 6 C-Atomen, Cycloalkyl mit 3 bis 6 C-Atomen oder Cycloalkenyl mit 4 bis 6 C-Atomen bedeutet,

$X^{11}$ H, Alkyl mit 1 bis 3 C-Atomen oder Halogen bedeutet,

$R^{13}$ und $R^{14}$ unabhängig voneinander die für $R^{11}$ und $R^{12}$ gegebene Bedeutung besitzen und alternativ einer von $R^{13}$ und $R^{14}$ oder beide auch H bedeuten

enthält.

2. Flüssigkristallmedium nach Anspruch 1, **dadurch gekennzeichnet, dass** es eine oder mehrere Verbindungen enthält, die ausgewählt sind aus der Gruppe der Verbindungen der Formeln Q-1 bis Q-5

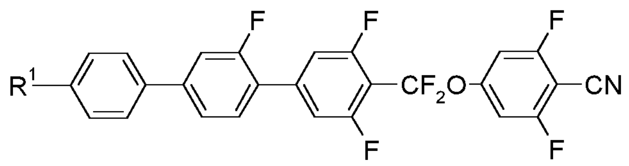
Q-1

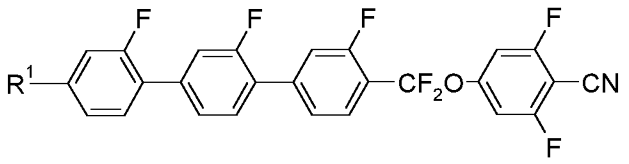
Q-2

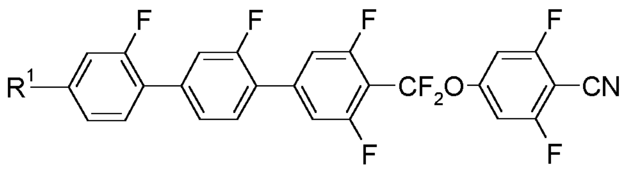
Q-3

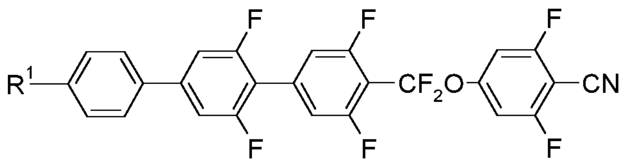
Q-4

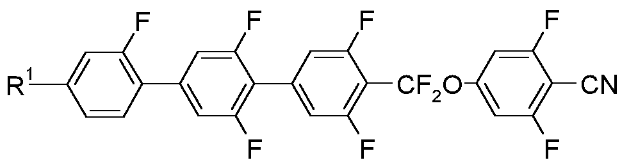
Q-5

bei denen $R^1$ die in Anspruch 1 angegebene Bedeutung besitzt.

3. Flüssigkristallmedium nach Anspruch 1 oder 2, **dadurch gekennzeichnet, dass** es eine oder mehrere Verbindungen der Formel T enthält.

4. Flüssigkristallmedium nach einem oder mehreren der Ansprüche 1 bis 3, **dadurch gekennzeichnet, dass** es eine oder mehrere Verbindungen der Formel U enthält.

5. Flüssigkristallmedium nach einem oder mehreren der Ansprüche 1 bis 4, **dadurch gekennzeichnet, dass** es eine oder mehrere Verbindungen der Formel I enthält.

6. Flüssigkristallmedium nach einem oder mehreren der Ansprüche 1 bis 5, **dadurch gekennzeichnet, dass** eine oder mehrere Verbindungen der Formel T ausgewählt sind aus der Gruppe der Verbindungen der Unterformeln T-1 bis T-7

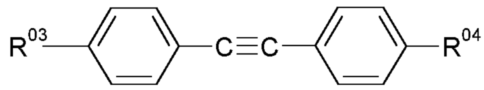
T-1

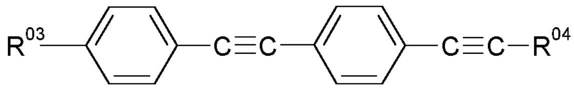
T-2

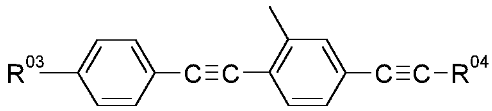
T-3

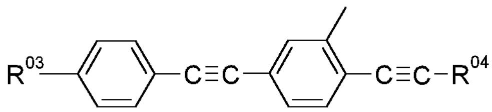
T-4

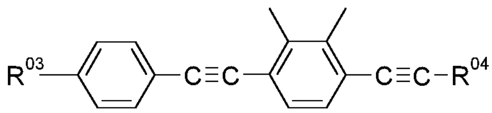
T-5

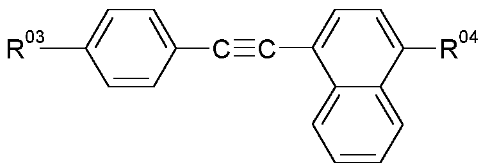
T-6

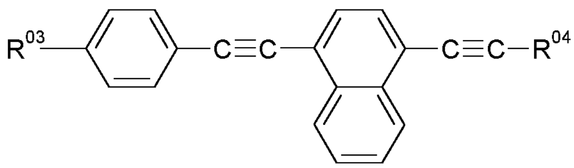
T-7

bei denen $R^{03}$ und $R^{04}$ die in Anspruch 1 angegebene Bedeutung besitzen.

**7.** Flüssigkristallmedium nach einem oder mehreren der Ansprüche 1 bis 6, **dadurch gekennzeichnet, dass** eine oder mehrere Verbindungen der Formel U ausgewählt sind aus der Gruppe der Verbindungen der Formeln

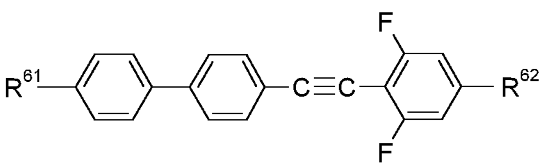
U-1a

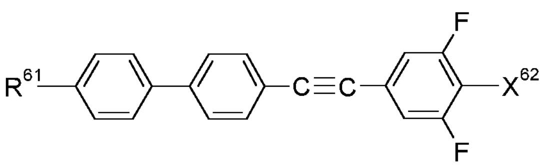
U-2b

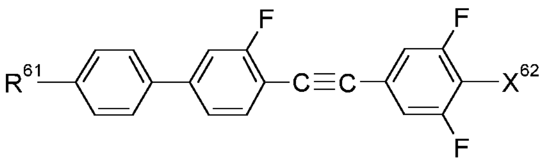

U-2c

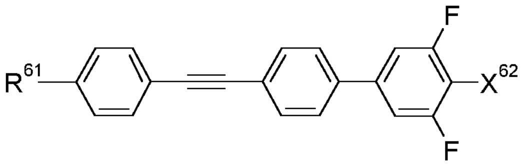

U-3b

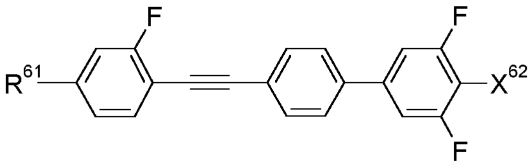

U-3c

bei denen die auftretenden Gruppen die in Anspruch 1 für Formel U angegebene Bedeutung besitzen.

**8.** Flüssigkristallmedium nach einem oder mehreren der Ansprüche 1 bis 7, **dadurch gekennzeichnet, dass** es eine oder mehrere Verbindungen der Formel U wie in Anspruch 1 angegeben enthält, bei der $X^{62}$-NCS bedeutet.

**9.** Flüssigkristallmedium nach einem oder mehreren der Ansprüche 1 bis 8, **dadurch gekennzeichnet, dass** es zusätzlich eine oder mehrere Verbindungen der Formel V

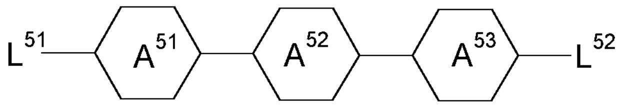

V

enthält, worin

$L^{51}$ $R^{51}$ oder $X^{51}$ bedeutet,
$L^{52}$ $R^{52}$ oder $X^{52}$ bedeutet,
$R^{51}$ und $R^{52}$ unabhängig voneinander H, unfluoriertes Alkyl oder unfluoriertes Alkoxy mit 1 bis 17 C-Atomen oder unfluoriertes Alkenyl, unfluoriertes Alkenyloxy oder unfluoriertes Alkoxyalkyl mit 2 bis 15 C-Atomen bedeuten,
$X^{51}$ und $X^{52}$ unabhängig voneinander H, F, Cl, -CN, -NCS, -$SF_5$, fluoriertes Alkyl oder fluoriertes Alkoxy mit 1 bis 7 C-Atomen oder fluoriertes Alkenyl, fluoriertes Alkenyloxy oder fluoriertes Alkoxyalkyl mit 2 bis 7 C-Atomen bedeuten und

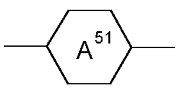 bis 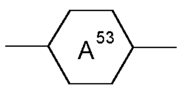

unabhängig voneinander

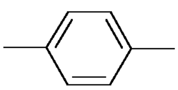 , 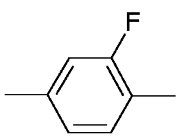 , 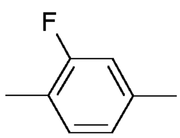 ,

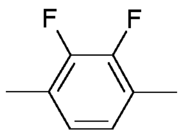 , 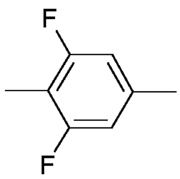 , 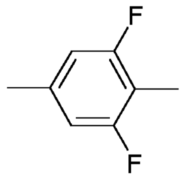 ,

oder

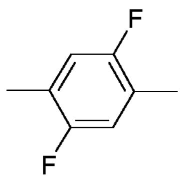

bedeuten.

**10.** Flüssigkristallmedium nach einem oder mehreren der Ansprüche 1 bis 9, **dadurch gekennzeichnet, dass** es zusätzlich eine oder mehrere Verbindungen der Formel V enthält, die ausgewählt sind aus der Gruppe der Verbindungen der Unterformeln V-2a bis V2-g

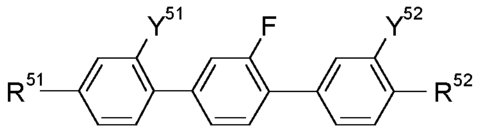 V-2a

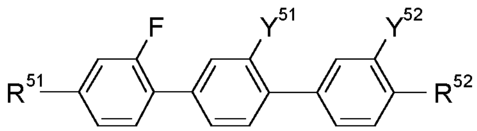 V-2b

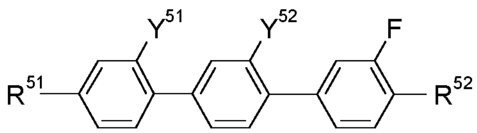 V-2c

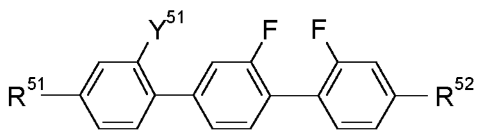 V-2d

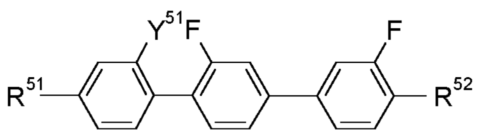 V-2e

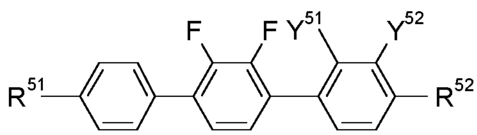 V-2f

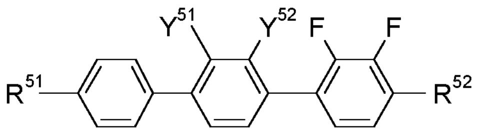

V-2g

wo jeweils die Verbindungen der Formel V-2a von den Verbindungen der Formeln V-2b und V-2c ausgenommen sind, die Verbindungen der Formel V-2b von den Verbindungen der Formel V-2c ausgenommen sind und die Verbindungen der Formel V-2e von den Verbindungen der Formel V-2f ausgenommen sind und

$R^{51}$ unfluoriertes Alkyl mit 1 bis 7 C-Atomen oder unfluoriertes Alkenyl mit 2 bis 7 C-Atomen bedeutet,
$R^{52}$ unfluoriertes Alkyl mit 1 bis 7 C-Atomen oder unfluoriertes Alkenyl mit 2 bis 7 C-Atomen oder unfluoriertes Alkoxy mit 1 bis 7 C-Atomen bedeutet,
$Y^{51}$ und $Y^{52}$ jeweils unabhängig voneinander H oder F bedeuten.

**11.** Verfahren zur Herstellung eines Flüssigkristallmediums nach einem oder mehreren der Ansprüche 1 bis 10, **dadurch gekennzeichnet, dass** man eine oder mehrere Verbindungen der Formel Q und eine oder mehrere Verbindungen der Formel T und/oder U und/oder I, wie in Anspruch 1 definiert, miteinander und gegebenenfalls mit einer oder mehreren weiteren Verbindungen und/oder mit einem oder mehreren Zusatzstoffen mischt.

**12.** Verwendung eines Flüssigkristallmediums nach einem oder mehreren der Ansprüche 1 bis 10 in einer Komponente für die Hochfrequenztechnologie.

**13.** Komponente für die Hochfrequenztechnologie, **dadurch gekennzeichnet, dass** sie ein Flüssigkristallmedium nach einem oder mehreren der Ansprüche 1 bis 10 enthält.

**14.** Mikrowellenantennenanordnung, **dadurch gekennzeichnet, dass** sie eine oder mehrere Komponenten für die Hochfrequenztechnologie nach Anspruch 13 enthält.

**15.** Verbindung der Formel Q wie in Anspruch 1 angegeben, mit der Maßgabe, dass einer oder beide der Reste $L^2$ und $L^3$ H bedeuten.

## Revendications

**1.** Milieu cristallin liquide, **caractérisé en ce qu'**il comprend un ou plusieurs composé(s) de la formule Q

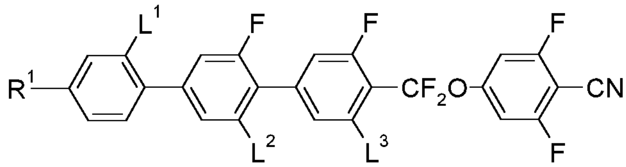

Q

et
un ou plusieurs composé(s) qui est/sont sélectionné(s) parmi le groupe de composés des formules T, U et I

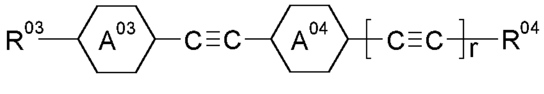

T

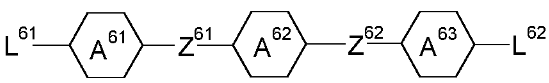

U

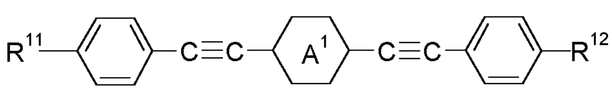

I

dans lesquelles

$R^1$ représente alkyle, lequel est en chaîne droite ou ramifié et comporte de 1 à 15 atome(s) de C, est non substitué, mono- ou polysubstitué par F, Cl ou CN, de préférence par F, et où un ou plusieurs groupe(s) $CH_2$ est/sont en option remplacé(s), dans chaque cas de manière indépendante les uns des autres, par -O-, -S-, $-CR^{01}R^{02}-$, $-SiR^{01}R^{02}-$, -CO-, -COO-, -OCO-, -OCO-O-, -S-CO-, -CO-S-, $-CY^{01}=CY^{02}-$ ou -C≡C- de telle sorte que des atomes de O et/ou de S ne soient pas liés directement les uns aux autres ;
$Y^{01}$ et $Y^{02}$ sont, de manière indépendante l'un de l'autre, F, Cl ou CN, et à titre d'alternative, l'un d'eux peut être H,
$R^{01}$ et $R^{02}$ sont, de manière indépendante l'un de l'autre, H ou alkyle qui comporte de 1 à 12 atome(s) de C,
$L^1$, $L^2$ représentent chacun, de manière indépendante les uns
et $L^3$ des autres, H ou F ;
$R^{03}$ et $R^{04}$ présentent, de manière indépendante l'un de l'autre, la signification qui a été donnée pour $R^1$ ci-avant,

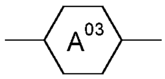

et

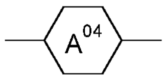

représentent, de manière indépendante l'un de l'autre

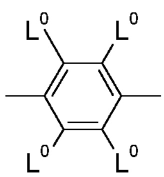 , 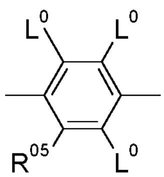 , 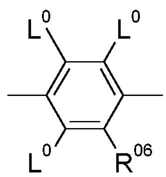 ,

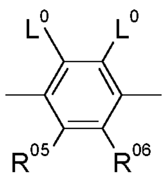 , 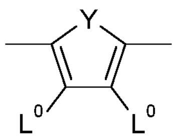 , 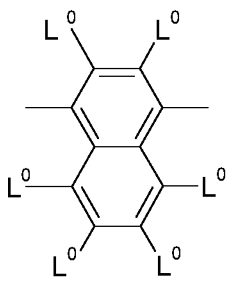 ,

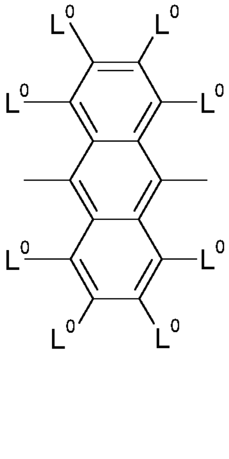 , 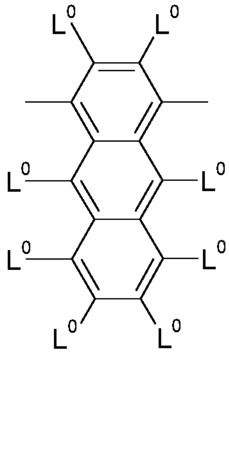 , 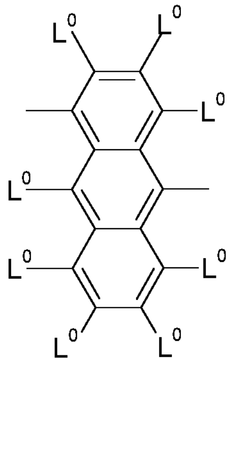

ou

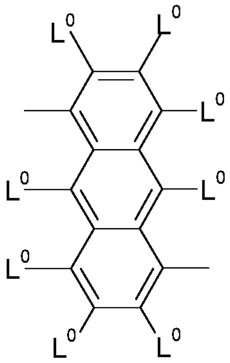

,

où Y représente S ou O, et dans lequel, dans les groupes 1,4-phénylène, un ou plusieurs groupe(s) C-H peut/peuvent être remplacé(s) par N, et

$L^0$ représente pour chaque occurrence, de manière indépendante des autres, H, Br, Cl, F, -CN, -NCS, -SCN, $SF_5$, $C_1$-$C_{10}$ alkyle, $C_1$-$C_{10}$ alcoxy, $C_3$-$C_6$ cycloalkyle ou un groupe $C_1$-$C_{10}$ alkyle or alcoxy mono- ou polyfluoré,

$R^{05}$ et $R^{06}$ représentent chacun, de manière indépendante l'un de l'autre, un radical alkyle halogéné ou non substitué qui comporte de 1 à 6 atome(s) de C, où un ou plusieurs groupe(s) $CH_2$ dans ces radicaux peut/peuvent chacun être remplacé(s), de manière indépendante les uns des autres, par -C≡C-, -CH=CH-, -CF=CF-, -CF=CH-, -CH=CF-, -(CO)O-, -O(CO), -(CO)-, -O- ou -S- de telle sorte que des atomes de O ou de S ne soient pas liés directement les uns aux autres,

r est 0 ou 1 ;

$L^{61}$ représente $R^{61}$ et, dans le cas où $Z^{61}$ et/ou $Z^{62}$ représente(nt) *trans*-CH=CH- ou *trans*-CF=CF-, il représente également à titre d'alternative $X^{61}$,

$L^{62}$ représente $R^{62}$ et, dans le cas où $Z^{61}$ et/ou $Z^{62}$ représente(nt) *trans*-CH=CH- ou *trans*-CF=CF-, il représente également à titre d'alternative $X^{62}$;

$R^{61}$ et $R^{62}$ représentent, de manière indépendante l'un de l'autre, H, alkyle non fluoré ou alcoxy non fluoré qui comporte de 1 à 17 atome(s) de C ou alkényle non fluoré, alkényloxy non fluoré ou alcoxyalkyle non fluoré qui comporte de 2 à 15 atomes de C,

$X^{61}$ et $X^{62}$ représentent, de manière indépendante l'un de l'autre, F ou Cl, -CN, -NCS, $-SF_5$, alkyle ou alcoxy fluoré qui comporte de 1 à 7 atome(s) de C ou alkényle fluoré, alkényloxy ou alcoxyalkyle qui comporte de 2 à 7 atomes de C,

l'un de $Z^{61}$ et $Z^{62}$ représente *trans*-CH=CH-, *trans*-CF=CF- ou -C=C- et l'autre représente *trans*-CH=CH-, *trans*-CF=CF- ou une liaison simple,

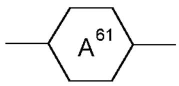

à

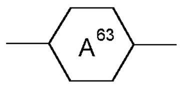

,

représentent, de manière indépendante les uns des autres,

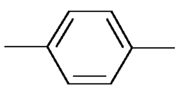

,

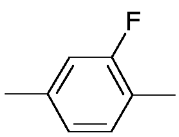

,

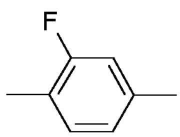

,

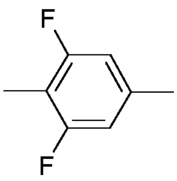,
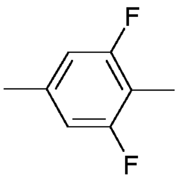,
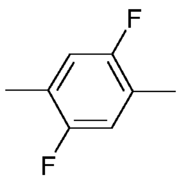,

ou

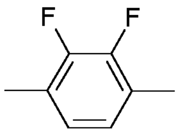.

$R^{11}$ et $R^{12}$ représentent, de manière indépendante l'un de l'autre, alkyle non fluoré ou alcoxy non fluoré dont chacun comporte de 1 à 15 atome(s) de C, alkényle non fluoré, alkényloxy non fluoré ou alcoxyalkyle non fluoré dont chacun comporte de 2 à 15 atomes de C, ou cycloalkyle, alkylcycloalkyle, cycloalkényle, alkylcycloalkényle, alkylcycloalkylalkyle ou alkylcycloalkénylalkyle dont chacun comporte jusqu'à 15 atomes de C ;

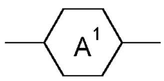

représente

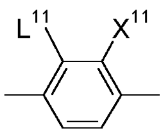,
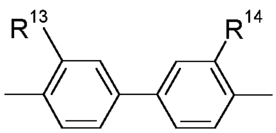,

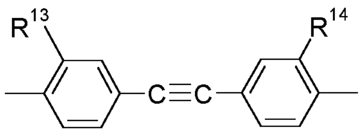
ou
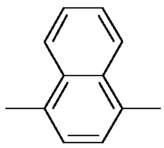,

$L^{11}$ représente H, alkyle qui comporte de 1 à 6 atome(s) de C, cycloalkyle qui comporte de 3 à 6 atomes de C ou cycloalkényle qui comporte de 4 à 6 atomes de C,
$X^{11}$ représente H, alkyle qui comporte de 1 à 3 atome(s) de C ou halogène,
$R^{13}$ et $R^{14}$ présentent, de manière indépendante l'un de l'autre, la signification qui a été donnée pour $R^{11}$ et $R^{12}$, et à titre d'alternative, l'un de $R^{13}$ et $R^{14}$ ou les deux représente(nt) également H.

2. Milieu cristallin liquide selon la revendication 1, **caractérisé en ce qu'**il comprend un ou plusieurs composé(s) qui est/sont sélectionné(s) parmi le groupe de composés des formules Q-1 à Q-5

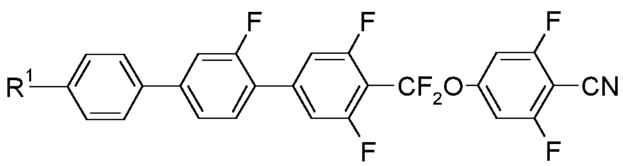
Q-1

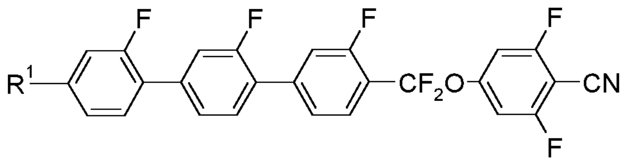
Q-2

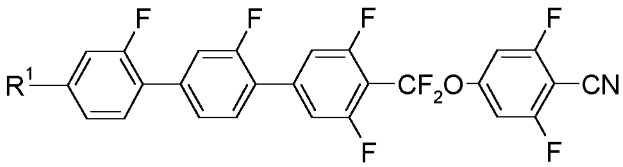
Q-3

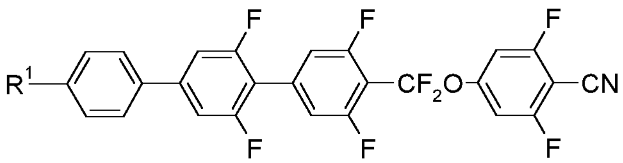
Q-4

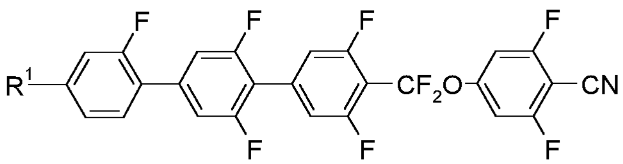
Q-5

dans lesquelles $R^1$ présente la signification qui a été indiquée selon la revendication 1.

**3.** Milieu cristallin liquide selon la revendication 1 ou 2, **caractérisé en ce qu'**il comprend un ou plusieurs composé(s) de la formule T.

**4.** Milieu cristallin liquide selon une ou plusieurs des revendications 1 à 3, **caractérisé en ce qu'**il comprend un ou plusieurs composé(s) de la formule U.

**5.** Milieu cristallin liquide selon une ou plusieurs des revendications 1 à 4, **caractérisé en ce qu'**il comprend un ou plusieurs composé(s) de la formule I.

**6.** Milieu cristallin liquide selon une ou plusieurs des revendications 1 à 5, **caractérisé en ce qu'**un ou plusieurs composé(s) de la formule T est/sont sélectionné(s) parmi le groupe de composés des sous-formules T-1 à T-7

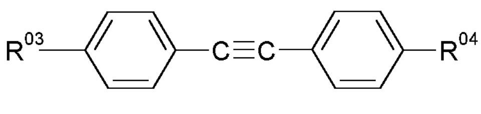
T-1

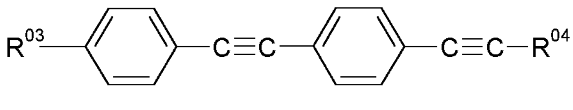
T-2

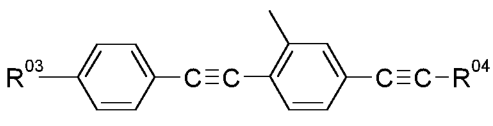
T-3

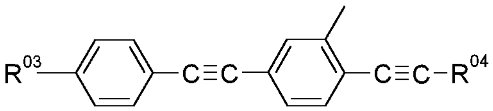

T-4

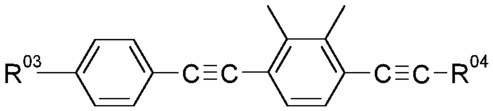

T-5

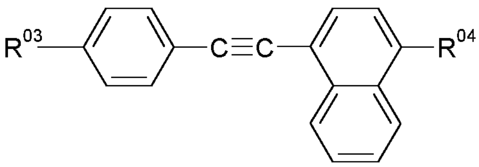

T-6

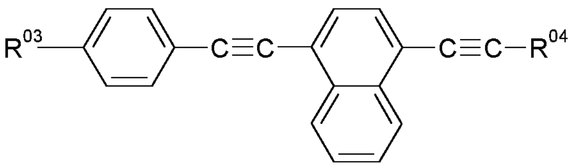

T-7

dans lesquelles $R^{03}$ et $R^{04}$ présentent la signification qui a été indiquée selon la revendication 1.

7. Milieu cristallin liquide selon une ou plusieurs des revendications 1 à 6, **caractérisé en ce qu'**un ou plusieurs composé(s) de la formule U est/sont sélectionné(s) parmi le groupe de composés des formules

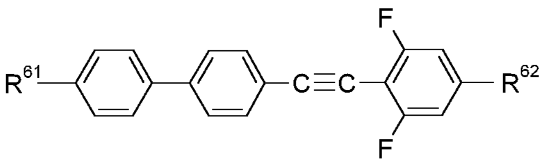

U-1a

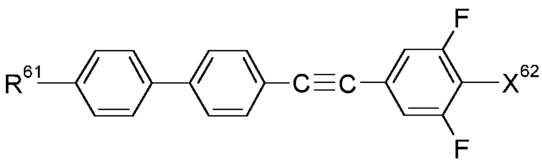

U-2b

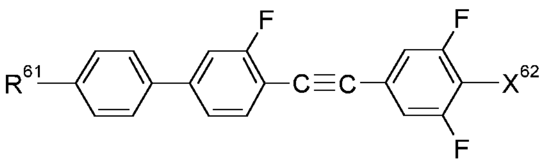

U-2c

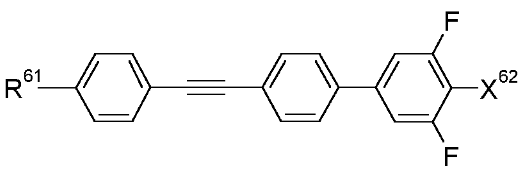

U-3b

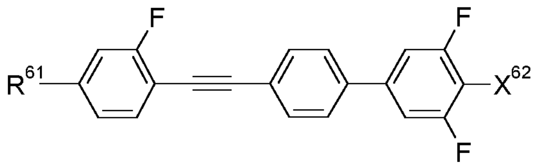

U-3c

dans lesquelles les groupes rencontrés présentent la signification qui a été indiquée pour la formule U selon la revendication 1.

**8.** Milieu cristallin liquide selon une ou plusieurs des revendications 1 à 7, **caractérisé en ce qu'**il comprend un ou plusieurs composé(s) de la formule U comme il a été indiqué selon la revendication 1, dans laquelle $X^{62}$ représente -NCS.

**9.** Milieu cristallin liquide selon une ou plusieurs des revendications 1 à 8, **caractérisé en ce qu'**il comprend de façon additionnelle un ou plusieurs composé(s) de la formule V

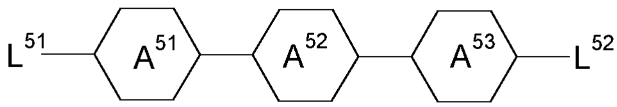

V

dans laquelle

$L^{51}$ représente $R^{51}$ ou $X^{51}$,
$L^{52}$ représente $R^{52}$ ou $X^{52}$,
$R^{51}$ et $R^{52}$ représentent, de manière indépendante l'un de l'autre, H, alkyle non fluoré ou alcoxy non fluoré qui comporte de 1 à 17 atome(s) de C ou alkényle non fluoré, alkényloxy non fluoré ou alcoxyalkyle non fluoré qui comporte de 2 à 15 atomes de C,
$X^{51}$ et $X^{52}$ représentent, de manière indépendante l'un de l'autre, H, F, Cl, -CN, -NCS, -$SF_5$, alkyle fluoré ou alcoxy fluoré qui comporte de 1 à 7 atome(s) de C ou alkényle fluoré, alkényloxy fluoré ou alcoxyalkyle fluoré qui comporte de 2 à 7 atomes de C, et

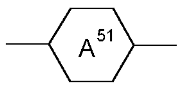 à 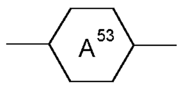 ,

représentent, de manière indépendante les uns des autres

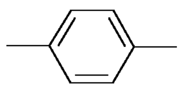 , 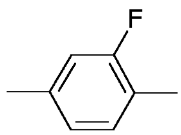 , 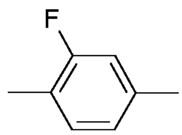 ,

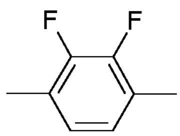 , 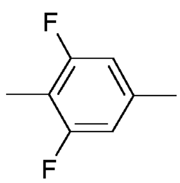 , 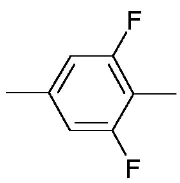

ou

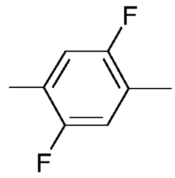

.

**10.** Milieu cristallin liquide selon une ou plusieurs des revendications 1 à 9, **caractérisé en ce qu'**il comprend de façon additionnelle un ou plusieurs composé(s) de la formule V, qui est/sont sélectionné(s) parmi le groupe de composés des sous-formules V-2a à V-2g

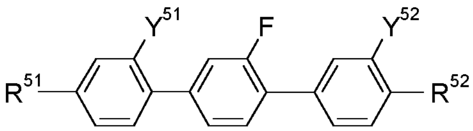

V-2a

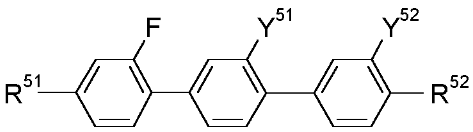

V-2b

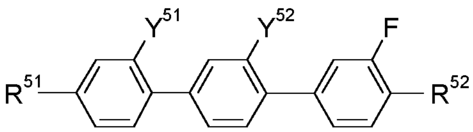

V-2c

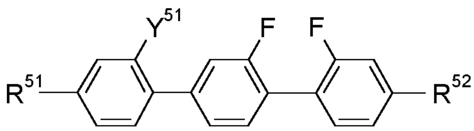

V-2d

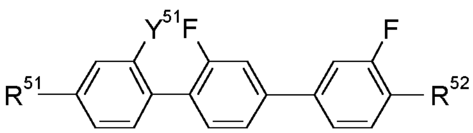

V-2e

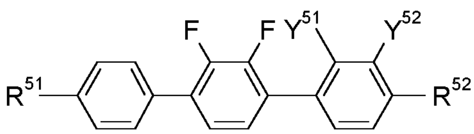

V-2f

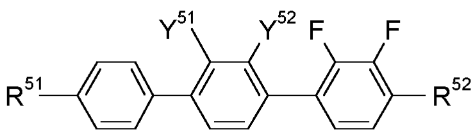

V-2g

dans lesquelles, dans chaque cas, les composés de la formule V-2a sont exclus des composés des formules V-2b et V-2c, les composés de la formule V-2b sont exclus des composés de la formule V-2c et les composés de la formule V-2e sont exclus des composés de la formule V-2f, et

$R^{51}$ représente alkyle non fluoré qui comporte de 1 à 7 atome(s) de C ou alkényle non fluoré qui comporte de

2 à 7 atomes de C,
$R^{52}$ représente alkyle non fluoré qui comporte de 1 à 7 atome(s) de C ou alkényle non fluoré qui comporte de 2 à 7 atomes de C ou alcoxy non fluoré qui comporte de 1 à 7 atome(s) de C,
$Y^{51}$ et $Y^{52}$ représentent, dans chaque cas de manière indépendante l'un de l'autre, H ou F.

**11.** Procédé pour la préparation d'un milieu cristallin liquide selon une ou plusieurs des revendications 1 à 10, **caractérisé en ce qu'**un ou plusieurs composé(s) de la formule Q et un ou plusieurs composé(s) de la formule T et/ou U et/ou I, comme il a été défini selon la revendication 1, sont mélangés l'un avec l'autre ou les uns avec les autres et en option, avec un ou plusieurs autre(s) composé(s) et/ou avec un ou plusieurs additif(s).

**12.** Utilisation d'un milieu cristallin liquide selon une ou plusieurs des revendications 1 à 10 dans un composant pour la technologie des hautes fréquences.

**13.** Composant pour la technologie des hautes fréquences, **caractérisé en ce qu'**il contient un milieu cristallin liquide selon une ou plusieurs des revendications 1 à 10.

**14.** Réseau d'antennes hyperfréquences, **caractérisé en ce qu'**il comprend un ou plusieurs composant(s) pour la technologie des hautes fréquences selon la revendication 13.

**15.** Composé de la formule Q comme indiqué selon la revendication 1, étant entendu que l'un des radicaux $L^2$ et $L^3$ ou les deux représente(nt) H.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2010058681 A1
- WO 2013017197 A1
- DE 102004029429 A
- JP 2005120208 A
- WO 2015024635 A1
- DE 102010045370
- DE 102010051508
- WO 2013034227 A1
- EP 1900792 A1


### Non-patent literature cited in the description


- **WU, S.-T. ; HSU, C.-S. ; SHYU, K.-F.** *Appl. Phys. Lett.,* 1999, vol. 74 (3), 344-346
- **HSU, C. S. ; SHYU, K. F. ; CHUANG, Y. Y. ; WU, S.-T.** *Liq. Cryst.,* 2000, vol. 27 (2), 283-287
- **DABROWSKI, R. ; KULA, P. ; GAUZA, S. ; DZIADISZEK, J. ; URBAN, S. ; WU, S.-T.** *IDRC,* 2008, vol. 08, 35-38
- **GAEBLER, A. ; MOESSINGER, A. ; GOELDEN, F. et al.** Liquid Crystal-Reconfigurable Antenna Concepts for Space Applications at Microwave and Millimeter Waves. *International Journal of Antennas and Propagation,* 2009, vol. 2009, 1-7
- **PENIRSCHKE, A. ; MÜLLER, S. ; SCHEELE, P. ; WEIL, C. ; WITTEK, M. ; HOCK, C. ; JAKOBY, R.** Cavity Perturbation Method for Characterisation of Liquid Crystals up to 35 GHz. *34th European Microwave Conference - Amsterdam,* 545-548
- Direct Simulation of Material Permittivites using an Eigen-Susceptibility Formulation of the Vector Variational Approach. **A. GAEBLER ; F. GOELDEN ; S. MÜLLER ; A. PENIRSCHKE ; R. JAKOBY.** 12MTC 2009 - International Instrumentation and Measurement Technology Conference. IEEE, 2009, 463-467
- Liquid Crystal Based Microwave Components with Fast Response Times: Materials, Technology, Power Handling Capability. **F. GOLDEN.** Dissertation. Technische Universität Darmstadt, 2009, vol. D17
- Single compounds and mixtures for microwave applications, Dielectric, microwave studies on selected systems. **A. LAPANIK.** Dissertation. Technische Universität Darmstadt, 2009, vol. D17
- **A. LAPANIK ; F. GOLDEN ; S. MÜLLER ; A. PENIRSCHKE ; R. JAKOBY ; W. HAASE.** Nematic LC mixtures with high birefringence in microwave region. *Frequenz,* 2011, vol. 65, 15-19
- Merck Liquid Crystals, Physical Properties of Liquid Crystals. Status. Merck KGaA, November 1997
- **A. PENIRSCHKE et al.** Cavity Perturbation Method for Characterisation of Liquid Crystals up to 35GHz. *34th European Microwave Conference - Amsterdam,* 545-548
- Direct Simulation of Material Permittivites ... **A. GAEBLER et al.** 12MTC 2009 - International Instrumentation and Measurement Technology Conference. IEEE, 2009, 463-467
- **A. PENIRSCHKE et al.** Cavity Perturbation Method for Characterisation of Liquid Crystals up to 35GHz. *34th European Microwave Conference,* 545-548
- **HOUBEN-WEYL.** Methoden der organischen Chemie [Methods of Organic Chemistry. Thieme Verlag